# EUROPEAN PATENT APPLICATION

(11) **EP 4 556 781 A1**
(43) Date of publication of application: **21.05.2025**
(21) Application number: 23839707.9
(22) Date of filing: 14.07.2023
(51) Int. Cl.: F17C 11/00, C01B 3/00, H01M 4/86, H01M 12/08, H01M 50/414, H01M 50/46

(54) **HYDROGEN CARRIER HAVING FLUIDITY, METHOD FOR PRODUCING HYDROGEN CARRIER HAVING FLUIDITY, CHARGE/DISCHARGE CELL, SECONDARY BATTERY, HYDROGEN FILLING DEVICE, POWER GENERATING DEVICE, HYDROGEN FILLING/POWER GENERATING DEVICE, HYDROGEN FILLING SYSTEM, POWER GENERATING SYSTEM, HYDROGEN FILLING/POWER GENERATING SYSTEM, AND ENERGY TRANSPORT METHOD**

(30) Priority: 15.07.2022 JP 2022113682
(71) Applicant: Arm Technologies Co., Ltd., Sagamihara-shi, Kanagawa 252-0131 (JP)
(72) Inventor: ARAKI Noritoshi, Sagamihara-shi Kanagawa 252-0131 (JP); KITA Kojiro, Sagamihara-shi Kanagawa 252-0131 (JP); KITA Emi, Sagamihara-shi Kanagawa 252-0131 (JP); ARAKI Kaori, Sagamihara-shi Kanagawa 252-0131 (JP)
(74) Representative: Hasegawa, Kan
(86) International application number: PCT/JP2023/026097
(87) International publication number: WO 2024/014538

(57) **Abstract**

The fluid hydrogen carrier of this invention contains a hydrogen storage alloy and an alkaline electrolyte.

## Description

### Technical Field

The present invention relates to a fluid hydrogen carrier, a method for manufacturing a fluid hydrogen carrier, a charge-discharge cell, a secondary battery, a hydrogen filling device, a power generation device, a hydrogen filling and power generation device, a hydrogen filling system, a power generation system, a hydrogen filling and power generation system and energy transport method.

### Background Art

In recent years, the introduction of power generation using renewable energy has been actively promoted from the perspective of environmental issues. When transporting electricity generated by power generation equipment such as solar panels and wind turbines, there are costs involved in building and maintaining the necessary infrastructure for power transmission, as well as transmission losses. Therefore, an energy management method that converts renewable energy into hydrogen and transports the converted hydrogen to batteries for power generation is being considered.

For example, Patent Document 1 (JP2018162851A) proposes a method of transporting hydrogen by compressing it at high pressure. The method in Patent Document 1 can reduce the volume by compressing it at high pressure, and it can also be filled into the high-pressure tank of a fuel cell vehicle, etc., at that pressure, so it can transport large quantities of hydrogen.

Patent Document 2 (JP7055667B) proposes a method for transporting liquefied hydrogen. In the method of Patent Document 2, fluid hydrogen is highly dense and has no shape, so it can be easily transported in large quantities with a high filling rate in containers.

Non-patent document 1 ( "NEDO Hydrogen Energy White Paper", New Energy and Industrial Technology Development Organization, February 2015, p. 119) proposes a method for extracting hydrogen using an organic hydride method. The organic hydride method is a technology that extracts hydrogen by, for example, reacting toluene with hydrogen to produce methylcyclohexane, transporting methylcyclohexane in tankers, and then dehydrogenating it to return it to toluene. The method described in Non-patent Document 1 allows hydrogen to be transported as a liquid. fluid hydrogen is highly dense and has no shape, so it can be packed into containers at a high rate, allowing it to be transported in large quantities efficiently.

Patent Document 3 (JPS63125897A) proposes a method for transporting hydrogen by storing it in a tank containing a hydrogen storage alloy. The method in Patent Document 3 makes it possible to transport large quantities of hydrogen by storing it in a hydrogen storage alloy at a lower pressure than that of the high-pressure tank method, thereby achieving a higher density of hydrogen.

### Prior art document

### Patent document

Patent document 1: JP 2018162851 A
Patent document 2: JP 7055667 B
Patent document 3: JPS 63125897 A

### Non-patent document

Non-patent document 1: "NEDO Hydrogen Energy White Paper", New Energy and Industrial Technology Development Organization, February 2015, p. 119

### Summary of Invention

### Technical Problem

However, the technology described in Patent Document 1 requires a large amount of energy to compress hydrogen to a high pressure, making it difficult to transport it efficiently.

The technology described in Patent Document 2 requires a cryogenic environment of -253°C in order to liquefy and transport hydrogen, so it requires a great deal of energy and is difficult to transport efficiently.

The technology described in Non-patent Document 1 requires the input of large amounts of energy, such as the heating of organic hydrides to 350°C to 400°C when desorbing hydrogen, so it is difficult to achieve high efficiency when considering the use of hydrogen after transportation.

In the technology described in Patent Document 3, it is difficult to precisely control the amount of hydrogen supplied to the cell stack because temperature or pressure control is required when adsorbing and desorbing hydrogen. As a result, there was a problem that the pressure could rise above the expected level, and the pressure-resistant design of the tank containing the hydrogen storage alloy had to be greatly increased, so the weight of the tank itself increased. Also, because the tank was rigid, the filling efficiency of the tank into tankers and containers during transportation was lower than that of liquids.

One aspect of the present invention has been made in view of the above circumstances, and an object thereof is to provide a fluid hydrogen carrier that can transport large quantities of hydrogen at high efficiency at normal temperature and normal pressure.

### Solution to Problem

One aspect of a fluid hydrogen carrier of the invention contains a hydrogen storage alloy and an alkaline electrolyte.

One aspect of the present invention is a fluid hydrogen carrier contains a hydrogen storage alloy and an alkaline electrolyte.

Another aspect of the present invention is a method for producing the fluid hydrogen carrier containing a process for heating a mixture of a hydrogen storage alloy and an alkaline solution at a temperature of 80°C or higher.

Another aspect of the present invention is the method for producing a fluid hydrogen carrier containing a process for crushing the hydrogen storage alloy while the hydrogen storage alloy and an alkaline solution are mixed.

Another aspect of the present invention is a charge-discharge cell containing a negative current collector, a positive current collector, an oxygen electrode catalyst, and an ion permeable membrane,
wherein a part of the negative current collector is electrically connected to the fluid hydrogen carrier,
a part of the positive current collector is electrically connected to the oxygen electrode catalyst,
a portion of the oxygen electrode catalyst is ionically connected to the ion permeable membrane,
the ion permeable membrane is provided to isolate the negative electrode current collector and the positive electrode current collector, and
a portion of the fluid hydrogen carrier is ionically connected to the ion permeable membrane.

Another aspect of the present invention is a secondary battery containing the charge-discharge cell.

Another aspect of the present invention is a hydrogen filling device containing a negative electrode current collector, a negative electrode void capable of filling the fluid hydrogen carrier, a positive electrode current collector, a cathode void, an oxygen evolution electrode, and an ion permeable membrane,
wherein the negative electrode void is in contact with both the negative electrode current collector and the ion permeable membrane,
the positive electrode void is in contact with the oxygen evolution catalyst,
a part of the positive electrode current collector is electrically connected to the oxygen evolution catalyst,
a part of the oxygen evolution catalyst is in contact with an alkaline aqueous solution,
a part of the oxygen evolution catalyst is ionically connected to the ion permeable membrane, and
the ion permeable membrane is provided to isolate the negative current collector and the positive current collector.

Another aspect of the present invention is a power generation device containing a negative electrode current collector, a negative electrode void capable of filling the fluid hydrogen carrier that has been filled with hydrogen, a positive electrode current collector, a positive electrode void, an oxygen reduction catalyst, and an ion permeable membrane,
wherein the negative electrode void is in contact with both the negative electrode current collector and the ion permeable membrane,
the positive electrode void is in contact with the oxygen reduction catalyst,
a part of the positive electrode current collector is electrically connected to the oxygen reduction catalyst,
a part of the oxygen reduction catalyst is ionically connected to the ion permeable membrane,
a portion of the oxygen reduction catalyst is in contact with air, and
the ion permeable membrane is provided to isolate the negative electrode current collector and the positive electrode current collector.

Another aspect of the present invention is a hydrogen filling and power generation device containing a negative electrode current collector, a negative electrode void capable of filling the fluid hydrogen carrier, a positive electrode current collector, a positive electrode void, a bifunctional catalyst capable of both oxygen generation and oxygen reduction, and an ion permeable membrane,
wherein the negative electrode void being in contact with both the negative electrode current collector and the ion permeable membrane,
the positive electrode void is in contact with the bifunctional catalyst,
a portion of the positive electrode current collector is electrically connected to the bifunctional catalyst,
a portion of the bifunctional catalyst is in contact with air or an alkaline aqueous solution, and
the ion permeable membrane is provided to isolate the negative electrode current collector and the positive electrode current collector.

Another aspect of the present invention is a hydrogen filling and power generation device containing a negative electrode current collector, a negative electrode void capable of filling with a fluid hydrogen carrier, a positive electrode current collector, a positive electrode void, and an ion permeable membrane,
wherein the negative electrode void is in contact with both the negative electrode current collector and the ion permeable membrane,
the positive electrode void is in contact with both the positive electrode current collector and the ion permeable membrane, and
the ion permeable membrane is provided to isolate the negative electrode current collector and the positive electrode current collector.

Another aspect of the present invention is a hydrogen filling system containing a storage tank for the fluid hydrogen carrier, the fluid nickel hydroxide slurry, or the alkaline electrolyte,
the tank is connected to the positive electrode void or the negative electrode void of hydrogen filling device, and
the hydrogen filling system contains a pressurization/depressurization device capable of filling/discharging the fluid hydrogen carrier, the fluid nickel hydroxide slurry, air, oxygen, or the alkaline electrolyte into the positive electrode void or the negative electrode void.

Another aspect of the present invention is a power generation system containing a storage tank for the fluid hydrogen carrier, the fluid nickel hydroxide slurry, or the alkaline electrolyte,
wherein the tank is connected to the positive or negative electrode void of the power generation device, and
the power generation system contains a pressurization/depressurization device capable of filling/discharging the fluid hydrogen carrier, the fluid nickel hydroxide slurry, air, oxygen, or the alkaline electrolyte into the positive electrode void or the negative electrode void.

Another aspect of the present invention is a hydrogen filling and power generating system containing a storage tank for the fluid hydrogen carrier, the fluid nickel hydroxide slurry, or the alkaline electrolyte,
the tank is connected to the positive electrode void or the negative electrode void of the hydrogen filling and power generation device, and
the hydrogen filling and power generating system contains a pressurization/depressurization device capable of filling/discharging the fluid hydrogen carrier, the fluid nickel hydroxide slurry, air, oxygen, or the alkaline electrolyte into the positive electrode void or the negative electrode void.

Another aspect of the present invention is an energy transport method for extracting the hydrogen-filled fluid hydrogen carrier or the fluid hydrogen carrier and the fluid nickel hydroxide slurry from the power generation system and transporting the hydrogen-filled fluid hydrogen carrier or the fluid hydrogen carrier and fluid nickel hydroxide slurry.

Another aspect of the present invention is an energy transport method for extracting the hydrogen-filled fluid hydrogen carrier or the fluid hydrogen carrier and the fluid nickel hydroxide slurry from the hydrogen filling and power generation system and transporting the hydrogen-filled fluid hydrogen carrier or the fluid hydrogen carrier and fluid nickel hydroxide slurry.

### Advantageous Effects of Invention

One aspect of the fluid hydrogen carrier related to the invention can transport large quantities of hydrogen at high efficiency at normal temperature and normal pressure. Brief Description of Drawings

Fig. 1 is a schematic cross-sectional diagram illustrating the configuration of the fluid hydrogen carrier according to the embodiment of the present invention.
Fig. 2 is a schematic diagram illustrating the configuration of a charging/discharging cell that uses the fluid hydrogen carrier according to the embodiment of the invention.
Fig. 3 is a schematic diagram illustrating the other configuration of the charge-discharge cell.
Fig. 4 is a schematic diagram illustrating the configuration of a secondary battery with a charge-discharge cell according to the embodiment of the present invention.
Fig. 5 is a schematic diagram illustrating the other configuration of the secondary battery.
Fig. 6 is a schematic cross-sectional diagram illustrating a hydrogen filling device for the fluid hydrogen carrier according to the embodiment of the present invention.
Fig. 7 is a schematic cross-sectional diagram illustrating a hydrogen filling method for the fluid hydrogen carrier according to the embodiment of the present invention.
Fig. 8 is a schematic cross-sectional diagram illustrating a power generation device that uses the fluid hydrogen carrier according to the embodiment of the present invention.
Fig. 9 is a schematic cross-sectional diagram illustrating a power generation method that uses the fluid hydrogen carrier according to the embodiment of the present invention.
Fig. 10 is a schematic cross-sectional diagram illustrating a hydrogen filling and power generation device that uses the fluid hydrogen carrier according to the embodiment of the present invention.
Fig. 11 is a schematic cross-sectional diagram illustrating a second hydrogen filling and power generation device that uses the fluid hydrogen carrier according to the embodiment of the present invention.
Fig. 12 is a schematic cross-sectional diagram illustrating a hydrogen filling method of the second hydrogen filling and power generation device that uses the fluid hydrogen carrier according to the embodiment of the present invention.
Fig. 13 is a schematic cross-sectional diagram illustrating a power generating method of the second hydrogen filling and power generation device that uses the fluid hydrogen carrier according to the embodiment of the present invention.
Fig. 14 is a schematic cross-sectional diagram illustrating the second hydrogen filling device for the fluid hydrogen carrier according to the embodiment of the present invention.
Fig. 15 is a schematic cross-sectional diagram illustrating a second power generation device that uses the fluid hydrogen carrier according to the embodiment of the present invention.
Fig. 16 is a schematic cross-sectional diagram illustrating a third hydrogen filling and power generation device that uses the fluid hydrogen carrier according to the embodiment of the present invention.
Fig. 17 is a schematic cross-sectional diagram illustrating a fourth hydrogen filling and power generation device that uses the fluid hydrogen carrier according to the embodiment of the present invention.
Fig. 18 is a schematic cross-sectional diagram illustrating a third hydrogen filling device for the fluid hydrogen carrier according to the embodiment of the present invention.
Fig. 19 is a schematic cross-sectional diagram illustrating a third power generation device that uses the fluid hydrogen carrier according to the embodiment of the present invention.
Fig. 20 is a schematic cross-sectional diagram illustrating a fifth hydrogen filling and power generation device that uses the fluid hydrogen carrier according to the embodiment of the present invention.
Fig. 21 is a schematic cross-sectional diagram illustrating a sixth hydrogen filling and power generation device that uses the fluid hydrogen carrier according to the embodiment of the present invention.
Fig. 22 is a schematic cross-sectional diagram illustrating a hydrogen filling and power generation system that uses the fluid hydrogen carrier according to the embodiment of the present invention.
Fig. 23 is a schematic cross-sectional diagram illustrating a second hydrogen filling and power generation system that uses the fluid hydrogen carrier according to the embodiment of the present invention.
Fig. 24 is a schematic cross-sectional diagram illustrating a third hydrogen filling and power generation system that uses the fluid hydrogen carrier according to the embodiment of the present invention.
Fig. 25 is a schematic cross-sectional diagram illustrating a fourth hydrogen filling and power generation system that uses the fluid hydrogen carrier according to the embodiment of the present invention.
Fig. 26 is a charging curve of Example 1-1.
Fig. 27 is a discharge curve of Example 1-1.
Fig. 28 is a charging curve during filling with hydrogen in Example 1-2.
Fig. 29 is a discharge curve during power generation in Example 1-2.
Fig. 30 is an appearance of the sample after the static test in Comparison Example 6.
Fig. 31 is an appearance of the sample after the static test in Example 14.

### Description of Embodiments

The following is a detailed explanation of the embodiments of the present invention based on the drawings. In order to make the explanations easier to understand, the same symbols are used for the same components in each drawing, and any overlapping explanations are omitted. In addition, the scale of each component in the drawings may differ from the actual size. In this document, the "~" symbol used to indicate a numerical range means that the lower and upper limits include the values listed before and after it, unless otherwise specified.

### <FLUID HYDROGEN CARRIER>

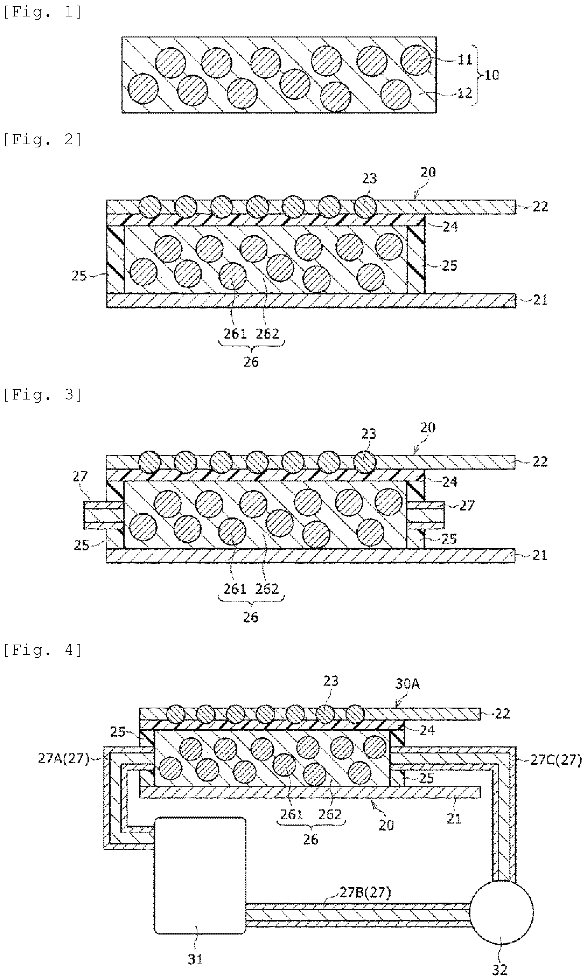

This section describes a fluid hydrogen carrier of the present embodiment. Figure 1 is a schematic cross-sectional diagram illustrating the configuration of the fluid hydrogen carrier of the present embodiment. As shown in Figure 1, the fluid hydrogen carrier 10 of the present embodiment is a mixture that contains a hydrogen storage alloy 11 and an alkaline electrolyte 12, and may also contain other additive components such as dispersants, thickeners, surfactants, and electrically conductive fillers in any suitable amount. The fluid hydrogen carrier 10 contains the hydrogen storage alloy 11 dispersed in the alkaline electrolyte 12.

In addition, the fluid hydrogen carrier 10 may be low viscosity or high viscosity, and the viscosity of the fluid hydrogen carrier 10 can be adjusted as appropriate depending on the ratio of the hydrogen storage alloy and the alkaline electrolyte contained in the fluid hydrogen carrier 10. The fluid hydrogen carrier 10 may have a high viscosity, for example, to the extent that it becomes creamy or whipped. In the embodiment, if the fluid hydrogen carrier 10 has a high viscosity and, for example, even if the fluid hydrogen carrier 10 is dripped onto a flat plate and the plate is tilted, the fluid hydrogen carrier 10 hardly flows, but it can be pumped using a pump or other transport device, it may be included in the fluid hydrogen carrier 10.

### (HYDROGEN STORAGE ALLOY)

The hydrogen storage alloy 11 contained in the fluid hydrogen carrier of the embodiment has the function of reversibly storing and releasing hydrogen, and has a generally granular shape.

The material of hydrogen storage alloy 11 is not particularly limited as long as materials that can store and release hydrogen.

The example of the hydrogen storage alloy 11 comprises La-Ni alloy, La-Nd-Ni alloy, La-Gd-Ni alloy, LaY-Ni alloy, La-Co-Ni alloy, La-Ce-Ni alloy, La-Ni-Ag alloy, La-Ni-Fe alloy, La-Ni-Cr alloy, La-Ni-Pd alloy, La-Ni-Cu alloy, La-Ni-Al alloy, La-Ni-Mn alloy, La-Ni-In alloy, La-Ni-Sn alloy, La-Ni-Ga alloy, La-Ni-Si alloy, La- Ni-Ge alloy, La-Ni-Al-Co alloy, La-Ni-Al-Mn alloy, La-Ni-Al-Cr alloy, La-Ni-Al-Cu alloy, La-Ni-Al-Si alloy, La-Ni-Al-Ti alloy, La-Ni- Al-Zr alloy, La-Ni-Mn-Zr alloy, La-Ni-Mn-Ti alloy, La-Ni-Mn-V alloy, La-Ni-Cr-Mn alloy, La-Ni-Cr-Zr alloy, La-Ni-Fe-Zr alloy, La-Ni-Cu-Zr alloy, and an alloy in which the La element in the above alloy is replaced with a misch metal (a mixture of rare earth elements, the main components of which are Ce and La) ; an alloy composed of two or more combinations of Ti, Fe, Mn, Al, Ce, Ca, Mg, Zr, Nb, V, Co, Ni, and Cr elements, such as Ti-Zr-Mn-Mo alloy, Zr-Fe-Mn alloy, and Mg-Ni alloy; a metal that forms hydrides (have hydrogen storing properties) such as Ti, V, Zr, La, Pd, Pt, etc.; a hydride (materials that store hydrogen) of the above-mentioned alloys or metals, etc. These can be used individually or in combination.

The shape of the hydrogen storage alloy 11 is not particularly limited, and may be, for example, spherical, ellipsoidal, spindle-shaped, crushed, plate-shaped, or column-shaped.

The average particle diameter of the hydrogen storage alloy 11 is 50 µm or less. If it is larger than 50 µm, problems such as the hydrogen storage alloy 11 clogging the flow path and the sedimentation speed being too fast occur during the process of filling the fluid hydrogen carrier 10 with hydrogen. Within the range of 50 µm or less, the average particle diameter of the hydrogen storage alloy 11 can be adjusted as appropriate, for example, 1 µm to 50 µm is preferable, 5 µm to 40 µm is more preferable, and 10 µm to 20 µm is even more preferable. If the average particle diameter is too small, the viscosity of the fluid hydrogen carrier 10 will increase, which will hinder fluidity. If the average particle diameter of the hydrogen storage alloy 11 is within the above-mentioned preferred range, the hydrogen storage alloy 11 can maintain a contact area with the alkaline electrolyte 12 while being well dispersed in the alkaline electrolyte 12.

The average particle diameter refers to the volume average particle diameter based on the effective diameter. The average particle diameter is measured using methods such as laser diffraction/scattering or dynamic light scattering. In the particle size distribution curve obtained by measuring the particle size distribution of hydrogen storage alloy 11, the particle size (median diameter) at which the cumulative amount accounts for 50% of the volume from the smallest particles may be used as the average particle size.

The hydrogen storage alloy 11 may be either porous or non-porous, and is selected as appropriate depending on the material used.

If the hydrogen storage alloy 11 is a porous material, its specific surface area is not particularly limited, and it may be any size as appropriate, depending on the type, size, etc. of the hydrogen storage alloy 11. The specific surface area can be measured, for example, using a specific surface area measurement device that uses a gas adsorption method.

The content of hydrogen storage alloy 11 is 15% or more by volume in fluid hydrogen carrier 10. If it is less than this, the energy density of fluid hydrogen carrier 10 will decrease. Also, if it is less than this, the ratio of the metal component in fluid hydrogen carrier 10 will decrease, and the electrical conductivity of fluid hydrogen carrier 10 will decrease, so electrochemical hydrogen filling and power generation will not be sufficiently possible. The content of the hydrogen storage alloy 11 should be at least 15% by volume in the fluid hydrogen carrier 10, and for example, 15% to 50% by volume is preferable, and 20% to 40% by volume is even more preferable.

### (ALKALINEELECTROLYTE)

The alkaline electrolyte 12 contains a supporting electrolyte and water.

The supporting electrolyte is dissolved in water.

The supporting electrolyte may be, for example, potassium hydroxide (KOH), sodium hydroxide (NaOH), lithium hydroxide (LiOH), etc. These may be used alone or in combination with two or more types.

The supporting electrolyte is preferably contained in the alkaline electrolyte 12 at a concentration of 1 mol/L to 12 mol/L, more preferably at a concentration of 5 mol/L to 10 mol/L, and even more preferably at a concentration of 6 mol/L to 8 mol/L. If the supporting electrolyte is contained in the alkaline electrolyte 12 at a concentration of 1 mol/L to 20 mol/L, the ionic conductivity of the alkaline electrolyte 12 is increased, and if the supporting electrolyte is contained in the alkaline electrolyte 12 at a concentration of 5 mol/L to 8 mol/L, the ionic conductivity of the alkaline electrolyte 12 is increased to the greatest extent.

### (THICKENING AGENT)

The fluid hydrogen carrier 10 contains a thickening agent.

The viscosity of the fluid hydrogen carrier 10 should be 100 mPa·sec or more at a shear rate of 100 sec⁻¹. If the viscosity is lower than this, the hydrogen storage alloy will settle significantly, and fluidity will deteriorate.

As the thickening agent, a single type of organic polymer that dissolves in alkaline electrolyte 12 may be used, or two or more types may be used in combination. In order to increase the thickening effect, the thickening agent is preferably a water-soluble organic polymer with a weight average molecular weight of 1500 or more. The water-soluble organic polymer is more preferably a polyacrylate, and is even more preferably sodium polyacrylate.

### (THIXOTROPIC AGENT)

The fluid hydrogen carrier 10 contains a thixotropic agent. The thixotropic agents are additives that exhibit thixotropy when mixed with a liquid. Thixotropy is a property in which the viscosity decreases when shear stress is applied, and the viscosity increases when the liquid is left static. The addition of the thixotropic agent can inhibit the sedimentation of the hydrogen storage alloy 11 in the fluid hydrogen carrier 10 when it is left static.

The thixotropic agent is not limited to any particular material, as long as it is possible to make the fluid hydrogen carrier 10 exhibit thixotropy. Examples of thixotropic agent comprises a silica particle, a bentonite, a calcium carbonate, a castor oil, a fatty acid ester, a polyether, a glycol ether, and carbon black. These can be used individually or in combination. The thixotropic agent is more preferably a carbon black. Among the above thixotropic agents, carbon black has high electrical conductivity. Therefore, it not only suppresses the sedimentation of the hydrogen storage alloys 11, but also has the effect of increasing the electrical conductivity of the fluid hydrogen carriers 10.

In order to achieve thixotropy with a smaller amount of additive, it is better to use fine particles of thixotropic agent. By using smaller particle, a dense network is formed when the material is left to stand, which greatly increases the effect of the hydrogen storage alloy 11 in suppressing sedimentation. There are no particular restrictions on particle size, but particle of 1 µm or less are preferable.

### (METHOD FOR PRODUCING FLUID HYDROGEN CARRIER)

A method for manufacturing the fluid hydrogen carrier 10 is not particularly limited, and contains, for example, a process of heating to at least 80°C in a state where the hydrogen storage alloy 11 the alkaline electrolyte 12 are mixed. This has the effect of removing an insulating oxide film from the surface of the hydrogen storage alloy 11 and forming a nickel-rich layer with high electrical conductivity on the surface of the hydrogen storage alloy 11.

If the hydrogen storage alloy 11 material contains coarse particles of 50 µm or more, it is necessary to crush it. The Hydrogen storage alloy 11 can be crushed using a ball mill, jet mill, etc., but crushing it in the air causes oxidation of the surface. Because the smaller the particle size, the larger the specific surface area, there is a risk of heat generation and explosion when crushing large quantities of the hydrogen storage alloy 11. For this reason, when crushing the hydrogen storage alloy, the hydrogen storage alloy 11 and the alkaline electrolyte 12 are mixed together. The equipment used for crushing is not limited, but ball mills and jet mills can be used.

The fluid hydrogen carrier 10 contains the hydrogen storage alloy 11 in the alkaline electrolyte 12, with the hydrogen storage alloy 11 dispersed in the alkaline electrolyte 12. By dispersing the hydrogen storage alloy 11 in the alkaline electrolyte 12, the fluid hydrogen carrier 10 can store hydrogen at high density while maintaining fluidity at normal temperature and normal pressure. In addition, the fluid hydrogen carrier 10 can generate electricity (discharge) at the same time as releasing hydrogen.

Therefore, the fluid hydrogen carrier 10 can be transported in large quantities with a high filling rate and efficiently without being constrained by shape when transported by tankers and other transport ships. In addition, the fluid hydrogen carrier 10 can repeatedly store and release hydrogen.

### <CHARGE/DISCHARGE CELL>

This section describes a charge/discharge cell that uses the fluid hydrogen carrier of the embodiment. Figure 2 shows a charge/discharge cell. As shown in Figure 2, the charge-discharge cell 20 contains a negative electrode current collector 21, a positive electrode current collector 22, an oxygen electrode catalyst 23, an ion permeable membrane 24, and a seal material 25, and the fluid hydrogen carrier 26 is filled in the space formed by the negative electrode current collector 21, the ion permeable membrane 24 and the seal material 25. The fluid hydrogen carrier 26 is a mixture containing a hydrogen storage alloy 261 and an alkaline electrolyte 262. As the fluid hydrogen carrier 26 is the fluid hydrogen carrier 10 described above, the details are omitted.

### (NEGATIVE ELECTRODE CURRENT COLLECTOR)

The negative electrode current collector 21 may be manufactured, for example, by applying a roughened nickel plating to the surface of a nickel plate, steel plate, stainless steel plate, etc.; by etching the surface of a nickel plate or nickel foil; by using a nickel mesh, nickel foam, or nickel porous body; or by applying nickel plating to the surface of steel or stainless steel sheets that have been roughened by etching or other means. The surface may also be concave and convex, or porous.

The negative electrode current collector 21 is connected electrically to the fluid hydrogen carrier 26 and is arranged to be ionically connected to the ion permeable membrane 24. Ionic connection means that there is no interruption in ionic conduction between the fluid hydrogen carrier 26 and the ion permeable membrane 24.

### (POSITIVE ELECTRODE CURRENT COLLECTOR)

The positive electrode current collector 22 is arranged so that part of it is electrically connected to the oxygen electrode catalyst 23. The positive electrode current collector 22 is not limited in terms of material or shape, as long as it is electrically conductive. For example, it may be a nickel plate, a nickel mesh, a nickel porous body, a stainless steel mesh, a stainless steel porous body, a stainless steel felt, a carbon felt, carbon paper; it may be manufactured by applying a roughened nickel plating to the surface of any of the above; it may be manufactured by etching the surface of nickel plates or nickel foil; or it may be manufactured by applying nickel plating to the surface of stainless steel that has been roughened by etching or other means beforehand.

### (OXYGEN ELECTROODE CATALYST)

The oxygen-electrode catalyst 23 is provided so that part of it is ionically connected to the ion-permeable membrane 24. Ionic connection means that there is no interruption in ionic conduction between the oxygen-electrode catalyst 23 and the ion-permeable membrane 24.

The oxygen cathode catalyst 23 may be a substance that generates hydroxide ions from oxygen, a catalyst that generates hydroxide ions from oxygen, or both, and may include, for example, platinum, rhodium, palladium, iridium, osmium, ruthenium, rhenium, gold, silver, nickel, cobalt, molybdenum, lanthanum, strontium, yttrium, bismuth iridium oxide, and aza-phthalocyanine metal complexes, etc. may be used. A catalyst may be a single type or a combination of two or more types.

The oxygen electrode catalyst 23 may be applied to a substrate such as titanium mesh, titanium porous material, nickel mesh, nickel porous material, carbon paper, or a positive electrode current collector 22, in the form of a catalyst layer comprising a catalyst support with or without a carrier, and an ion-conductive binder.

As a carrier, acetylene black, Ketjen black, carbon nanotube, carbon nanohorn, graphene, graphene oxide, nickel particle, etc. can be used. To load the catalyst onto the support, methods such as impregnation can be applied. In addition to structures in which the catalyst is loaded onto the support, it is also possible to use a mixture of catalyst particles and particles that can act as support. In this case, the particles that can act as support may or may not have catalytic functions. It is also preferable to use electrically conductive materials to form the particles that can act as support.

The oxygen electrode catalyst 23 is provided in an electrically connected state with the positive electrode current collector 22. The electrically connected state means that the oxygen electrode catalyst 23 and the positive electrode current collector 22 are electrically connected, and an electrically conductive material may be used between them. For example, the oxygen electrode catalyst 23 may be formed on carbon paper, and the carbon paper and the oxygen electrode catalyst 23 may be connected.

The oxygen electrode catalyst 23 is provided in an ionically connected state with the ion permeable membrane 24. An ionically connected state means that there is no interruption in ion conduction between the oxygen electrode catalyst 23 and the ion permeable membrane 24, and for example, electrolyte or water may be present between the oxygen electrode catalyst 23 and the ion permeable membrane 24.

### (ION PERMEABLE MEMBRANE)

The ion permeable membrane 24 is provided between the negative electrode current collector 21 and the positive electrode current collector 22, and isolates the negative electrode current collector 21 and the positive electrode current collector 22. The shape of the ion permeable membrane 24 is not particularly limited, and may have any shape as appropriate.

The ion permeable membrane 24 can be either an anion exchange membrane or a combination of an anion exchange membrane and a cation exchange membrane.
When using two membranes, one anion exchange membrane and one cation exchange membrane, the anion exchange membrane is placed on the negative electrode current collector 21 side, and the cation exchange membrane is placed on the positive electrode current collector 22 side. In this case, there may be a space between the anion exchange membrane and the cation exchange membrane, or the anion exchange membrane and the cation exchange membrane may be in contact with each other.

### (SEAL MATERIAL)

The seal material 25 is provided on both ends of the ion permeable membrane 24 to connect the negative electrode current collector 21 and the ion permeable membrane 24. The seal material 25 prevents leakage of the fluid hydrogen carrier 26 or alkaline electrolyte 262. The material and shape of the seal material 25 are not limited, as long as they can prevent leakage of the fluid hydrogen carrier 26 or alkaline electrolyte 262.

Materials for the seal material 25 include, for example, silicone elastomer, acrylic elastomer, butyl elastomer, polyvinylidene fluoride, fluoro elastomer, butadiene elastomer, styrene-butadiene elastomer, styreneethylene/butylene-styrene block copolymer elastomer, maleic anhydride-modified styrene-ethylene/butylene-styrene block copolymer elastomer, acid-modified styreneethylene/butylene-styrene block copolymer, polybutene, etc. These can be used individually or in combination.

When charging the charge-discharge cell 20, if current flows through the positive electrode current collector 22, the electrons flowing through the positive electrode current collector 22 will flow out through the positive electrode current collector 22, because the positive electrode current collector 22 and the oxygen electrode catalyst 23 are electrically connected. In addition, because the oxygen electrode catalyst 23 is ionically connected to the ion permeable membrane 24, the hydroxide ions (OH⁻) necessary for the reaction, which are generated during the charging process described below, are supplied to the surface of the oxygen electrode catalyst 23 via the ion permeable membrane 24 from the fluid hydrogen carrier 26, which is filled in the space formed by the negative electrode current collector 21, ion permeable membrane 24, and seal material 25. At the surface of the oxygen electrode catalyst 23, electrons are removed from the hydroxide ions to produce oxygen and water, as shown in the following equation (1).

4OH⁻ - 4e⁻ → O₂ + 2H₂ ··· (1)

In the embodiment, part of the negative electrode current collector 21 is electrically connected to the fluid hydrogen carrier 26, and part of the fluid hydrogen carrier 26 is ionically connected to the ion permeable membrane 24. Ionic connection means that there is no interruption in ionic conduction between the fluid hydrogen carrier 26 and the ion permeable membrane 24.

Therefore, when charging, as shown in the following formula (2), hydrogen is stored into the hydrogen storage alloy 261 through a reaction between the water in the fluid hydrogen carrier 26 and the hydrogen storage alloy 261, and hydroxide ions (OH⁻) are produced.

M + H₂O + e⁻ → MH + OH⁻ ··· (2)

(In the formula, M is the hydrogen storage alloy.)

Because part of the negative electrode current collector 21 is electrically connected to the fluid hydrogen carrier 26, it is possible to transfer electrons between the fluid hydrogen carrier 26 and the electron. Because part of the fluid hydrogen carrier 26 is ionically connected to the ion permeable membrane 24, the generated hydroxide ions can quickly move to the positive electrode current collector 22, which is the positive electrode side. During discharge, the opposite reaction occurs.

By connecting the charging/discharging cell 20 to a tank 31 (see Figure 4) or a pump 32 (see Figure 4), the fluid hydrogen carrier 26 can be easily discharged from the charging/discharging cell 20 and circulated between the charging/discharging cell 20 and the tank 31 (see Figure 4) or the pump 32 (see Figure 4). This allows the charging/discharging cell 20 to store the fluid hydrogen carrier 26 that has been charged (hydrogen stored) in the tank 31 (see Figure 4). If the charge (amount of hydrogen stored) of the charge-discharge cell 20 is insufficient, the fluid hydrogen carrier 26 can be circulated through the charge-discharge cell 20 again to allow additional charging. In the charge-discharge cell 20, the storing of hydrogen into the fluid hydrogen carrier 26 or the release of hydrogen from the fluid hydrogen carrier 26 is carried out electrochemically within the charge-discharge cell 20.

Therefore, the charge-discharge cell 20 contains the negative electrode current collector 21, the positive electrode current collector 22, the oxygen electrode catalyst 23, the ion permeable membrane 24, and the seal material 25, and contains a fluid hydrogen carrier 26 in the space formed by the negative electrode current collector 21, the ion permeable membrane 24, and the seal material 25. This means that the charge-discharge cell 20 can electrochemically store and release hydrogen into the fluid hydrogen carrier 26 in the above-mentioned space, allowing for more precise control than when controlling temperature and pressure.

The charge-discharge cell 20 contains a hydrogen storage alloy 261 in a fluid hydrogen carrier 26, and the hydrogen storage alloy 261 can reversibly store and release hydrogen, as in the case of its use as a negative electrode active material in a nickel-metal hydride secondary battery. Therefore, the charge-discharge cell 20 can be used as a battery cell for a secondary battery.

In the embodiment, as shown in Figure 3, in the charge/discharge cell 20, a joint 27 may be connected to a pair of seal materials 25.

The joint 27 may be formed in the shape of a pipe. The joint 27 may be a structure that can inject and discharge the fluid hydrogen carrier 26 into the seal material 25. The joint 27 may be a position that can be connected to the seal material 25, and the location of the joint 27 is not particularly limited.

The material for the joint 27 may be any material that does not corrode or dissolve in the alkaline electrolyte 262. Examples of such materials include nickel, stainless steel, polyethylene, polypropylene, acrylic, polytetrafluoroethylene, polyvinylidene fluoride, polyetheretherketone, etc. These can be used individually or in combination.

### <SECONDARY BATTERY>

This section describes a secondary battery that contains a charging/discharging cell as described in the embodiment. Figure 4 shows the configuration of a secondary battery with a charge-discharge cell according to the present embodiment. As shown in Figure 4, the secondary battery 30A contains a charge-discharge cell 20, a tank 31, and a pump 32, and fluid hydrogen carrier 26 is circulated between the charge-discharge cell 20 and the tank 31 and pump 32 via a joint 27.

The joint 27 is only required to be configured to circulate the fluid hydrogen carrier 26 between the charge/discharge cell 20, the tank 31 and the pump 32. In the embodiment, the joint 27 contains a joint 27A connecting the seal material 25 on one side to the tank 31, a joint 27B connecting the tank 31 to the pump 32, and a joint 27C connecting the seal material 25 on the other side to the pump 32. Joints 27A, 27B and 27C can be provided with a flow control valve (not shown in the figures) that can be used to control the flow rate.

Tank 31 may be formed of a material that is not corroded or dissolved by the alkaline electrolyte 262 contained in the fluid hydrogen carrier 26. The material used to form the tank 31 is not particularly limited, but examples include nickel, stainless steel, polyethylene, polypropylene, acrylic, polytetrafluoroethylene, polyvinylidene fluoride, and polyetheretherketone. These materials may be used individually or in combination.

In addition, in order to improve the wear resistance of the inner wall of the tank 31, a coating layer may be formed on the inner wall of the tank 31 using a coating agent. As coating agents, for example, diamond-like carbon (DLC), polytetrafluoroethylene, melamine resin, urea resin, polyacetal, polyphenylene sulfide, ultra-high-molecular-weight polyethylene, etc. may be used. These may be used individually or in combination. In addition, because gas is generated during charging and discharging, the internal pressure of the tank 31 rises, and in order to prevent damage to the secondary battery 30A, a pressure adjustment valve, etc. (not shown in the figures) may be provided inside the tank 31.

The pump 32 only needs to be able to pump fluid hydrogen carrier 26, and examples include centrifugal pumps, propeller pumps, reciprocating pumps, rotary pumps, etc. Examples of centrifugal pumps include centrifugal pumps and turbine pumps. Examples of propeller pumps include axial flow pumps, diagonal flow pumps, and cascade pumps. Reciprocating pumps include, for example, piston pumps, flange pumps, diaphragm pumps, tube pumps, and wing pumps. Rotating pumps include, for example, gear pumps, eccentric pumps, and screw pumps. These pumps may be used individually or in combination.

In the 30A secondary battery, by operating the pump 32, fluid hydrogen carrier 26 can be injected from the tank 31 into the charging/discharging cell 20, and also discharged from the charging/discharging cell 20 into the tank 31. This allows the fluid hydrogen carrier 26 to be circulated between the charge/discharge cell 20, the tank 31 and the pump 32 via the joint 27. The fluid hydrogen carrier 26 can also be stored in the tank 31 by closing the flow rate adjustment (not shown in the figures) provided in the joint 27B.

Thereby, the secondary battery 30A contains the charging/discharging cell 20, so it can electrochemically store and release hydrogen, making it easy and convenient to control the charging/discharging (hydrogen storing/release). In addition, the secondary battery 30A can be easily handled because the fluid hydrogen carrier 26 is fluid at normal temperature and normal pressure. For this reason, the secondary battery 30A can transport the fluid hydrogen carrier 26 with high efficiency.

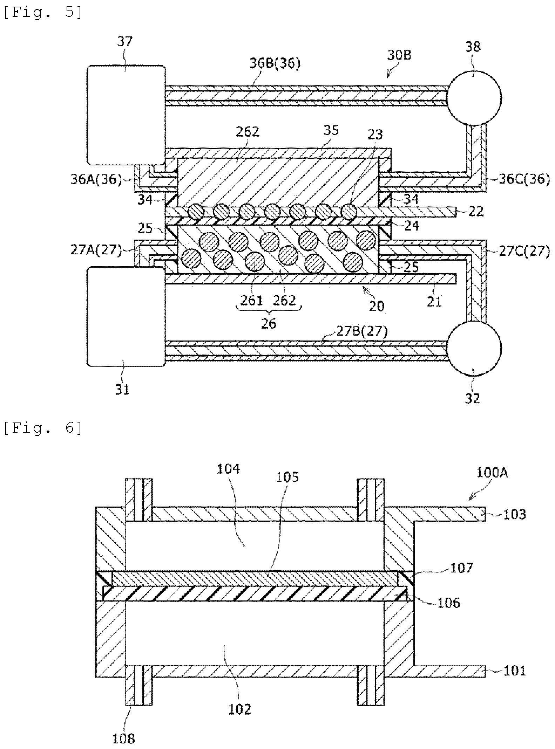

The other components of the secondary battery 30A, which contains the charge/discharge cell 20 of the embodiment, are described below. Figure 5 shows another configuration of the secondary battery 30A. As shown in Figure 5, the secondary battery 30B contains a seal material 34, a partition wall 35, a joint 36, a tank 37, and a pump 38 on the side opposite to the fluid hydrogen carrier 26 of the ion permeable membrane 24 in the secondary battery 30A shown in Figure 4. The secondary battery 30B contains a space inside it due to the positive electrode current collector 22, seal material 34 and the partition wall 35, and the alkaline electrolyte 262 is supplied to the space.

A pair of the seal materials 34 are provided on both ends of the partition wall 35, so as to connect the positive electrode current collector 22 and the partition wall 35, on the side opposite to the ion permeable membrane 24 of the positive electrode current collector 22. The seal material 34 prevents leakage of the alkaline electrolyte 262 supplied to the space formed by the positive electrode current collector 22, the seal material 34, and the the partition wall 35. The seal material 34 is the same as the seal material 25, so the details are omitted.

The partition wall 35 is provided on the side opposite the positive electrode current collector 22 of the seal material 34, and a space is formed inside by the positive electrode current collector 22, the seal material 34, and the partition wall 35.

The material used to form the partition wall 35 can be any material that does not corrode or dissolve in the alkaline electrolyte 262, and the same material can be used for the joint 27, etc.

The joint 36 is connected to a pair of the seal materials 34 and is connected to the tank 37 and the pump 38. The joint 36 is only required to be configured to circulate the alkaline electrolyte 262 between the charge/discharge cell 20, the tank 37 and the pump 38. In the embodiment, the joint 36 contains joint 36A, which connects one of the seal material 34 and the tank 37, the joint 36B, which connects the tank 37 and the pump 38, and the joint 36C, which connects the other the seal material 34 and the pump 38. Joints 36A, 36B and 36C are provided with a flow control valve (not shown) that can be used to control the flow rate.

The joint 36 may be formed in the shape of a tube. The joint 36 may be constructed in such a way that alkaline electrolyte 262 can be injected into and discharged from seal material 34. The joint 27 can be connected to the seal material 34 at any position, and the location of the joint 36 is not particularly limited. The joint 36 is made of the same material as the joint 27, so the details are omitted.

The tank 37 and the pump 38 are connected to the joint 36, and are used as a tank and pump for the positive electrode, respectively. The tank 37 and the pump 38 are the same as the tank 31 and the pump 32, so the details are omitted.

In the case of the secondary battery 30B, it can form a space formed by the positive electrode current collector 22, seal material 34 and partition wall 35, due to containing the seal material 34 and partition wall 35. This allows the alkaline electrolyte 262 to be supplied during charging and air or oxygen to be supplied during discharging.

Therefore, in the same way as the secondary battery 30A, the secondary battery 30B, which containing the charging/discharging cell 20, the seal material 34 and the partition wall 35, can easily and conveniently control charging/discharging (hydrogen storiing and release), and can also be transported with high efficiency.

### <HYDROGEN FILLING DEVICE FOR FLUID HYDROGEN CARRIER>

This section describes the hydrogen filling device for fluid hydrogen carrier. Figure 6 shows the hydrogen filling device. As shown in Figure 6, the hydrogen filling device 100A may contain a negative electrode current collector 101, a negative electrode void 102 that can be filled with fluid hydrogen carriers, a positive electrode current collector 103, a positive electrode void 104, an oxygen evolution electrode 105, an ion permeable membrane 106, a seal material 107, and a joint 108, and may be composed of these. The hydrogen filling device 100A fills hydrogen into the fluid hydrogen carrier 10.

### (NEGATIVE ELECTRODE CURRENT COLLECTOR)

The negative electrode current collector 101 may be manufactured, for example, by applying a roughened nickel plating to the surface of a nickel plate, steel plate, stainless steel plate, etc.; by etching the surface of a nickel plate or nickel foil; by using a nickel mesh, nickel foam, or nickel porous body; or by applying nickel plating to the surface of steel or stainless steel sheets that have been roughened by etching or other means. The surface may also be concave and convex, or porous.

The negative electrode current collector 101 only needs to be arranged so that it is in contact with the negative electrode void 102.

### (NEGATIVE ELECTRODE CURRENT COLLECTOR)

The negative electrode void 102 is provided for filling the fluid hydrogen carrier 10 during the hydrogen filling operation, and it is sufficient if the fluid hydrogen carrier 10 is electrically connected to the negative electrode current collector and ionically connected to the ion exchange membrane when the fluid hydrogen carrier 10 is filled in the negative electrode void 102. An ionically connected state means that there is no interruption in ion conduction between the fluid hydrogen carrier 10 and the ion-permeable membrane 106.

### (POSITIVE ELECTRODE CURRENT COLLECTOR)

The positive electrode current collector 103 is arranged so that part of it is electrically connected to the oxygen electrode catalyst 105. The positive electrode current collector 103 is not limited in terms of material or shape, as long as it is electrically conductive. For example, it may be a nickel plate, a nickel mesh, a nickel porous body, a stainless steel mesh, a stainless steel porous body, a stainless steel felt, a carbon felt, carbon paper; it may be manufactured by applying a roughened nickel plating to the surface of any of the above; it may be manufactured by etching the surface of nickel plates or nickel foil; or it may be manufactured by applying nickel plating to the surface of stainless steel that has been roughened by etching or other means beforehand.

### (OXYGEN EVOLUTION ELECTRODE)

The oxygen evolution electrode 105 only needs to have oxygen evolution activity on its surface, and oxygen evolution activity is the action of oxidizing hydroxide ions to produce oxygen, and oxygen evolution catalysts are used. The oxygen evolution electrode 105 may use this oxygen evolution catalyst alone, or it may use the oxygen evolution catalyst supported on a base material. A catalyst layer comprising an oxygen evolution catalyst, an ion-conductive binder, and a conductive agent may be coated onto a substrate such as a nickel mesh, nickel porous body, carbon paper, titanium mesh, titanium perforated metal, stainless steel mesh, stainless steel porous body, or the positive electrode current collector 103.

Examples of catalysts that have oxygen evolution activity include platinum, rhodium, palladium, iridium, osmium, ruthenium, rhenium, gold, silver, nickel, cobalt, molybdenum, lanthanum, strontium, yttrium, iron oxide, cobalt-iron oxide, copper-iron oxide, nickel-iron oxide, calcium iron oxide, nickel oxide, nickel sulfide, nickel and cobalt complex hydroxide, iron-nickel-tungsten oxide, carbon nitride, iridium oxide, bismuth-iridium oxide, titanium dioxide, lithium-containing nickel oxide, cobaltlanthanum oxide, etc. The catalyst can be a single type or a combination of two or more types.

The oxygen evolution electrode 105 is provided so that part of it is ionically connected to the ion permeable membrane 106, and part of it is electrically connected to the positive electrode current collector 103 and needs to be in contact with the positive electrode void 104. Ionic connection means that there is no interruption in ionic conduction between the oxygen evolution electrode 105 and the ion permeable membrane 106.

Due to the structure, electron move from the positive electrode current collector 103 to the oxygengenerating electrode, and it is possible to generate oxygen by oxidizing the hydroxide ions supplied from the ion permeable membrane 106 with the electron.

### (ION PERMEABLE MEMBRANE)

The ion permeable membrane 106 is provided between the negative electrode current collector 101 and the positive electrode current collector 103, between the negative electrode void 102 and the positive electrode void 104, between the negative electrode void 102 and the oxygen generation electrode, and isolates the negative electrode current collector 101 and the positive electrode current collector 103.

The shape of the ion permeable membrane 106 is not particularly limited, and may have any shape as appropriate.

The ion permeable membrane 106 may be an anion exchange membrane, a bipolar membrane made of an anion exchange membrane and a cation exchange membrane, or a non-woven fabric. When using two membranes, one anion exchange membrane and one cation exchange membrane, the anion exchange membrane is placed on the negative electrode current collector 101 side, and the cation exchange membrane is placed on the positive electrode current collector 103 side. When using non-woven fabric, it is preferable to have pores smaller than the particle diameter of the hydrogen storage alloy 11.

### (SEAL MATERIAL)

Seal material 107 can be used to prevent leakage of fluid hydrogen carrier 10 or alkaline electrolyte 12. The material and shape of seal material 25 do not need to be limited, as long as they can prevent leakage of fluid hydrogen carrier 10 or alkaline electrolyte 12.

Materials for the seal material 107 include, for example, silicone elastomer, acrylic elastomer, butyl elastomer, polyvinylidene fluoride, fluoro elastomer, butadiene elastomer, styrene-butadiene elastomer, styreneethylene/butylene-styrene block copolymer elastomer, maleic anhydride-modified styrene-ethylene/butylene-styrene block copolymer elastomer, acid-modified styreneethylene/butylene-styrene block copolymer, polybutene, etc. These can be used individually or in combination.

### (JOINT)

The joint 108 may be provided to fill or discharge the fluid hydrogen carrier 10 and the alkaline electrolyte 12 into the negative electrode void 102 and the positive electrode void 104.

The joint 108 is not limited as long as it does not prevent filling or discharging of the fluid hydrogen carrier 10 and alkaline electrolyte 12 into the negative electrode void 102 and positive electrode void 104. The material of the joint 108 only needs to be a material that does not corrode or dissolve in the alkaline electrolyte 12. Examples of such materials include nickel, stainless steel, polyethylene, polypropylene, acrylic, polytetrafluoroethylene, polyvinylidene fluoride, polyetheretherketone, etc., and it is possible to use either one type or a combination of two or more types.

### (METHOD FOR FILLING FLUID HYDROGEN CARRIER WITH HYDROGEN)

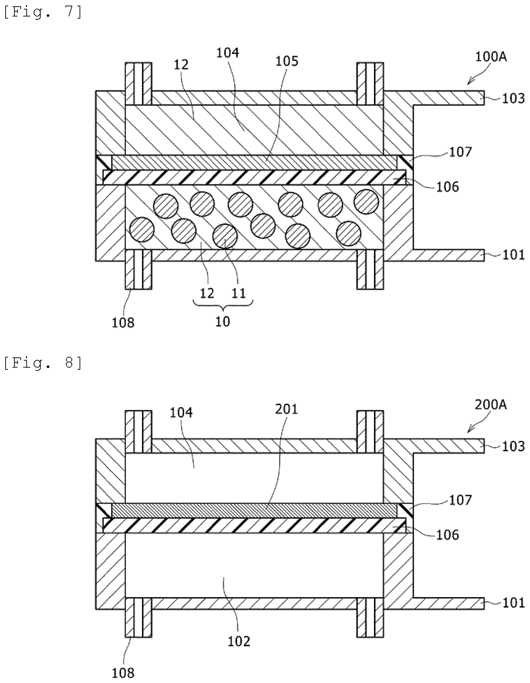

This section describes the method for filling fluid hydrogen carriers with hydrogen. Figure 7 is an illustration showing an example of filling fluid hydrogen carriers with hydrogen using a hydrogen filling device. As shown in Figure 7, the hydrogen filling device 100A contains a negative electrode current collector 101, a fluid hydrogen carrier 10, a positive electrode current collector 103, a positive electrode void 104, an oxygengenerating electrode 105, an ion permeable membrane 106 , a seal material 107, and a joint 108, and the fluid hydrogen carrier 10 and the alkaline electrolyte 12 are filled in the negative electrode void 102 and positive electrode void 104 of the hydrogen filling device 100A in Figure 6, respectively.

When a negative potential is applied to the negative electrode current collector 101 and a positive potential is applied to the positive electrode current collector 103 in the 100A hydrogen filling device, since the positive electrode current collector 103 and the oxygen evolution electrode 105 are electrically connected, electrons are extracted from the hydroxide ion (OH⁻) at the oxygen evolution electrode, and oxygen and water are produced, as shown in the following formula (1).

4OH⁻ → O₂ + 4e⁻ + 2H₂O ··· (1)

In the embodiment, part of the negative electrode current collector 101 is electrically connected to the fluid hydrogen carrier 10. Therefore, when a negative potential is applied to the negative electrode current collector 101 and a positive potential is applied to the positive electrode current collector 103, as shown in the following equation (2), hydrogen is stored into the hydrogen storage alloy 11 and hydroxide ions (OH⁻) are generated due to the reaction between water in the fluid hydrogen carrier 10 and the hydrogen storage alloy 11.

4M + 4H₂O + 4e⁻ → 4MH + 4OH⁻ ... (2)

(In the formula, M is the hydrogen storage alloy 11. )

In addition, in the embodiment, part of the fluid hydrogen carrier 10 is ionically connected to the ion permeable membrane 106, and part of the oxygen evolution electrode 105 is ionically connected to the ion permeable membrane 106, so the generated hydroxide ions can quickly move to the surface of the oxygen evolution electrode 105. Therefore, reactions (1) and (2) can be continuously generated.

Using the above method, in the embodiment, it is possible to fill the hydrogen storage alloy 11 in the fluid hydrogen carrier 10 with hydrogen by applying a negative potential to the negative electrode current collector 101 and a positive potential to the positive electrode current collector 103 in the hydrogen filling device 100A.

In addition, in the embodiment, by providing a joint 108, it is possible to inject or discharge the fluid hydrogen carrier 10 and alkaline electrolyte 12 from outside the hydrogen filling device 100A. By performing the hydrogen filling operation while flowing the fluid hydrogen carrier 10 and alkaline electrolyte 12, it is possible to continuously fill a large amount of hydrogen into the fluid hydrogen carrier 10.

As shown above, the hydrogen filling device 100A contains the negative electrode current collector 101, the negative electrode void 102, the positive electrode current collector 103, the positive electrode void 104, the oxygen generation electrode 105, and the ion permeable membrane 1 06, a negative potential is applied to the negative electrode current collector 101, and a positive potential is applied to the positive electrode current collector 103, and hydrogen can be filled into the hydrogen storage alloy 11 in the fluid hydrogen carrier 10.

### <POWER GENERATION DEVICE USING FLUID HYDROGEN GARRIER>

This section describes a power generation device that uses the fluid hydrogen carrier. Figure 8 shows a power generation device. As shown in Figure 8, the power generation device 200A that uses a fluid hydrogen carrier may contain a negative electrode current collector 101, a negative electrode void 102 that can be filled with a fluid hydrogen carrier, a positive electrode current collector 103, a positive electrode void 104, an oxygen reduction electrode 201, an ion permeable membrane 106, a seal material 107 and a joint 108, and may be composed of these. The power generation device 200A generates power using a fluid hydrogen carrier.

### (OXYGEN REDUCTION ELECTRODE)

The oxygen reduction electrode 201 only needs to have oxygen reduction activity on its surface, and oxygen reduction activity is the action of reducing oxygen to produce hydroxide ions, and oxygen reduction catalysts are used. The oxygen reduction electrode 201 may use this oxygen reduction catalyst alone, or it may use the oxygen reduction catalyst supported on a base material. A catalyst layer comprising an oxygen reduction catalyst and an ion-conductive binder may be coated onto a substrate such as a nickel mesh, nickel porous body, carbon paper, titanium mesh, titanium perforated metal, stainless steel mesh, stainless steel porous body, or positive electrode current collector 103.

Examples of catalysts with oxygen reduction activity include platinum, rhodium, palladium, iridium, osmium, ruthenium, rhenium, gold, silver, nickel, cobalt, molybdenum, lanthanum, strontium, yttrium, bismuth iridium oxide, nitrogen-containing metal complexes, cobalt phthalocyanine, iron tetraazaanulene, a complex of carbon quantum dots and nanosheet-shaped graphene oxide, trioxotriangulene compounds, and bismuth chloride. cobalt phthalocyanine, iron tetraazaanulene, a complex of carbon quantum dots and nanosheet-shaped graphene oxide, trioxotriangulene compounds, bismuth chloride, boron nitride, zirconium oxide with oxygen defects, aza-phthalocyanine metal complexes, etc. The catalyst may be a single type or a combination of two or more types.

The oxygen reduction electrode 201 is provided so that part of it is ionically connected to the ion permeable membrane 106, and part of it is electrically connected to the positive electrode current collector 103, and it is sufficient if it is in contact with the positive electrode void 104. Ionic connection means that there is no interruption in ionic conduction between the oxygen reduction electrode 201 and the ion permeable membrane 106.

Due to the structure, electrons move from the positive electrode current collector to the oxygen reduction electrode 201, and it is possible to reduce oxygen and generate hydroxide ions using these electrons.

The other components are the same as those of the hydrogen filling device, so a detailed explanation is omitted.

### <METHOD FOR GENERATING POWER USING FLUID HYDROGEN CARRIER>

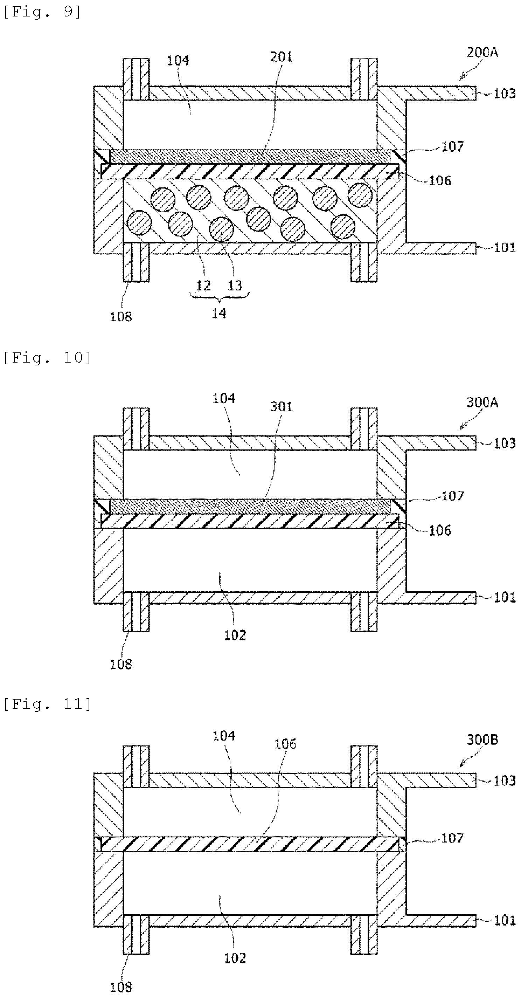

This section describes the method of generating power using the fluid hydrogen carrier described in the embodiment. Figure 9 shows the method of generating power using the fluid hydrogen carrier in the power generation device. As shown in Figure 9, the negative electrode void 102 and the positive electrode void 104 of the power generation device 200A shown in Figure 8 are filled with the hydrogen-filled fluid hydrogen carrier 14 and oxygen-containing substance 202, respectively.

### (OXYGEN-CONTAINING SUBSTANCE)

The oxygen-containing substance 202 only needs to contain oxygen, and may be air, or a liquid containing a large amount of oxygen dissolved in perfluorocarbon and surfactant. In addition, humidified oxygen or air may be used. When using air, a device that removes or adsorbs carbon dioxide from the air may be connected.

When a load is connected to the negative electrode current collector 101 and the positive electrode current collector 103 in a power generation device 200A, the positive electrode current collector 103 and the oxygen reduction electrode 201 are electrically connected, so in the oxygen reduction electrode, electrons are given to oxygen (reduction) and hydroxide ions (OH⁻) are generated by consuming water, as shown in the following formula (3).

O₂ + 4e⁻ + 2H₂O → 40H⁻... (3)

In the embodiment, part of the negative electrode current collector 101 is electrically connected to the hydrogen filled fluid hydrogen carrier 14. Therefore, when a load is connected to the negative electrode current collector 101 and the positive electrode current collector 103, as shown in the following equation (4), hydrogen is desorbed from the hydrogen-filled hydrogen storage alloy 13 in the hydrogen-filled fluid hydrogen carrier 14, and electrons can be extracted.

4MH + 4OH⁻ → 4M + 4H₂O + 4e⁻ · · · (4)

(In the formula, M is the hydrogen storage alloy 11.)

In addition, in the embodiment, part of the hydrogen-filled fluid hydrogen carrier 14 is ionically connected to the ion-permeable membrane 106, and part of the oxygen reduction electrode 201 is ionically connected to the ion-permeable membrane 106, so the hydroxide ions generated at the oxygen reduction electrode 201 can quickly move to the surface of the hydrogen-filled fluid hydrogen carrier 14. Therefore, reactions (3) and (4) can be continuously generated.

Using the above method, in thes embodiment, it is possible to generate power by connecting a load between the negative electrode current collector 101 and the positive electrode current collector 103 in the power generation device 200A, and extracting hydrogen from the hydrogen-filled hydrogen storage alloy 13 in the hydrogen-filled fluid hydrogen carrier 14.

In addition, in the embodiment, by providing the joint 108, it is possible to inject or discharge the hydrogen-filled fluid hydrogen carrier 14 and the oxygen-containing substance 202 from outside the power generation device 200A. By performing power generation operations while flowing the hydrogen-filled fluid hydrogen carrier 14 and oxygen-containing substance 202, it is possible to perform power generation for long periods of time and at high capacity.

As shown above, the power generation device 200A contains the negative electrode current collector 101, the negative electrode void 102, the positive electrode current collector 103, the positive electrode void 104, the oxygen reduction electrode 201, and the ion permeable membrane 10 6, by connecting a load between the negative electrode current collector 101 and the positive electrode current collector 103, it is possible to extract hydrogen from the hydrogen-filled hydrogen storage alloy 13 in the hydrogen-filled fluid hydrogen carrier 14 and generate electricity.

### <HYDROGEN FILING AND POWER GENERATION DEVICE USING FLUID HYDROGEN CARRIER>

According to the embodiment, a hydrogen filling and power generation device that can perform hydrogen filling and power generation in a single device can be provided. The embodiment describes a hydrogen filling and power generation device that uses a fluid hydrogen carrier. Figure 10 shows a hydrogen filling and power generation device. As shown in Figure 10, the hydrogen filling and power generation device 300A that uses a fluid hydrogen carrier contains a negative electrode current collector 101, a negative electrode void 102 that can be filled with a fluid hydrogen carrier, a positive electrode collector 103, a positive electrode void 104, a bifunctional electrode 301 capable of oxygen reduction and oxygen generation, an ion permeable membrane 106, a seal material 107, and a joint 108.

### (BIFUNCTIONAL ELECTRODE CAPABLE OF OXYGEN REDUCTION AND OXYGE EVOLUTION)

The bifunctional electrode 301 only needs to have both oxygen reduction activity and oxygen evolution activity on its surface. The bifunctional electrode 301 may be composed of a single type of catalyst having both oxygen reduction activity and oxygen evolution activity, or it may be composed of two or more different types of catalysts for oxygen reduction and oxygen evolution. The catalyst may be used as a single unit, or it may be supported on a substrate. A catalyst layer comprising a catalyst and an ion-conductive binder may be coated onto a substrate such as nickel mesh, nickel porous material, carbon paper, titanium mesh, titanium perforated metal, stainless steel mesh, stainless steel porous material, or a positive electrode current collector 103.

Examples of catalysts that have both oxygen reduction and oxygen evolution activity include nickel compounds, cobalt compounds, pyrochlore-type bismuth iridium oxides, and pyrochlore-type bismuth ruthenium mixed oxides. A single type of catalyst or a combination of two or more types of catalysts may be used.

The dual electrode 301 is provided so that part of it is ionically connected to the ion permeable membrane 106, and part of it is electrically connected to the positive electrode current collector 103, and it is sufficient if it is in contact with the positive electrode void 104. Ionic connection means that there is no interruption in ionic conduction between the oxygen reduction electrode 201 and the ion permeable membrane 106.

Due to the structure, electrons move from the positive electrode current collector 103 to the dual electrode 301, and these electrons reduce oxygen to generate hydroxide ions, and electrons move from the positive electrode current collector to the dual electrode 301, and these electrons oxidize the hydroxide ions supplied from the ion permeable membrane 106 to generate oxygen.

The other components are the same as those of the hydrogen filling device, so we will omit a detailed explanation.

### (HYDROGEN FILLING AND POWER GENERATION METHOD USING FLUID HYDROGEN CARRIER)

The hydrogen filling and power generation method uses the same mechanism as the hydrogen filling and power generation devices, so a detailed explanation is omitted.

As shown in the figure, the hydrogen filling and power generation device 300A contains a negative electrode current collector 101, a negative electrode void 102, a positive electrode current collector 103, a positive electrode void 104, a bifunctional electrode 301, and an ion permeable membrane 106. The hydrogen filling and power generation device 300A can reduce oxygen and generate hydroxide ions by transferring electrons from the positive electrode current collector 103 to the dual electrode 301, and it can also generate oxygen by oxidizing hydroxide ions supplied from the ion permeable membrane 106 by transferring electrons from the positive electrode current collector to the dual electrode 301.

### <SECOND HYDROGEN FILLING AND POWER GENERATION DEVICE USING FLUID HYDROGEN CARRIER>

According to the embodiment, a hydrogen filling and power generation device can be provided that can perform hydrogen filling and power generation in a single device without oxygen generation or oxygen reduction. This section describes the second hydrogen filling and power generation device using a fluid hydrogen carrier according to the embodiment. Figure 11 shows the second hydrogen filling and power generation device. As shown in Figure 11, the second hydrogen filling and power generation device 300B that uses a fluid hydrogen carrier contains a negative electrode current collector 101, a negative electrode void 102 that can be filled with a fluid hydrogen carrier, a positive electrode current collector 103, a positive electrode void 104, an ion permeable membrane 106, a seal material 107, and a joint 108.

As shown in Figure 10, this is a structure that removes the bifunctional electrode 301 of the hydrogen filling and power generation device 300A, and as the rest of the structure is the same as that of the hydrogen filling and power generation device 300A, a detailed explanation is omitted.

### <SECOND HYDROGEN FILLING AND POWER GENERATION METHOD USING FLUID HYDROGEN CARRIER>

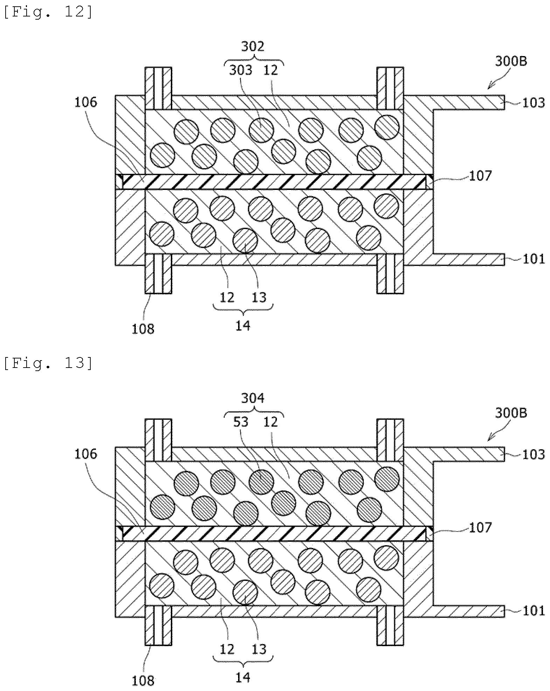

This section describes the hydrogen filling and power generation method. Figure 12 shows the hydrogen filling method. As shown in Figure 12, the negative electrode void 102 and the positive electrode void 104 of the second hydrogen filling and power generation device 300B shown in Figure 11 are filled with the fluid hydrogen carrier 10 and the slurry containing nickel hydroxide 302, respectively. Figure 13 shows the method of generating power. As shown in Figure 13, the structure is such that the negative electrode void 102 and the positive electrode void 104 of the second hydrogen filling and power generation device 300B shown in Figure 11 are filled with the hydrogen-filled fluid hydrogen carrier 14 and the slurry containing nickel hydroxide 304, respectively.

### (SLURRY CONTAING NICKEL HYDROXIDE)

The slurry containing nickel hydroxide 302 of the embodiment of the present invention is a mixture that contains the nickel hydroxide containing substance 303 and the alkaline electrolyte 12, and may also contain other additive components such as dispersants, thickeners, surfactants, and electrically conductive fillers in any suitable amount. The slurry containing nickel hydroxide 302 contains the nickel hydroxide containing substance 303 dispersed in the alkaline electrolyte 12.

The nickel hydroxide containing substance 303 contained in the slurry containing nickel hydroxide 302 of the embodiment can be reversibly oxidized and reduced by oxidizing it to nickel oxyhydroxide and then reducing the nickel oxyhydroxide to nickel hydroxide.

In addition, the nickel hydroxide containing substance 303 contained in the slurry containing nickel hydroxide 302 of the embodiment is preferably also contains cobalt. Nickel hydroxide has poor electrical conductivity, and adding cobalt improves electrical conductivity of its.

The shape of the nickel hydroxide containing substance 303 is not particularly limited, and can be, for example, spherical, ellipsoidal, spindle-shaped, crushed, plate-shaped, or columnar.

The average particle diameter of nickel hydroxide containing substance 303 is 50 µm or less. If it is larger than 50 µm, problems such as the nickel hydroxide containing substance 303 clogging the flow path or sedimentation too quickly may occur during the process of filling the slurry containing nickel hydroxide 302 with hydrogen and filling it into the power generation device. The average particle diameter of the nickel hydroxide containing substance 303 can be set as appropriate within the range of 50 µm or less, for example, 10 nm to 50 µm is preferable, 20 nm to 25 µm is more preferable, and 50 nm to 20 µm is even more preferable. If the average particle diameter is too small, the viscosity of the slurry containing nickel hydroxide 302 will increase, which will hinder fluidity. If the average particle diameter of the nickel hydroxide containing substance 303 is within the above-mentioned preferred range, the nickel hydroxide containing substance 303 can maintain a contact area with the alkaline electrolyte 12 while being well dispersed in the alkaline electrolyte 12.

### (HYDROGEN FILLING METHOD USING SECOND HYDROGEN FILLING AND POWER GENERATION DEVICE)

When a negative potential is applied to the negative electrode current collector 101 and a positive potential is applied to the positive electrode current collector 103 in the second hydrogen filling and power generation device 300B, since the positive electrode current collector 103 and the slurry containing nickel hydroxide 302 are electrically connected, electrons are drawn out of the nickel hydroxide (Ni(OH)₂) in the nickel hydroxide containing substance 303, and nickel oxyhydroxide (NiOOH) and water are produced, as shown in the following formula (5).

Ni(OH)₂ + OH- → NiOOH + H₂O + e- ... (5)

In the embodiment, part of the negative electrode current collector 101 is electrically connected to the fluid hydrogen carrier 10. Therefore, when a negative potential is applied to the negative electrode current collector 101 and a positive potential is applied to the positive electrode current collector 103, as shown in the following equation (2), hydrogen is stored into the hydrogen storage alloy 11 due to a reaction between the water in the hydrogen-filled fluid hydrogen carrier 14 and

4M + 4H₂O + 4e⁻ → 4MH + 4OH⁻ ... (2)

(In the formula, M is the hydrogen storage alloy 11.)

In addition, in the embodiment, part of the hydrogen-filled fluid hydrogen carrier 14 is ionically connected to the ion-permeable membrane 106, and part of the oxygen-generating electrode 105 is ionically connected to the ion-permeable membrane 106, so the generated hydroxide ions can quickly move to the surface of the slurry containing nickel hydroxide 302. Therefore, reactions (5) and (2) can be continuously generated.

In the embodiment, by applying a negative potential to the negative electrode current collector 101 and a positive potential to the positive electrode current collector 103, it is possible to fill the hydrogen storage alloy 11 in the fluid hydrogen carrier 10 (see Figure 7) with hydrogen in the second hydrogen filling and power generation device 300B.

In addition, in the embodiment, by providing the joint 108, it is possible to inject or discharge the hydrogen-filled fluid hydrogen carrier 14 and the alkaline electrolyte 12 from outside the hydrogen filling device 100A. By performing the hydrogen filling operation while flowing the fluid hydrogen carrier 10 and the alkaline electrolyte 12, it is possible to continuously fill a large amount of the fluid hydrogen carrier 10 with hydrogen.

As shown here, the second hydrogen filling and power generation device 300B contains the negative electrode current collector 101, the negative electrode void 102, the positive electrode current collector 103, the positive electrode void 104, and the ion permeable membrane 106 , by applying a negative voltage to the negative electrode current collector 101 and a positive voltage to the positive electrode current collector 103, it is possible to fill the hydrogen storage alloy 11 in the fluid hydrogen carrier 10 (see Figure 7) with hydrogen. Therefore, the second hydrogen filling and power generation device 300B can perform hydrogen filling without the bifunctional electrode 301 and without oxygen generation and oxygen reduction, as in the hydrogen filling and power generation device 300A.

### (POWER GENERATION METHOD USING SECOND HYDROGEN FILLING AND POWER GENERATION DEVICE)

In the second hydrogen filling and power generation device 300B, when a load is connected to the negative electrode current collector 101 and the positive electrode current collector 103, the positive electrode current collector 103 and the slurry containing nickel hydroxide 3 04 are electrically connected, so, as shown in the following formula (6), by giving electrons to nickel oxyhydroxide (NiOOH) and water, nickel hydroxide (Ni(OH)₂) and hydroxide ions are produced.

NiOOH + H₂O + e⁻ → Ni(OH)₂ + OH⁻ ... (6)

In the embodiment, part of the negative electrode current collector 101 is electrically connected to the hydrogen-filled fluid hydrogen carrier 14. Therefore, when a load is connected to the negative electrode current collector 101 and the positive electrode current collector 103, as shown in the following equation (4), hydrogen is desorbed from the hydrogen-filled hydrogen storage alloy 13 in the hydrogen-filled fluid hydrogen carrier 14, and electrons can be extracted.

4MH + 40H⁻ → 4M + 4H₂O + 4e⁻ · · · (4)

(In the formula, M is the hydrogen storage alloy 11. )

In addition, in the embodiment, part of the hydrogen-filled fluid hydrogen carrier 14 is ionically connected to the ion-permeable membrane 106, and part of the oxygen reduction electrode 201 is ionically connected to the ion-permeable membrane 106, so the hydroxide ions produced by Formula (6) can quickly move to the surface of the hydrogen-filled fluid hydrogen carrier 14. Therefore, the reactions in Equations (6) and (4) can be continuously generated.

In the embodiment, by connecting a load between the negative electrode current collector 101 and the positive electrode current collector 103 in the second hydrogen filling and power generation device 300B, it is possible to extract hydrogen from the hydrogen-filled hydrogen storage alloy 13 in the hydrogen-filled fluid hydrogen carrier 14 and generate power.

In addition, in the embodiment, by providing the joint 108, it is possible to inject or discharge the hydrogen-filled fluid hydrogen carrier 14 and the slurry containing nickel hydroxide 304 from outside the second hydrogen filling and power generation device 300B. It is possible to generate large amounts of electricity for long periods of time by performing power generation operations while flowing the hydrogen-filled fluid hydrogen carrier 14 and the slurry containing nickel hydroxide 304.

As shown above, the second hydrogen filling and power generation device 300B contains the negative electrode current collector 101, the negative electrode void 102, the positive electrode current collector 103, the positive electrode void 104, and the ion permeable membrane 106 , by connecting a load between the negative electrode current collector 101 and the positive electrode current collector 103, it is possible to extract hydrogen from the hydrogen-filled hydrogen storage alloy 13 in the hydrogen-filled fluid hydrogen carrier 14 and generate electricity. Therefore, the second hydrogen filling and power generation device 300B can generate power without the bifunctional electrode 301 and without oxygen generation and oxygen reduction, as in the hydrogen filling and power generation device 300A.

### <SECOND HYDROGEN FILLING DEVICE FOR FLUID HYDROGEN CARRIER>

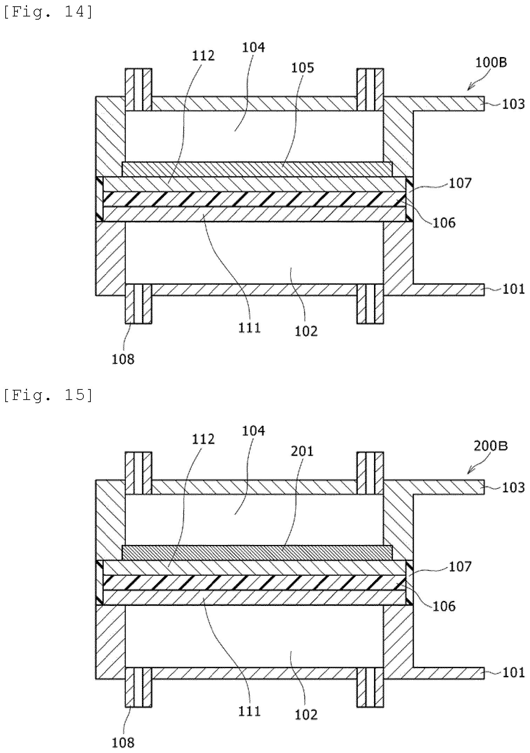

This section describes the second hydrogen filling device for the fluid hydrogen carrier. Figure 14 shows the second hydrogen filling device. As shown in Figure 14, the second hydrogen filling device 100B contains a negative electrode current collector 101, a negative electrode void 102 that can be filled with fluid hydrogen carrier, a positive electrode current collector 103, a positive electrode void 10 4, an oxygen-generating electrode 105, an ion-permeable membrane 106, a seal material 107, a joint 108, a porous negative electrode current collector 111 and a porous positive electrode current collector 112.

### (PORUS NAGATIVE ELECTRODE CURRENT COLLECTOR)

The porous negative electrode current collector 111 has a through-hole in the thickness direction and is provided so that it is in contact with the ion permeable membrane 106. The presence of through holes in the thickness direction enables the mass transfer of hydroxide ions generated when hydrogen is charged into the fluid hydrogen carrier. In addition, positioning it so that it is in contact with the ion permeable membrane 106 reduces the distance to the positive electrode collector, thereby reducing cell resistance. Furthermore, it is possible to suppress the deformation of the ion permeable membrane 106 during actual use.

The porous negative electrode current collector 111 only needs to be porous and electrically conductive. Examples of the porous negative electrode current collector comprise nickel mesh, nickel foam, nickel porous material, nickel non-woven fabric, carbon non-woven fabric, carbon paper, stainless steel mesh, stainless steel foam, stainless steel porous material, stainless steel non-woven fabric, etc.

### (PORUS POSITIVE ELECTRODE CURRENT COLLECTOR)

The porous positive electrode current collector 112 has a through-hole in the thickness direction and is provided to be in contact with the ion permeable membrane 106. The through-hole in the thickness direction enables mass transfer of hydroxide ions generated when hydrogen is charged into the fluid hydrogen carrier. In addition, by arranging it so that it is in contact with the ion permeable membrane 106, the distance to the positive electrode collector is shortened, and cell resistance can be reduced. Furthermore, it is possible to suppress the deformation of the ion permeable membrane 106 during actual use.

The porous positive electrode current collector 111 only needs to be porous and electrically conductive. Examples of the porous positive electrode current collector comprise nickel mesh, nickel foam, nickel porous material, nickel non-woven fabric, carbon non-woven fabric, carbon paper, stainless steel mesh, stainless steel foam, stainless steel porous material, stainless steel non-woven fabric, etc.

Other than the use of the porous negative electrode current collector 111 and the porous positive electrode current collector 112, the second hydrogen filling device has the same configuration as the first hydrogen filling device.

As shown above, the second hydrogen filling device 100B contains the porous negative electrode current collector 111 and the porous positive electrode current collector 112, as does the hydrogen filling device 100A. The second hydrogen filling device 100B can fill hydrogen into the hydrogen storage alloy 11 in the fluid hydrogen carrier 10 (see Figure 7) by applying a negative voltage to the negative electrode current collector 101 and a positive voltage to the positive electrode current collector 103, in the same way as the hydrogen filling device 100A.

### <SECOND POWER GENERATION DEVICE FOR FLUID HYDROGEN CARRIER>

This section describes the second power generation device for the fluid hydrogen carrier of the embodiment. Figure 15 shows the second power generation device. As shown in Figure 15, the second power generation device 200B contains a negative electrode current collector 101, a negative electrode void 102 that can be filled with a fluid hydrogen carrier, a positive electrode current collector 103, a positive electrode void 104, an oxygen reduction electrode 201, an ion permeable membrane 106, a seal material 107, a joint 108, a porous negative electrode current collector 111 and a porous positive electrode current collector 112.

The structure is the same as the first power generation device, except that it uses a porous negative electrode current collector 111 and a porous positive electrode current collector 112.

As shown above, the second power generation device 200B contains the porous negative electrode current collector 111 and the porous positive electrode current collector 112, as does the power generation device 200A. In this way, the second power generation device 200B can generate power by extracting hydrogen from the hydrogen-filled hydrogen storage alloy 13 in the hydrogen-filled fluid hydrogen carrier 14, in the same way as the power generation device 200A, by connecting a load between the negative electrode current collector 101 and the positive electrode current collector 103.

### <THIRD HYDROGEN FILLING AND POWER GENERATION DEVICE FOR FLUID HYDROGEN CARRIER >

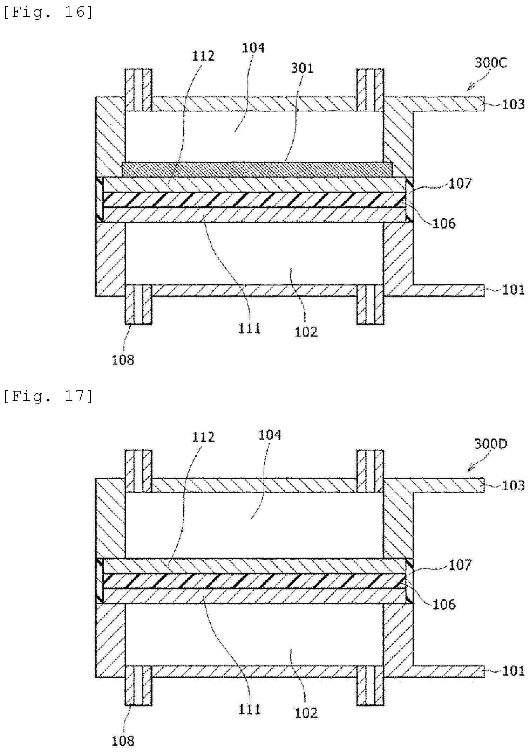

This section describes a third hydrogen filling and power generation device that uses the fluid hydrogen carrier of the embodiment. Figure 16 shows the third hydrogen filling and power generation device. As shown in Figure 16, the third hydrogen filling and power generation device 300C contains a negative electrode current collector 101, a negative electrode void 102 that can be filled with a fluid hydrogen carrier, a positive electrode current collector 103, a positive electrode void 104, a bifunctional electrode 301, an ion-permeable membrane 106, seal material 107, a joint 108, a porous negative electrode current collector 111, and a porous positive electrode current collector 112.

Other than the use of the porous negative electrode current collector 111 and the porous positive electrode current collector 112, it is the same as the first hydrogen filling and power generation device.

Therefore, the third hydrogen filling and power generation device 300C contains the porous negative electrode current collector 111 and the porous positive electrode current collector 112, as in the hydrogen filling and power generation device 300A. The third hydrogen filling and power generation device 300C, like the hydrogen filling and power generation device 300A, reduces oxygen by transferring electrons from the positive electrode current collector 103 to the dual electrode 301, and at the same time, by moving electrons from the positive electrode current collector to the dual electrode 301, it is possible to oxidize the hydroxide ions supplied from the ion permeable membrane 106 and generate oxygen.

### <FOURTH HYDROGEN FILLING AND POWER GENERATION DEVICE FOR FLUID HYDROGEN CARRIER >

This section describes the fourth hydrogen filling and power generation device that uses the fluid hydrogen carrier of the embodiment. Figure 17 shows the fourth hydrogen filling and power generation device. As shown in Figure 17, the fourth hydrogen filling and power generation device 300D contains a negative electrode current collector 101, a negative electrode void 102 that can be filled with a fluid hydrogen carrier, a positive electrode current collector 103, a positive electrode void 104, an ion permeable membrane 106, a seal material 107, a joint 108, a porous negative electrode current collector 111, and a porous positive electrode current collector 112.

Other than the use of the porous negative electrode current collector 111 and the porous positive electrode current collector 112, it is the same as the second hydrogen filling and power generation device.

Accordingly, the fourth hydrogen filling and power generation device 300D contains the porous negative electrode current collector 111 and the porous positive electrode current collector 112 in the second hydrogen filling and power generation device 300B. The fourth hydrogen filling and power generation device 300D can fill hydrogen into the hydrogen storage alloy 11 in the fluid hydrogen carrier 10 (see Figure 7) by applying a negative voltage to the negative electrode current collector 101 and a positive voltage to the positive electrode current collector 103, in the same way as the second hydrogen filling and power generation device 300B. In addition, the fourth hydrogen filling and power generation device 300D can generate power by extracting hydrogen from the hydrogen-filled hydrogen storage alloy 13 in the hydrogen-filled fluid hydrogen carrier 14 by connecting a load between the negative electrode current collector 101 and the positive electrode current collector 103. Therefore, the fourth hydrogen filling and power generation device 300D, like the second hydrogen filling and power generation device 300B, does not have a bifunctional electrode 301 and can perform hydrogen filling and power generation without generating oxygen or reducing oxygen.

### <THIRD HYDROGEN FILLING DEVICE FOR FLUID HYDROGEN CARRIER>

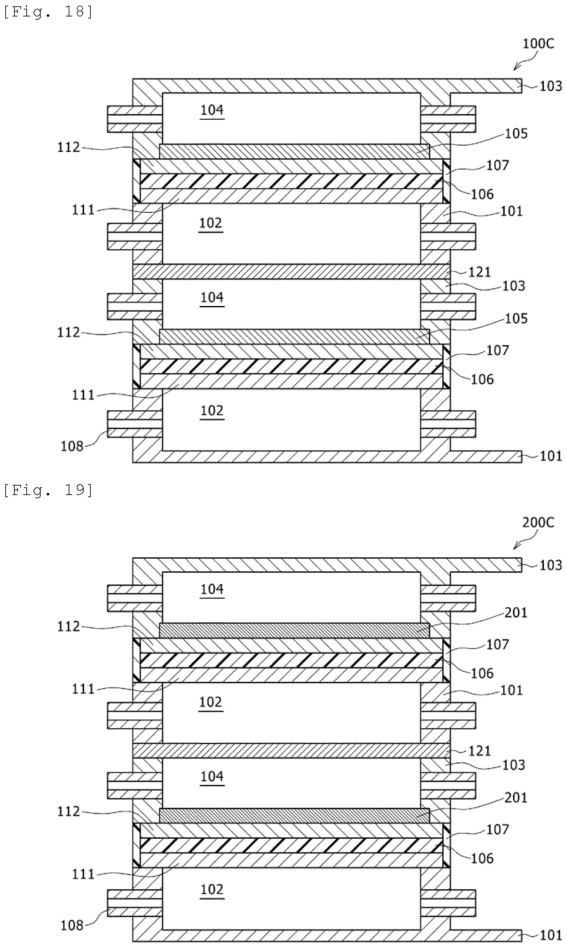

This section describes the third hydrogen filling device for the fluid hydrogen carrier. Figure 18 shows the third hydrogen filling device. As shown in Figure 18, the third hydrogen filling device 100C is a structure in which two second hydrogen filling devices are stacked via a bipolar plate 121, and the components other than the bipolar plate 121 are the same as those of the second hydrogen filling device.

In this embodiment, an example of a structure in which two devices are connected in series is described, but the number of devices connected in series may be more than two, and is not limited to this. By connecting two or more hydrogen filling devices in series, it is possible to generate a voltage that is the number of times the number of devices connected. In other words, if the amount of energy is the same, the current can be reduced, and heat generation can be suppressed.

### (BISPOLAR PLATE)

A bipolar plate 121 can be used when connecting two or more hydrogen filling devices in series, and it serves the function of both the negative electrode current collector 101 and the positive electrode current collector 103. In other words, the materials used for the bipolar plate are not particularly limited, as long as they are used for negative electrode current collectors 101 and positive electrode current collectors 103.

Therefore, even if the third hydrogen filling device 100C contains multiple (in this embodiment, two) second hydrogen filling devices 100B via bipolar plates 121, it is possible to fill the hydrogen storage alloy 11 in the fluid hydrogen carrier 10 (see Figure 7) with hydrogen by applying a negative potential to the negative current collector 101 and a positive potential to the positive current collector 103, in the same way as the second hydrogen filling device 100B.

### <THIRD POWER GENERATION DEVICES USING FLUID HYDROGEN CARRIER>

This section describes a third power generation device that uses the fluid hydrogen carrier described in the embodiment. Figure 19 shows a third power generation device. As shown in Figure 19, the third power generation device 200C is a structure in which two second power generation devices are stacked via bipolar plates 121, and the components other than the bipolar plates 121 are the same as those of the second power generation device.

In the embodiment, an example of a structure in which two devices are connected in series is described, but the number of devices connected in series may be more than two, and is not limited to this. By connecting two or more hydrogen filling devices in series, it is possible to generate a voltage that is the number of times the number of devices connected. In other words, if the amount of energy is the same, the current can be reduced, and heat generation can be suppressed.

Therefore, even if the third power generation device 200C contains multiple (in this embodiment, two) second power generation devices 200B via bipolar plates 121, it is possible to extract hydrogen from the hydrogen-filled hydrogen storage alloy 13 in the hydrogen-filled fluid hydrogen carrier 14 and generate electricity by connecting a load between the negative electrode current collector 101 and the positive electrode current collector 103, in the same way as second power generation device 200B.

### <FIFTH HYDROGEN FILLING AND POWER GENERATION DEVICE FOR FLUID HYDROGEN CARRIER>

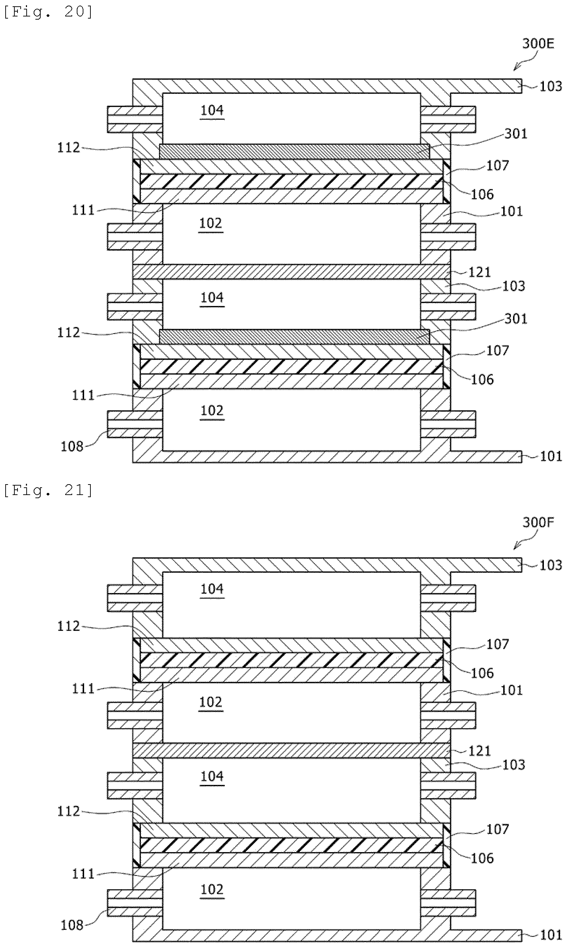

This section describes the fifth hydrogen filling and power generation device that uses the fluid hydrogen carrier of the embodiment. Figure 20 shows the fifth hydrogen filling and power generation device. As shown in Figure 20, the fifth hydrogen filling and power generation device 300E is a structure in which two third hydrogen filling and power generation devices are stacked via bipolar plates 121, and the components other than the bipolar plates 121 are the same as those of the third hydrogen filling and power generation device.

In the embodiment, an example of a structure in which two devices are connected in series is described, but the number of devices connected in series may be more than two, and is not limited to this. By connecting two or more hydrogen filling devices in series, it is possible to generate a voltage that is the number of times the number of devices connected. In other words, if the amount of energy is the same, the current can be reduced, and heat generation can be suppressed.

Therefore, the fifth hydrogen filling and power generation device 300E contains multiple (in this embodiment, two) third hydrogen filling and power generation devices 300C in series via bipolar plates 121. This allows the hydrogen filling of the hydrogen storage alloy 11 in the fluid hydrogen carrier 10 (see Figure 7) and the generation of electricity by drawing hydrogen from the hydrogen-filled hydrogen storage alloy 13 in the hydrogen-filled fluid hydrogen carrier 14 to be carried out with the same amount of energy while suppressing heat generation.

### <SIXTH HYDROGEN FILLING AND POWER GENERATION DEVICE FOR FLUID HYDROGEN CARRIER>

This section describes the sixth hydrogen filling and power generation device that uses the fluid hydrogen carrier of this embodiment. Figure 21 shows the sixth hydrogen filling and power generation device. As shown in Figure 21, the sixth hydrogen filling and power generation device 300E is a structure in which two fourth hydrogen filling and power generation devices are stacked via bipolar plates 121, and the components other than the bipolar plates 121 are the same as those of the fourth hydrogen filling and power generation device.

In the embodiment, an example of a structure in which two devices are connected in series is described, but the number of devices connected in series may be more than two, and is not limited to this. By connecting two or more hydrogen filling devices in series, it is possible to generate a voltage that is the number of times the number of devices connected. In other words, if the amount of energy is the same, the current can be reduced, and heat generation can be suppressed.

### <HYDROGEN FILLING AND POWER GENERATING SYSTEM>

This section describes a hydrogen filling and power generation system that uses the fluid hydrogen carrier 10 of the embodiment. The hydrogen filling and power generation system can be applied to the hydrogen filling device 100A, the power generation device 200A, the hydrogen filling and power generation device 300A, the second hydrogen filling and power generation device 300B, the second hydrogen filling device 100B, the second power generation device 200B, the third hydrogen filling and power generation device 300C, the fourth hydrogen filling and power generation device 300D, the third hydrogen filling device 100C, the third power generation device 200C, the fifth hydrogen filling and power generation device 300E, and the sixth hydrogen filling and power generation device 300E.
In the embodiment, we will explain using the sixth hydrogen filling and power generation device 300E. In this embodiment, the system using the sixth hydrogen filling and power generation system 300E is explained.

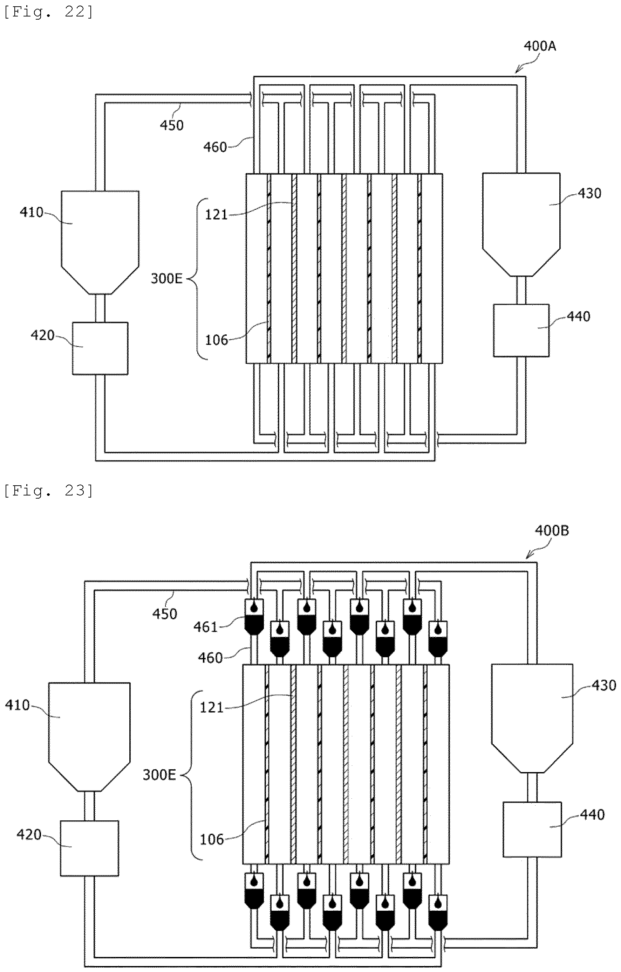

Figure 22 shows the hydrogen filling and power generation system. As shown in Figure 22, the hydrogen filling and power generation system 400A is contains the sixth hydrogen filling and the power generation device 300E, which is a series connection of four hydrogen filling and power generation devices, a negative electrode tank 410, a negative electrode pressurization/depressurization device 420, a positive electrode tank 430, a positive electrode pressurization/depressurization device 440, an inter-device flow path 450, and a device flow path 460. The inter-device flow path 450 and the device flow path 460 may be provided outside the hydrogen filling and power generation device, or built into the hydrogen filling and power generation device.

### (NEGATIVE ELECTRODE TANK)

The negative electrode tank 410 is used to store the fluid hydrogen carrier 10. It may be formed from a material that is not corroded or dissolved by the alkaline electrolyte 12 contained in the fluid hydrogen carrier 10. The material that makes up the negative electrode tank 410 is not particularly limited, but for example, it may be made from nickel, stainless steel, polyethylene, polypropylene, acrylic, polyvinyl chloride, ABS resin, polyoxymethylene, polycarbonate, polystyrene, epoxy resin, polytetrafluoroethylene, polyvinylidene fluoride, polyetheretherketone, etc. These may be used individually or in combination.

In addition, a coating layer may be formed on the inner wall of the negative electrode tank 410 using a coating agent to improve the wear resistance of the inner wall of the negative electrode tank 410. As coating agents, for example, diamond-like carbon (DLC), polytetrafluoroethylene, melamine resin, urea resin, polyacetal, polyphenylene sulfide, ultra-high-molecular-weight polyethylene, etc. can be used. These can be used alone or in combination with two or more types. In addition, because gas is generated during charging and discharging, the internal pressure of the negative electrode tank 410 rises, and in order to prevent damage to the hydrogen filling and power generation system 400A, a pressure control valve, etc., not shown in the figure, may be provided inside the negative electrode tank 410. In addition, one or more cocks that can be used to discharge the fluid hydrogen carrier 10 from the negative electrode tank 410 or inject fluid hydrogen carrier 10 into the negative electrode tank 410 may be provided.

### (NEGATIVE PRESSURIZATION/DEPRESSURIZATION DEVICE)

The negative electrode pressurization/depressurization device 420 only needs to be able to pump fluid hydrogen carrier 10, and examples include centrifugal pumps, propeller pumps, reciprocating pumps, rotary pumps, etc. Examples of centrifugal pumps include centrifugal pumps and turbine pumps. Examples of propeller pumps include axial flow pumps, diagonal flow pumps, and cascade pumps. Examples of reciprocating pumps include piston pumps, flange pumps, diaphragm pumps, tube pumps, and wing pumps. Examples of rotary pumps include gear pumps, eccentric pumps, and screw pumps. These can be used individually or in combination.

### (POSITIVE ELECTRODE TANK)

The positive electrode tank 430 may or may not be used depending on the application. If it is necessary to store alkaline electrolyte 12, slurry containing nickel hydroxide 302, or slurry containing nickel oxyhydroxide 304, it may be made of a material that is not corroded or dissolved by alkaline electrolyte 12. The material used to construct the positive electrode tank 430 is not particularly limited, but may include, for example, nickel, stainless steel, polyethylene, polypropylene, acrylic, polyvinyl chloride, ABS resin, polyoxymethylene, polycarbonate, polystyrene, epoxy resin, polytetrafluoroethylene, polyvinylidene fluoride, polyetheretherketone, etc. These may be used individually or in combination.

### (POSITIVE PRESSURIZATION/DEPRESSURIZATION DEVICE)

The positive electrode pressurization/depressurization device 440 is only required to be able to transport alkaline electrolyte 12, slurry containing nickel hydroxide 302, slurry containing nickel hydroxide 304, and oxygen-containing substance 202, and can be, for example, a centrifugal pump, propeller pump, reciprocating pump, rotary pump, etc. Examples of centrifugal pumps include centrifugal pumps and turbine pumps. Examples of propeller pumps include axial flow pumps, mixed flow pumps, and cascade pumps. Examples of reciprocating pumps include piston pumps, flange pumps, diaphragm pumps, tube pumps, and wing pumps. Examples of rotary pumps include gear pumps, eccentric pumps, and screw pumps. These can be used individually or in combination.

### (INTER-DEVICE FLOW PATH)

The inter-device flow path 450 is a flow path that is installed to transport/distribute fluid hydrogen carrier 10, alkaline electrolyte 12, slurry containing nickel hydroxide 302, slurry containing nickel hydroxide 304, and oxygen-containing substance 202 to each device when multiple devices are connected in series.

The material that makes up the inter-device flow path 450 is not particularly limited, but for example, it could be nickel, stainless steel, polyethylene, polypropylene, acrylic, polyvinyl chloride, ABS resin, polyoxymethylene, polycarbonate, polystyrene, epoxy resin, polytetrafluoroethylene, polyvinylidene fluoride, polyetheretherketone, stainless steel, nickel, carbon steel, etc. These may be used individually or in combination.

The shape of the inter-device flow path 450 is not particularly limited. It may be tubular, or it may be formed in a component within the hydrogen filling or power generation device.

### (DEVICE FLOW PATH)

The device flow path 460 is a flow path for transporting fluid hydrogen carrier 10, alkaline electrolyte 12, slurry containing nickel hydroxide 302, slurry containing nickel hydroxide 304, and oxygen containing substance 202, which have branched off from the inter-device flow path 450, to the negative electrode void 102 or positive electrode void 104 within the device.

The material that makes up the device flow path 460 is not particularly limited, but for example, it could be nickel, stainless steel, polyethylene, polypropylene, acrylic, polyvinyl chloride, ABS resin, polyoxymethylene, poly carbonate, polystyrene, epoxy resin, polytetrafluoroethylene, polyvinylidene fluoride, polyetheretherketone, stainless steel, nickel, carbon steel, etc. These may be used individually or in combination.

In order to ensure that the flow rate inside the device is distributed evenly between the stacked devices, it is better to have a smaller As value, as expressed in the following formula (7). Preferably, As should be less than 1, and more preferably, As should be less than 0.1, and even more preferably, As should be less than 0.01. As = [minimum cross-sectional area of device flow path 460] / [maximum cross-sectional area of inter-device flow path 450]

The fluid hydrogen carrier 10 of this invention is a liquid that is electrically conductive. In the hydrogen filling and power generation system 400A of the embodiment, the devices are connected in series, and a short-circuit current flows between the devices via the fluid hydrogen carrier 10 in the inter-device flow path 450 and the device flow path 460. This causes a decrease in energy efficiency.

In other words, between the hydrogen filling and power generation devices that are adjacent to each other on either side of the bipolar plate 121, there must be a region composed of insulating material in the path of the continuous inter-device flow path 450 and device flow path 460 (broken line in Figure 22), which is the short-circuit current path of the hydrogen filling and power generation system 400A of this embodiment, and the shortest distance of the flow path composed of the insulating material must be 50 cm or more.

The hydrogen filling and power generation system 400A has the above-mentioned structure, which allows it to reduce short-circuit currents and perform high-energy-efficiency hydrogen filling and power generation.

### <SECOND HYDROGEN FILLING AND POWER GENERATING SYSTEM>

This section describes a second hydrogen filling and power generation system that uses the fluid hydrogen carrier 10 of the embodiment. The second hydrogen filling and power generation system can be applied to the hydrogen filling device 100A, the power generation device 200A, the hydrogen filling and power generation device 300A, the second hydrogen filling and power generation device 300B, the second hydrogen filling device 100B, the second power generation device 200B, the third hydrogen filling and power generation device 300C, the fourth hydrogen filling and power generation device 300D, the third hydrogen filling device 100C, the third power generation device 200C, the fifth hydrogen filling and power generation device 300E, and the sixth hydrogen filling and power generation device 300E.
In the embodiment, we will explain using the sixth hydrogen filling and power generation device 300E. In this embodiment, the system using the sixth hydrogen filling and power generation system 300E is explained.

Figure 23 shows the second hydrogen filling and power generation system. As shown in Figure 23, the second hydrogen filling and power generation system 400B has the same structure as the first hydrogen filling and power generation system, except that a liquid dividing device 461 is provided in the device flow path 460.

### (LIQUID DIVIDING DEVICE)

The liquid dividing device 461 is provided in the device flow path 460, which is a short current path. The liquid dividing device 461 is provided to break the continuity of the fluid hydrogen carrier 10, or slurry containing nickel hydroxide 302 and slurry containing nickel hydroxide 304, which causes the short-circuit. The term "dividing" means interrupting the short-circuit by introducing air, nitrogen, oxygen or other gases with low electrical conductivity into the continuous path of the fluid hydrogen carrier 10 or slurry containing nickel hydroxide 302 and slurry containing nickel hydroxide 304. There are no limitations on the means of interrupting the short-circuit by introducing gas, but for example, a structure that drips fluid hydrogen carrier 10 or slurry containing nickel hydroxide 302 and slurry containing nickel hydroxide 304, such as the drip chamber used in medical treatment, can be used. By dripping an electrically conductive fluid, the short-circuit is interrupted and no short-circuit current flows.

Therefore, the second hydrogen filling and power generation system 400B, having the above-mentioned structure, can reduce short-circuit currents in the same way as the hydrogen filling and power generation system 400A, and can perform hydrogen filling and power generation with high energy efficiency.

### <THIRD HYDROGEN FILLING AND POWER GENERATING SYSTEM>

This section describes a third hydrogen filling and power generation system that uses the fluid hydrogen carrier 10 of the embodiment. The third hydrogen filling and power generation system can be applied to the hydrogen filling device 100A, the power generation device 200A, the hydrogen filling and power generation device 300A, the second hydrogen filling and power generation device 300B, the second hydrogen filling device 100B, the second power generation device 200B, the third hydrogen filling and power generation device 300C, the fourth hydrogen filling and power generation device 300D, the third hydrogen filling device 100C, the third power generation device 200C, the fifth hydrogen filling and power generation device 300E, and the sixth hydrogen filling and power generation device 300E. In the embodiment, we will explain using the sixth hydrogen filling and power generation device 300E. In this embodiment, the system using the sixth hydrogen filling and power generation system 300E is explained.

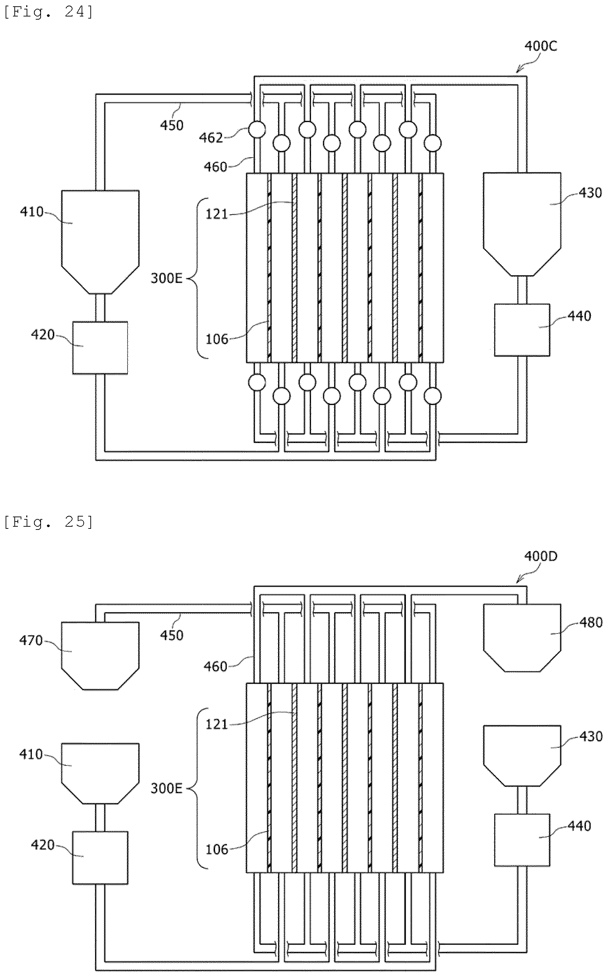

Figure 24 shows a third hydrogen filling and power generation system. As shown in Figure 24, the third hydrogen filling and power generation system 400C has a structure similar to the first hydrogen filling and power generation system, except that it has a valve 462 that can be opened and closed (openable valve) in the device flow path 460.

### (OPENABLE VALVE)

The openable valve 462 is provided in the device flow path 460, which is a short current path, and is provided to divide the continuity of the fluid hydrogen carrier 10 or the slurry containing nickel hydroxide 302 and the slurry containing nickel hydroxide 304, which causes the short-circuit. The term "dividing" means that the continuous path of the fluid hydrogen carrier 10 or slurry containing nickel hydroxide 302 and slurry containing nickel hydroxide 304, which has electrical conductivity, is divided by a valve. Also, at the same time, only the valve connected to one of the devices connected in series can be opened at the same time.

Therefore, the third hydrogen filling and power generation system 400C, having the above-mentioned structure, can reduce short-circuit currents in the same way as the hydrogen filling and power generation system 400A, and can perform hydrogen filling and power generation with high energy efficiency.

### <FOURTH HYDROGEN FILLING AND POWER GENERATING SYSTEM>

This section describes a fourth hydrogen filling and power generation system that uses the fluid hydrogen carrier 10 of the embodiment. The fourth hydrogen filling and power generation system can be applied to the hydrogen filling device 100A, the power generation device 200A, the hydrogen filling and power generation device 300A, the second hydrogen filling and power generation device 300B, the second hydrogen filling device 100B, the second power generation device 200B, the third hydrogen filling and power generation device 300C, the fourth hydrogen filling and power generation device 300D, the third hydrogen filling device 100C, the third power generation device 200C, the fifth hydrogen filling and power generation device 300E, and the sixth hydrogen filling and power generation device 300E. In the embodiment, we will explain using the sixth hydrogen filling and power generation device 300E. In this embodiment, the system using the sixth hydrogen filling and power generation system 300E is explained.

Figure 25 shows the fourth hydrogen filling and power generation system. As shown in Figure 25, the fourth hydrogen filling and power generation system 400D has the same structure as the first hydrogen filling and power generation system, except that it includes a second negative electrode tank 470 and a second positive electrode tank 480. It is also possible to use only the second negative electrode tank 470. According to this structure, it is possible to store fluid hydrogen carriers separately in a negative electrode tank that stores hydrogen-filled fluid hydrogen carriers 14 and in a fluid hydrogen carrier that has not been hydrogen-filled. In addition, according to this structure, the fluid hydrogen carrier can be stored by separating it into a positive electrode tank that stores slurry containing nickel hydroxide 302 and slurry containing nickel oxyhydroxide 304.

### (SECOND NEGATIVE ELECTRODE TANK)

The second negative electrode tank 470 has the same structure as the negative electrode tank 410, so a detailed explanation is omitted. The sixth hydrogen filling and the power generation device 300E is arranged between the second negative electrode tank 470 and the negative electrode tank 410. This arrangement allows the fluid hydrogen carrier 10 before hydrogen filling and the hydrogen-filled fluid hydrogen carrier 14 to be separated and stored.

### (SECOND POSITIVE ELECTRODE TANK)

The second positive electrode tank 480 has the same structure as the positive electrode tank 430, so a detailed explanation is omitted. The sixth hydrogen filling and power generation device 300E is arranged between the second positive electrode tank 480 and the positive electrode tank 430. This arrangement allows the slurry containing nickel hydroxide 302 and the slurry containing nickel oxyhydroxide 304 to be separated and stored.

Therefore, the fourth hydrogen filling and power generation system 400D, having the above-mentioned structure, can be easily used as a hydrogen carrier because the fluid hydrogen carrier before and after hydrogen filling does not mix when it is extracted as a tank.

As described above, we have explained each embodiment, but the above embodiments are presented as examples, and the above embodiments do not limit the invention. The above embodiments can be implemented in various other forms, and it is possible to perform various combinations, omissions, replacements, modifications, etc. within the scope of not deviating from the gist of the invention. These embodiments and their variations are included in the scope and gist of the invention, as well as in the scope of the invention and its equivalents described in the claims.

### Examples

The following examples and comparative examples are provided to further explain the embodiments, but the embodiments are not limited to these examples and comparative examples.

### <Example 1-1>

### [Preparation of a fluid hydrogen carrier]

0.2% carboxymethyl cellulose (CMC) was mixed with a 6 mol/L potassium hydroxide aqueous solution and stirred overnight to dissolve the CMC. The solution was mixed with 2.5g of hydrogen storage alloy 261, and fluid hydrogen carrier was produced by repeating the process of stirring at 2000rpm for 3 minutes using a self-rotating mixer three times.

### [Preparation of a charge-discharge cell]

The charge-discharge cell 20 contains the secondary battery 30B as shown in Figure 5 was prepared.
A carbon paper was used as the positive electrode current collector 22, a nickel-plated stainless steel was used as the negative electrode current collector 21, a platinum-loaded carbon was used as the oxygen electrode catalyst 23, an anion exchange membrane was used as the ion permeable membrane 24, a butyl elastomer was used as the ion permeable membrane 24, a stainless steel container was used as the negative electrode tank (tank 31) and the positive electrode tank (tank 37), a single-screw eccentric screw pump was used as the negative electrode pump (pump 32) and the positive electrode pump (pump 38), and a nickel plate was used as the partition wall (35). Joints 27 and 36 are made of stainless steel piping and connect the charge/discharge cell 20 with the tank 31 and the pump 32, and the charge/discharge cell 20 with the tank 37 and the pump 38.

### [Charging]

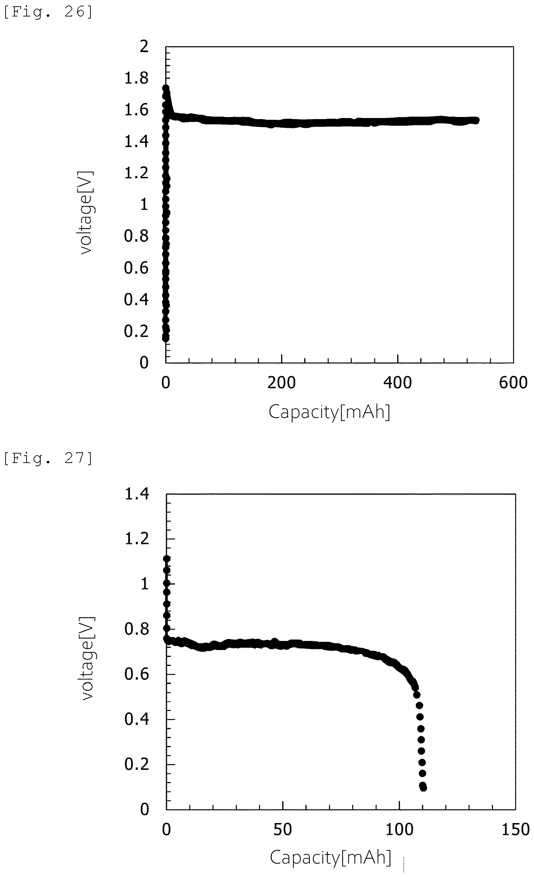

The tank 37 was charged with the alkaline electrolyte 262 and the tank 31 was charged with 10g of the fluid hydrogen carrier 26. Charging was proceeded then with a current of 10mA. The flow rate of pumps 32 and 38 was set at 5 mL/min for both the positive electrode and the negative electrode. The charging curve at this time is shown in Figure 26. In Figure 26, the vertical axis indicates voltage and the horizontal axis indicates charging capacity.

As shown in Figure 26, the electrochemical reaction was progressing at a constant voltage of approximately 1.55 V. This is thought to be due to the fact that, although there is also an overvoltage, oxygen is being generated in the positive electrode current collector 22 and hydrogen is being absorbed in the hydrogen storage alloy 261 in the negative electrode current collector 21.

### [Extraction of the fluid hydrogen carrier]

By removing part of the negative electrode piping and driving the negative electrode pump, the fluid hydrogen carrier 26 was extracted.

### [Discharge]

3g of the fluid hydrogen carrier that had been charged was injected into the tank of a cell that was different from the cell used for charging, and only the pump on the negative electrode side was circulated at a flow rate of 5mL/min. The cell on the positive electrode side was filled with only air. In this state, it was discharged at a current density of 10mA. The discharge curve at this time is shown in Figure 27. In Figure 27, the vertical axis shows the voltage and the horizontal axis shows the discharge capacity.

As shown in Figure 27, the electrochemical reaction was progressing at a constant voltage of approximately 0.75 V. This is thought to be because oxygen reduction was occurring at the positive electrode current collector 22, and hydrogen was being released from the hydrogen storage alloy 261 at the negative electrode current collector 21.

From Figures 26 and 27, it was confirmed that the fluid hydrogen carrier 26 of this embodiment has fluidity at normal temperature and normal pressure, and that the charging/discharging cell 20 of this embodiment can easily extract and move the charged (hydrogen-absorbed) fluid hydrogen carrier 26, and can also release (discharge) hydrogen from the fluid hydrogen carrier 26 after that.

The fluid hydrogen carrier of this embodiment can densify hydrogen at normal temperature and normal pressure, so it can transport large quantities of hydrogen. In addition, the fluid hydrogen carrier of this embodiment is fluid at normal temperature and normal pressure, so it is easy to handle and can be transported efficiently. The charging and discharging cell equipped with the fluid hydrogen carrier of this embodiment can electrochemically absorb and release hydrogen, so it can form a simple system that can easily control charging and discharging (hydrogen absorption and release).

### <Example 1-2>

### [Preparation of a fluid hydrogen carrier]

6 mol/L aqueous potassium hydroxide solution and a polyacrylic acid sodium (PAANa) with a weight average molecular weight of 2700 were mixed and stirred overnight to dissolve the PAANa. The PAANa content in 6 mol/L aqueous potassium hydroxide solution was adjusted to 5% by weight.

The solution was mixed with the hydrogen storage alloy 11 with a median diameter of 15 µm, and a slurry was prepared by repeating the process of stirring at 2000 rpm for 3 minutes using a self-rotating mixer three times. The content ratio of hydrogen storage alloy 11 in the slurry was adjusted to 20%. This hydrogen storage alloy was obtained by crushing and classifying in an inert atmosphere. By heating this slurry at 100°C for 2 hours, the fluid hydrogen carrier 10 was prepared. The viscosity of the fluid hydrogen carrier 10 in Example 1-2 was measured using an Anton Paar rheometer. As a result, the viscosity at a shear rate of 100 sec⁻¹ was 450 mPa·sec.

### [Preparation of a hydrogen filling device]

The hydrogen filling device 100A shown in Figure 6 was prepared. A nickel-plated stainless steel was used as the positive electrode current collector 103, a nickel porous electrode with nickel sulfide formed on the surface was used as the oxygen generation electrode 105, nickel-plated stainless steel was used as the negative electrode current collector 21, an anion exchange membrane was used as the ion permeable membrane 106, and butyl elastomer was used as the seal material 107.

### [Preparation of a hydrogen filling system]

The hydrogen filling system as shown in Figure 22 was prepared. A polypropylene tank was used as the negative electrode tank 410, a tube pump was used as the negative electrode pressurization/depressurization device 420, a polypropylene tank was used as the positive electrode tank 430, a tube pump was used as the positive electrode pressurization/depressurization device 440, and a φ1.5mm polypropylene tube was used as the device flow path 460. In Examples 1-2, the inter-device flow path is not used because it is not a laminated cell.

### [Filling the fluid hydrogen carrier with hydrogen]

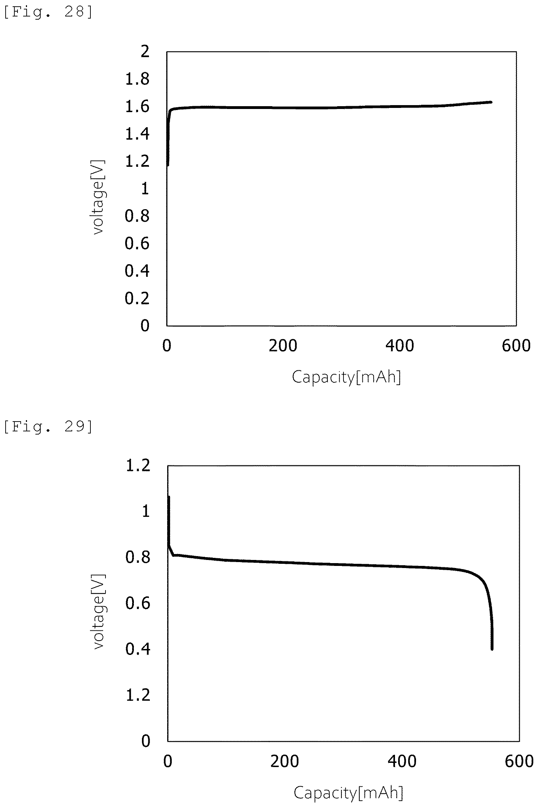

12 mL of the fluid hydrogen carrier 10 was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440. In this state, the positive electrode current collector 103 and negative electrode current collector 101 of the hydrogen filling device were connected to the positive electrode and negative electrode of the Hokuto Denko charge/discharge device, respectively, and charging was performed up to a capacity of 6.624 A·h at a current value of 30 mA/cm² for the area of the ion permeable membrane 106. The capacity of 6.624 A·h corresponds to a capacity density of 552 A·h/L, as the amount of fluid hydrogen carrier injected was 12 mL. The charging curve during hydrogen filling in Example 1-2 is shown in Figure 28.

### [Preparation of a power generation device]

The power generation device shown in Figure 8 was prepared. A nickel-plated stainless steel was used as the positive electrode current collector 103, a carbon paper with a water-repellent coating and platinum-loaded was used as the oxygen reduction electrode 201, an anion exchange membrane was used as the ion permeable membrane 106, and a butyl elastomer was used as the seal material 107.

### [Preparation of a power generation system]

The power generation system shown in Figure 22 was prepared. A polypropylene tank was used as the negative electrode tank 410, a tube pump was used as the negative electrode pressurization/depressurization device 420, a tube pump was used as the positive electrode pressurization/depressurization device 440, and a φ1.5 mm polypropylene tube was used as the device flow path 460. In Examples 1-2, the inter-device flow path is not used because the power generation device is not stacked. In addition, in Examples 1-2, the positive electrode tank 430 is not used because air is flowed.

### [Power generation using the fluid hydrogen carrier]

The hydrogen-filled fluid hydrogen carrier 14 was taken out of the negative electrode tank 410 of the hydrogen filling system and put into the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440. In this state, the positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.492 Ah, and the average discharge voltage was 0.77 V. The volume of the fluid hydrogen carrier 10 that was input into the power generation device in Example 1-2 was measured to be 10 mL. In other words, this corresponds to a discharge capacity density of 549 Ah/L. The Ah efficiency in Example 1-2 was 99.5%. The discharge curve during power generation using Example 1-2 is shown in Figure 29.

In the power generation cell of this invention, it was confirmed that the fluid hydrogen carrier, which is composed of the hydrogen storage alloy and alkaline electrolyte of this invention, is useful as a highly efficient hydrogen carrier.

The following is an example of the content of hydrogen storage alloys in fluid hydrogen carriers.

### <Example 2>

The preparation of the fluid hydrogen carrier in Example 2 is the same as in Example 1-2, except that 15 volume percent of hydrogen storage alloy 11 is mixed. The configuration of the hydrogen filling device, hydrogen filling system, power generation device, and power generation system is the same as in Example 1-2.

### [Filling the fluid hydrogen carrier with hydrogen]

This section explains the method for filling the fluid hydrogen carrier with hydrogen in relation to Example 2. 12 mL of Example 2 fluid hydrogen carrier 10 was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440. In this state, the positive electrode current collector 103 and negative electrode current collector 101 of the hydrogen filling device were connected to the positive electrode and negative electrode of the Hokuto Denko charge/discharge device, respectively, and charging was carried out up to a capacity of 4.968 Ah at a current value of 30 mA/cm² for the area of the ion permeable membrane 106. The capacity of 4.968 Ah corresponds to a capacity density of 414 Ah/L, as the amount of fluid hydrogen carrier injected was 12 mL.

### [Power generation using the fluid hydrogen carrier]

The power generation method for Example 2 is explained below. The hydrogen-filled fluid hydrogen carrier 14 was taken out of the negative electrode tank 410 of the hydrogen filling system described above and put into the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440. In this state, the positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 4.637 A·h, and the average discharge voltage was 0.71 V. The volume of the fluid hydrogen carrier 10 that was input into the power generation device in Example 2 was measured to be 11.2 mL. In other words, the discharge capacity density was equivalent to 412 A·h/L. The A·h efficiency in Example 2 was 99.7%.

### <Example 3>

The preparation of the fluid hydrogen carrier in Example 3 is the same as in Example 1-2, except that 25 volume percent of hydrogen storage alloy 11 is mixed. The configuration of the hydrogen filling device, hydrogen filling system, power generation device, and power generation system is the same as in Example 1-2.

### [Filling the fluid hydrogen carrier with hydrogen]

This section explains the method for filling the fluid hydrogen carrier with hydrogen in Example 3. 12 mL of Example 3 fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440. In this state, the positive electrode current collector 103 and negative electrode current collector 101 of the hydrogen filling device were connected to the positive electrode and negative electrode of the Hokuto Denko charge/discharge device, respectively, and charging was carried out up to a capacity of 8.280 A·h at a current value of 30 mA/cm² for the area of the ion permeable membrane 106. The capacity of 8.280 Ah corresponds to a capacity density of 690 Ah/L, as the amount of fluid hydrogen carrier injected was 12 mL.

### [Power generation using the fluid hydrogen carrier]

The power generation method related to Example 3 is explained below. The hydrogen-filled fluid hydrogen carrier 14 was taken out of the negative electrode tank 410 of the hydrogen filling system described above and put into the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 7.086 Ah, and the average discharge voltage was 0.80 V. The volume of the fluid hydrogen carrier 10 that was input into the power generation device in Example 3 was measured to be 10.3 mL. In other words, the discharge capacity density was equivalent to 687 Ah/L. The Ah efficiency in Example 3 was 99.7%.

### <Example 4>

The preparation of the fluid hydrogen carrier in Example 4 is the same as in Example 1-2, except that 30 volume percent of hydrogen storage alloy 11 is mixed. The configuration of the hydrogen filling device, hydrogen filling system, power generation device, and power generation system is the same as in Example 1-2.

### [Filling the fluid hydrogen carrier with hydrogen]

This section explains the method for filling the fluid hydrogen carrier with hydrogen in Example 4. 12 mL of Example 4 fluid hydrogen carrier 10 was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and charged to a capacity of 9.936 Ah at a current value of 30 mA/cm² for the area of the ion permeable membrane 106. The capacity of 9.936 A·h corresponds to a capacity density of 828 A·h/L, as the amount of fluid hydrogen carrier injected was 12 mL.

### [Power generation using the fluid hydrogen carrier]

The power generation method related to Example 4 is explained below. The hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 4.322 A·h, and the average discharge voltage was 0.82 V. The volume of the fluid hydrogen carrier 10 that was input into the power generation device in Example 4 was measured to be 6.0 mL. In other words, this corresponds to a discharge capacity density of 720 A·h/L. The A·h efficiency in Example 4 was 87.0%.

### < Comparison Example 1>

The preparation of the fluid hydrogen carrier in Comparison Example 1 is the same as in Example 1-2, except that 10 volume percent of hydrogen storage alloy 11 is mixed. The configuration of the hydrogen filling device, hydrogen filling system, power generation device, and power generation system is the same as in Example 1-2.

### [Filling the fluid hydrogen carrier with hydrogen]

This section explains the method for filling the fluid hydrogen carrier with hydrogen in Comparison Example 1.12 mL of the fluid hydrogen carrier 10 from the comparative example 1 was put into the negative electrode tank 410 of the hydrogen filling system described above, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440. In this state, the positive electrode current collector 103 and the negative electrode current collector 101 of the hydrogen filling device were connected to the positive electrode and negative electrode of the Hokuto Denko charge/discharge device, respectively, and charged to a capacity of 3.312 A·h at a current value of 30 mA/cm² for the area of the ion permeable membrane 106. The capacity of 3.312 A·h corresponds to a capacity density of 276 A·h/L, as the amount of fluid hydrogen carrier injected was 12 mL.

### [Power generation using the fluid hydrogen carrier]

The power generation method related to Comparative Example 1 is explained below. The hydrogen-filled fluid hydrogen carrier 14 was taken out of the negative electrode tank 410 of the hydrogen filling system described above and put into the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 2.390 A·h, and the average discharge voltage was 0.71 V. The volume of the fluid hydrogen carrier 10 that was input into the power generation device in Comparison Example 1 was measured to be 11.5 mL. In other words, this corresponds to a discharge capacity density of 208 A·h/L. The A·h efficiency in Comparison Example 1 was 75.3%.

Examples 1-2, Examples 2-4, and Comparison Example 1 show the results of comparing the hydrogen filling and power generation characteristics of the fluid hydrogen carriers with different the hydrogen storage alloy 11 contents, as shown in Table 1.

**[Table 1]**

| | Hydrogen storage alloy content (vol%) | Charge capacity density when filling with hydrogen (Ah/L) | Discharge capacity density during power generation (Ah/L) | Ah efficiency (%) | Average discharge voltage (V) | The volume of the fluid hydrogen carrier that was able to be extracted to the power generation device (ml) |
|---|---|---|---|---|---|---|
| Comparison Example 1 | 10 | 276 | 208 | 75.3 | 0.54 | 11.5 |
| Example 1-2 | 20 | 552 | 549 | 99.5 | 0.77 | 10.0 |
| Example 2 | 15 | 414 | 413 | 99.7 | 0.71 | 11.2 |
| Example 3 | 25 | 690 | 688 | 99.7 | 0.80 | 10.3 |
| Example 4 | 30 | 828 | 720 | 87 | 0.82 | 6.0 |

In the case of the hydrogen storage alloy content of 10% in comparison example 1, the Ah efficiency is low and the average discharge voltage is also low. The low average discharge voltage suggests that the resistance is high. In other words, when the hydrogen storage alloy content is 10 volume percent, the amount of hydrogen storage alloy with high electrical conductivity is low, and the electrical conductivity of the fluid hydrogen carrier itself is considered to be insufficient. In the cases of Examples 1-2, 2 and 3, where the hydrogen storage alloy content is 15 volume percent or more, the Ah efficiency was 99% or more. From this, it is preferable to have a hydrogen storage alloy content of 15% or more in the fluid hydrogen carrier. In Example 4, the discharge capacity density during power generation is high when the hydrogen storage alloy content is 30%, but the Ah efficiency is lower than the levels of Examples 1-2, 2, and 3. In addition, in Example 4, the volume of fluid hydrogen carrier that could be extracted from the tank of the hydrogen filling device and transferred to the power generation device was lower than in the other levels. This is because the viscosity of the fluid hydrogen carrier increased as the content of the hydrogen storage alloy increased.

The following are examples of the particle size of the hydrogen storage alloy for the fluid hydrogen carrier.

### <Example 5>

The preparation of the fluid hydrogen carrier in Example 5 is the same as in Examples 1-2, except that a hydrogen storage alloy with a median diameter of 5 µm is used. The configuration of the hydrogen filling device, hydrogen filling system, power generation device, and power generation system is the same as in Examples 1-2.

### [Filling the fluid hydrogen carrier with hydrogen]

This section describes the method for filling the fluid hydrogen carrier used in Example 5 with hydrogen. 12 mL of Example 5 fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 5 is explained below. The hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 4.943 A·h, and the average discharge voltage was 0.80 V. The volume of the fluid hydrogen carrier 10 that was input into the power generation device in Example 5 was measured to be 9.3 mL. In other words, the discharge capacity density was equivalent to 532 A·h/L. The A·h efficiency in Example 5 was 96.3%.

### <Example 6>

The preparation of the fluid hydrogen carrier in Example 6 is the same as in Examples 1-2, except that a hydrogen storage alloy with a median diameter of 25 µm is used. The configuration of the hydrogen filling device, hydrogen filling system, power generation device, and power generation system is the same as in Examples 1-2.

### [Filling the fluid hydrogen carrier with hydrogen]

This section explains the method for filling the fluid hydrogen carrier used in Example 6 with hydrogen. 12 mL of Example 6 fluid hydrogen carrier 10 was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 6 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.646 A·h, and the average discharge voltage was 0.78 V. The volume of the fluid hydrogen carrier 10 that was input into the power generation device in Example 6 was measured to be 10.3 mL. In other words, the discharge capacity density was equivalent to 548 A·h /L. The A·h efficiency in Example 6 was 99.3%.

### <Example 7>

The preparation of the fluid hydrogen carrier in Example 7 is the same as in Examples 1-2, except that a hydrogen storage alloy with a median diameter of 35 µm is used. The configuration of the hydrogen filling device, hydrogen filling system, power generation device, and power generation system is the same as in Examples 1-2.

### [Filling the fluid hydrogen carrier with hydrogen]

This section describes the method for filling the fluid hydrogen carrier used in Example 7 with hydrogen. 12 mL of Example 7 fluid hydrogen carrier 10 was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 7 is explained below. The hydrogen-filled fluid hydrogen carrier 14 was removed from the negative electrode tank 410 of the hydrogen filling system described above and was put into the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.744 A·h, and the average discharge voltage was 0.75 V. The volume of the fluid hydrogen carrier 10 that was input into the power generation device in Example 7 was measured to be 10.5 mL. In other words, the discharge capacity density was equivalent to 547 A·h/L. The A·h efficiency in Example 7 was 99.1%.

### <Example 8>

The preparation of the fluid hydrogen carrier in Example 8 is the same as in Examples 1-2, except that a hydrogen storage alloy with a median diameter of 45 µm is used. The configuration of the hydrogen filling device, hydrogen filling system, power generation device, and power generation system is the same as in Examples 1-2.

### [Filling the fluid hydrogen carrier with hydrogen]

This section explains the method for filling the fluid hydrogen carrier used in Example 8 with hydrogen. 12 mL of Example 8 fluid hydrogen carrier 10 was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 8 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.841 A·h, and the average discharge voltage was 0.75 V. The volume of the fluid hydrogen carrier 10 that was input into the power generation device in Example 8 was measured to be 10.7 mL. In other words, the discharge capacity density was equivalent to 545 A·h /L. The A·h efficiency in Example 8 was 98.9%.

### <Comparison Example 2>

The preparation of the fluid hydrogen carrier in Comparison Example 2 is the same as in Examples 1-2, except that a hydrogen storage alloy with a median diameter of 55 µm is used. The configuration of the hydrogen filling device, hydrogen filling system, power generation device, and power generation system is the same as in Examples 1-2.

### [Filling the fluid hydrogen carrier with hydrogen]

This section describes the method for filling the fluid hydrogen carrier used in Comparison Example 2 with hydrogen. 12 mL of Comparison Example 2 fluid hydrogen carrier 10 was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charging was carried out at a current value of 30mA/cm² for the area of the ion permeable membrane 106. As a result, the flow of the fluid hydrogen carrier 10 stopped during charging. The cause of the stoppage was clogging of the flow path due to the agglomeration of the hydrogen storage alloy 11.

By comparing the results of Examples 1-2, Examples 5-8, and Comparative Example 2, the hydrogen filling and power generation characteristics of fluid hydrogen carriers were compared when the median diameter of the hydrogen storage alloy 11 was changed. The results are shown in Table 2.

**[Table 2]**

| | Median diameter of hydrogen storage alloys (µm) | Charge capacity density when filling with hydrogen (Ah/L) | Discharge capacity density during power generation (Ah/L) | Ah efficiency (%) | Average discharge voltage (V) | The volume of the fluid hydrogen carrier that was able to be extracted to the power generation device (ml) |
|---|---|---|---|---|---|---|
| Example 1-2 | 15 | 552 | 549 | 99.5 | 0.77 | 10.0 |
| Example 5 | 5 | 552 | 532 | 96.3 | 0.80 | 9.3 |
| Example 6 | 25 | 552 | 548 | 99.3 | 0.78 | 10.3 |
| Example 7 | 35 | 552 | 547 | 99.1 | 0.75 | 10.5 |
| Example 8 | 45 | 552 | 546 | 98.9 | 0.77 | 10.7 |
| Comparison Example 2 | 55 | clogging has occurred | | | | 0.0 |

In Comparison Example 2, the fluid hydrogen carrier 10 using the hydrogen storage alloy 11 with a median diameter of 55 µm agglomerated during flow. In other examples, almost the same power generation characteristics were obtained. In other words, it is preferable that the median diameter of the hydrogen storage alloy 11 of the present invention is 50 µm or less. In addition, because the viscosity of the fluid hydrogen carrier 10 using the hydrogen storage alloy 11 with a median diameter of 55 µm in Example 5 increased, the amount of fluid hydrogen carrier that could be extracted to the power generation device was slightly less than other levels. In other words, a more preferable median diameter is 10 µm or more and 50 µm or less, and even more preferable is 10 µm or more and 20 µm or less.

The following are examples of an additive for a fluid hydrogen carrier in an alkaline electrolyte.

### <Example 9>

The preparation of the fluid hydrogen carrier in Example 9 is the same as in Examples 1-2, except that a 6 mol/L aqueous potassium hydroxide solution is mixed with 3% by weight of sodium polyacrylate (PANA) with a weight average molecular weight of 2700. The configuration of the hydrogen filling device, hydrogen filling system, power generation device, and power generation system is the same as in Example 1-2. The viscosity of the fluid hydrogen carrier in Example 9 at a shear rate of 100 sec⁻¹ was 150 mPa·sec.

### [Filling the fluid hydrogen carrier with hydrogen]

This section explains the method for filling the fluid hydrogen carrier used in Example 9 with hydrogen. 12 mL of Example 9 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode
pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 9 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.191 A·h, and the average discharge voltage was 0.80 V. The volume of the fluid hydrogen carrier 10 that was input into the power generation device in Example 9 was measured to be 10.2 mL. In other words, the discharge capacity density was equivalent to 509 A·h /L. The A·h efficiency in Example 9 was 92.2%.

### <Example 10>

The preparation of the fluid hydrogen carrier in Example 10 is the same as in Examples 1-2, except that a 6 mol/L aqueous potassium hydroxide solution is mixed with 7% by weight of sodium polyacrylate (PANA) with a weight average molecular weight of 2700. The configuration of the hydrogen filling device, hydrogen filling system, power generation device, and power generation system is the same as in Example 1-2. The viscosity of the fluid hydrogen carrier in Example 10 at a shear rate of 100 sec⁻¹ was 750 mPa·sec.

### [Filling the fluid hydrogen carrier with hydrogen]

This section explains the method for filling the fluid hydrogen carrier used in Example 10 with hydrogen. 12 mL of Example 10 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 10 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.696 A·h, and the average discharge voltage was 0.73 V. The volume of the fluid hydrogen carrier 10 that was input into the power generation device in Example 10 was measured to be 10.3 mL. In other words, the discharge capacity density was equivalent to 550 A·h /L. The A·h efficiency in Example 10 was 99.7%.

### <Comparison Example 3>

The preparation of the fluid hydrogen carrier in Comparison Example 3 is the same as in Examples 1-2, except that a 6 mol/L aqueous potassium hydroxide solution is mixed with 5 by weight of sodium polyacrylate (PANA) with a weight average molecular weight of 1200. The configuration of the hydrogen filling device, hydrogen filling system, power generation device, and power generation system is the same as in Example 1-2. The viscosity of the fluid hydrogen carrier in Comparison Example 3 at a shear rate of 100 sec⁻¹ was 10 mPa·sec.

### [Filling the fluid hydrogen carrier with hydrogen]

This section explains the method for filling the fluid hydrogen carrier used in Example 10 with hydrogen. 12 mL of Comparison Example 3 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Comparison Example 3 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 0.597 A·h, and the average discharge voltage was 0.47 V. The volume of the fluid hydrogen carrier 10 that was input into the power generation device in Comparison Example 3 was measured to be 10.5 mL. In other words, the discharge capacity density was equivalent to 57 A·h /L. The A·h efficiency in Comparison Example 3 was 10.3%.

### <Comparison Example 4>

The preparation of the fluid hydrogen carrier in Comparison Example 4 is the same as in Examples 1-2, except that a 6 mol/L aqueous potassium hydroxide solution is mixed with 10 by weight of sodium polyacrylate (PANA) with a weight average molecular weight of 1200. The configuration of the hydrogen filling device, hydrogen filling system, power generation device, and power generation system is the same as in Example 1-2. The viscosity of the fluid hydrogen carrier in Comparison Example 4 at a shear rate of 100 sec⁻¹ was 30 mPa·sec.

### [Filling the fluid hydrogen carrier with hydrogen]

This section explains the method for filling the fluid hydrogen carrier used in Example 10 with hydrogen. 12 mL of Comparison Example 4 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Comparison Example 4 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The set voltage was reached immediately after the start of the discharge, and no power was generated in Comparison Example 4.

### <Example 11>

The preparation of the fluid hydrogen carrier in Example 11 is the same as in Examples 1-2, except that a 6 mol/L aqueous potassium hydroxide solution is mixed with 1% by weight of sodium polyacrylate (PANA) with a weight average molecular weight of 20000. The configuration of the hydrogen filling device, hydrogen filling system, power generation device, and power generation system is the same as in Example 1-2. The viscosity of the fluid hydrogen carrier in Example 11 at a shear rate of 100 sec⁻¹ was 270 mPa·sec.

### [Filling the fluid hydrogen carrier with hydrogen]

This section explains the method for filling the fluid hydrogen carrier used in Example 11 with hydrogen. 12 mL of Example 11 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 11 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.436 A·h, and the average discharge voltage was 0.78 V. The volume of the fluid hydrogen carrier 10 that was input into the power generation device in Example 11 was measured to be 10.7 mL. In other words, the discharge capacity density was equivalent to 538 A·h /L. The A·h efficiency in Example 11 was 97.5%.

### <Example 12>

The preparation of the fluid hydrogen carrier in Example 12 is the same as in Examples 1-2, except that a 6 mol/L aqueous potassium hydroxide solution is mixed with 5% by weight of hydroxyethyl cellulose (HEC). The configuration of the hydrogen filling device, hydrogen filling system, power generation device, and power generation system is the same as in Example 1-2. The viscosity of the fluid hydrogen carrier in Example 12 at a shear rate of 100 sec⁻¹ was 330 mPa·sec.

### [Filling the fluid hydrogen carrier with hydrogen]

This section explains the method for filling the fluid hydrogen carrier used in Example 12 with hydrogen. 12 mL of Example 12 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 12 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 4.787 A·h, and the average discharge voltage was 0.71 V. The volume of the fluid hydrogen carrier 10 that was input into the power generation device in Example 12 was measured to be 10.3 mL. In other words, the discharge capacity density was equivalent to 465 A·h /L. The A·h efficiency in Example 12 was 84.2%.

### <Comparison Example 5>

The preparation of the fluid hydrogen carrier in is the same as in Examples 1-2, except that a 6 mol/L aqueous Comparison Example 5 potassium hydroxide solution is mixed with 5 by weight of sodium lignosulfonate (LSANa). The configuration of the hydrogen filling device, hydrogen filling system, power generation device, and power generation system is the same as in Example 1-2. The viscosity of the fluid hydrogen carrier in Comparison Example 5 at a shear rate of 100 sec⁻¹ was 80 mPa·sec.

### [Filling the fluid hydrogen carrier with hydrogen]

This section explains the method for filling the fluid hydrogen carrier used in Comparison Example 5 with hydrogen. 12 mL of Comparison Example 3 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Comparison Example 5 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 0.205 A·h, and the average discharge voltage was 0.41 **V.** The volume of the fluid hydrogen carrier 10 that was input into the power generation device in Comparison Example 5 was measured to be 10.6 mL. In other words, the discharge capacity density was equivalent to 19 A·h /L. The A·h efficiency in Comparison Example 5 was 3.5%.

### <Example 13>

The preparation of the fluid hydrogen carrier in Example 13 is the same as in Examples 1-2, except that a 6 mol/L aqueous potassium hydroxide solution is mixed with 1% by weight of carboxymethyl cellulose (CMC). The configuration of the hydrogen filling device, hydrogen filling system, power generation device, and power generation system is the same as in Example 1-2. The viscosity of the fluid hydrogen carrier in Example 13 at a shear rate of 100 sec⁻¹ was 500 mPa·sec.

### [Filling the fluid hydrogen carrier with hydrogen]

This section explains the method for filling the fluid hydrogen carrier used in Example 13 with hydrogen. 12 mL of Example 13 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 13 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.586 A·h, and the average discharge voltage was 0.73 V. The volume of the fluid hydrogen carrier 10 that was input into the power generation device in Example 13 was measured to be 10.4 mL. In other words, the discharge capacity density was equivalent to 537 A·h /L. The A·h efficiency in Example 13 was 97.3%.

By comparing the results of Examples 1-2, Examples 9-13, and Comparative Examples 3-5, the hydrogen filling and power generation characteristics of fluid hydrogen carriers were compared when the type and amount of additive to the alkaline electrolyte 12 contained in the fluid hydrogen carrier 10 is changed. The results are shown in Table 3.

**[Table 3]**

| | Additives | Additives content (wt%) | Viscosity at a shear rate of 100 sec⁻¹ (Ah/L) | Discharge capacity density during power generation (Ah/L) | Ah efficiency (%) | Average discharge voltage (V) |
|---|---|---|---|---|---|---|
| Example 1-2 | PAANa (Mw:2700) | 5 | 450 | 549 | 99.5 | 0.77 |
| Example 9 | PAANa (Mw:2700) | 3 | 150 | 509 | 92.2 | 0.80 |
| Example 10 | PAANa (Mw:2700) | 7 | 750 | 550 | 99.7 | 0.73 |
| Comparison Example 3 | PAANa (Mw: 1200) | 5 | 10 | 57 | 10.3 | 0.47 |
| Comparison Example 4 | PAANa (Mw: 1200) | 10 | 30 | 0 | 0 | |
| Example 11 | PAANa (Mw:20000) | 1 | 270 | 538 | 97.5 | 0.78 |
| Example 12 | HEC | 5 | 330 | 465 | 84.2 | 0.71 |
| Comparison Example 5 | LSANa | 5 | 80 | 19 | 3.5 | 0.41 |
| Example 13 | CMC | 5 | 500 | 537 | 97.3 | 0.73 |

According to Table 3, Examples 1-2 and Examples 9-13, which have a viscosity of 100 mPa·sec or more at a shear rate of 100 sec⁻¹, have both high AAh efficiency and high capacity density. In other words, in order to achieve high AAh efficiency and high capacity density, it is good to use fluid hydrogen carrier 10 with a viscosity of 100 mPa·s or more at a shear rate of 100 s⁻¹.

Also, looking at the differences in the weight average molecular weight (Mw) of the same PANa in Table 3, the Mw is 1500 or more, and the Ah efficiency is high and the capacity density is high. In other words, to achieve high Ah efficiency and high capacity density, it is good to use an additive with an Mw of 1500 or more.

Furthermore, looking at the different types of additives in Table 3, PAA Na, HEC and CMC have high AAh efficiency and high capacity density. In other words, to achieve high AAh efficiency and high capacity density, it is good to use additives such as PAA Na, HEC and CMC.

The following sections explain examples of methods for preventing the sedimentation of the hydrogen storage alloys in fluid hydrogen carriers, as well as comparative examples.

### <Comparison Example 6>

The fluid hydrogen carrier 10 of the comparative example 6 was prepared in the same way as the examples 1-2.

### [Static sedimentation test]

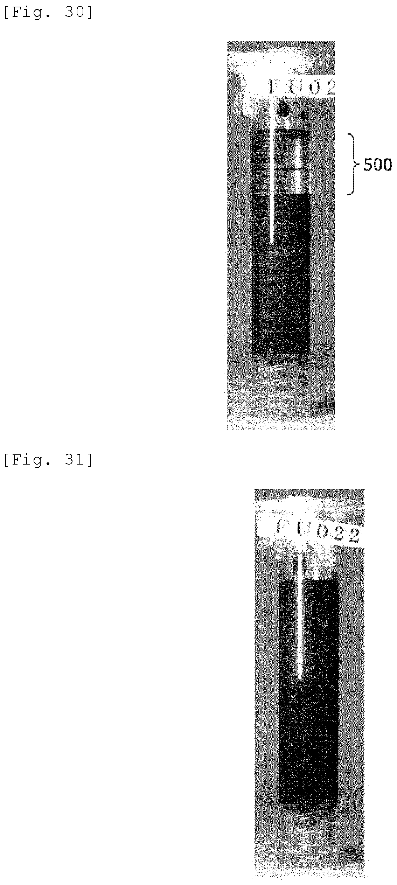

Depending on the application of the fluid hydrogen carrier 10, there may be cases where the sedimentation of hydrogen storage alloy 11 is not allowed. In other words, technology to suppress the sedimentation of fluid hydrogen carrier 10 is necessary. The method of the static sedimentation test to evaluate sedimentation is explained below. The fluid hydrogen carrier from Comparison Example 6 was poured into a transparent glass container, and the top of the container was sealed with Parafilm to prevent drying, and left to stand for 30 days. After standing, the presence or absence of a clear layer of supernatant liquid was checked. The appearance of Comparison Example 6 after the static test is shown in Figure 30. A growth layer was observed in Comparison Example 6. In other words, sedimentation was confirmed 30 days of static testing.

The hydrogen filling and power generation characteristics of the fluid hydrogen carrier in Comparison Example 6 are the same as those in Examples 1-2.

### <Example 14>

As a method to suppress sedimentation, thixotropy is imparted to the fluid hydrogen carrier 10. Carbon black was examined as a thixotropic agent, an additive that imparts thixotropy. The fluid hydrogen carrier 10 was prepared in the same way as in comparison example 6, except that 0.5% by weight of carbon black was added to the fluid hydrogen carrier 10.

### [Static sedimentation test]

Figure 31 shows the appearance of Example 14 after the static test. No growth layer was observed in Example 14. In other words, sedimentation was not confirmed after 30 days of static testing.

### [Filling the fluid hydrogen carrier with hydrogen]

This section explains the method for filling the fluid hydrogen carrier used in Example 14 with hydrogen. 12 mL of Example 14 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 14 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 4.395 A·h, and the average discharge voltage was 0.82 V. The volume of the fluid hydrogen carrier 10 that was input into the power generation device in Example 14 was measured to be 8.2 mL. In other words, the discharge capacity density was equivalent to 535 A·h /L. The A·h efficiency in Example 14 was 97.1%.

By adding carbon black as a thixotropic agent, the power generation efficiency is the same as that of the comparative example 6 without the addition, but the average discharge voltage has increased. This is thought to be due to the high electrical conductivity of carbon black itself, which increased the electrical conductivity of the fluid hydrogen carrier10. In other words, we have confirmed that carbon black as a thixotropic agent has two effects: it suppresses sedimentation and increases voltage, making it a useful thixotropic agent.

The following describes the method of heating treatment for fluid hydrogen carriers.

### <Comparison Example 7>

The preparation of the fluid hydrogen carrier in Comparison Example 7 is the same as in Examples 1-2, except that it is not heated after being stirred with a hybrid mixer. In addition, the configuration of the hydrogen filling device, hydrogen filling system, power generation device, and power generation system is the same as in Examples 1-2.

### [Filling the fluid hydrogen carrier with hydrogen]

This section explains the method for filling the fluid hydrogen carrier used in Comparison Example 7 with hydrogen. 12 mL of Comparison Example 7 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Comparison Example 7 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 1.802 A·h, and the average discharge voltage was 0.43 V. The volume of the fluid hydrogen carrier 10 that was input into the power generation device in Comparison Example 7 was measured to be 10.2 mL. In other words, the discharge capacity density was equivalent to 177 A·h /L. The A·h efficiency in Comparison Example 7 was 32.0%.

### <Example 15>

The preparation of the fluid hydrogen carrier in Example 15 is the same as in Examples 1-2, except that it is heated at 80°C for 2 hours after being stirred with a hybrid mixer. The configuration of the hydrogen filling device, hydrogen filling system, power generation device, and power generation system is the same as in Examples 1-2.

### [Filling the fluid hydrogen carrier with hydrogen]

This section explains the method for filling the fluid hydrogen carrier used in Example 15 with hydrogen. 12 mL of Example 15 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 15 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.877 A·h, and the average discharge voltage was 0.76 V. The volume of the fluid hydrogen carrier 10 that was input into the power generation device in Example 15 was measured to be 10.7 mL. In other words, the discharge capacity density was equivalent to 549 A·h /L. The A·h efficiency in Example 15 was 99.5%.

### <Example 16>

The preparation of the fluid hydrogen carrier in Example 16 is the same as in Examples 1-2, except that it is heated at 120°C for 2 hours after being stirred with a hybrid mixer. The configuration of the hydrogen filling device, hydrogen filling system, power generation device, and power generation system is the same as in Examples 1-2.

### [Filling the fluid hydrogen carrier with hydrogen]

This section explains the method for filling the fluid hydrogen carrier used in Example 16 with hydrogen. 12 mL of Example 16 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 16 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.696 A·h, and the average discharge voltage was 0.79 V. The volume of the fluid hydrogen carrier 10 that was input into the power generation device in Example 16 was measured to be 10.3 mL. In other words, the discharge capacity density was equivalent to 550 A·h /L. The A·h efficiency in Example 16 was 99.7%.

Examples 1-2, 15-16, and Comparison Example 7 compare the hydrogen filling and power generation characteristics when the heating temperature of the fluid hydrogen carrier 10 is changed. The results are shown in Table 4.

**[Table 4]**

| | Heating temperature and time | Charge capacity density when filling with hydrogen (Ah/L) | Discharge capacity density during power generation (Ah/L) | Ah efficiency (%) | Average discharge voltage (V) | The volume of the fluid hydrogen carrier that was able to be extracted to the power generation device(ml) |
|---|---|---|---|---|---|---|
| Example 1-2 | 100°C, 2h | 552 | 550 | 99.7 | 0.77 | 10.0 |
| Example 7 | Unheated | 552 | 177 | 32.0 | 0.43 | 10.2 |
| Example 15 | 80°C, 2h | 552 | 549 | 99.5 | 0.76 | 10.7 |
| Example 16 | 120°C, 2h | 552 | 550 | 99.7 | 0.79 | 10.3 |

According to Table 4, the examples 1-2 and 15-16, which were heated at 80°C or higher, have high AAh efficiency and high capacity density. In other words, in order to achieve high AAh efficiency and high capacity density, it is good to use fluid hydrogen carrier 10 heated at a temperature of 80°C or higher.

The following describes the method of crushing hydrogen storage alloys.

### <Example 17>

6 mol/L aqueous solution of potassium hydroxide was mixed with 5% by weight of polyacrylic acid sodium (PAANa) with a weight average molecular weight of 2700, and the PAANa was dissolved by stirring overnight.

This solution was mixed with the hydrogen storage alloy 11 with a median diameter of 500 µm or more, and then ground in an air ball mill to produce a slurry with a median diameter of 15 µm. The content ratio of hydrogen storage alloy 11 in the slurry was adjusted to 20%. This slurry was heated at 100°C for 2 hours to produce fluid hydrogen carrier 10. The fluid hydrogen carrier 10 from Example 17 was measured for viscosity using an Anton Paar rheometer. The result was a viscosity of 450 mPa·sec at a shear rate of 100 sec⁻¹. The configuration of the hydrogen filling device, hydrogen filling system, power generation device, and power generation system is the same as in Examples 1-2.

### [Filling the fluid hydrogen carrier with hydrogen]

This section explains the method for filling the fluid hydrogen carrier used in Example 17 with hydrogen. 12 mL of Example 17 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 17 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.889 A·h, and the average discharge voltage was 0.78 V. The volume of the fluid hydrogen carrier 10 that was input into the power generation device in Example 17 was measured to be 10.3 mL. In other words, the discharge capacity density was equivalent to 550 A·h /L. The A·h efficiency in Example 17 was 99.7%.

In Examples 1-2 and 17, the conditions for crushing the hydrogen storage alloy in the fluid hydrogen carrier 10 were different. The hydrogen filling and power generation characteristics of these were compared. The results are shown in Table 5.

**[Table 5]**

| | Crushing conditions for hydrogen storage alloys | Charge capacity density when filling with hydrogen(Ah/L) | Discharge capacity density during power generation (Ah/L) | Ah efficiency (%) | Average discharge voltage (V) |
|---|---|---|---|---|---|
| Example 1-2 | under an inert atmosphere | 552 | 550 | 99.7 | 0.77 |
| Example 17 | mixed with an alkaline electrolyte and under the atmosphere | 552 | 550 | 99.7 | 0.78 |

According to Table 5, there is no difference in the power generation characteristics between Example 17, which was crushed in air after being mixed with an alkaline electrolyte, and Example 1-2, which was crushed in an inert atmosphere. In other words, it was confirmed that crushing can be carried out easily without the need for an inert atmosphere by mixing the alkaline electrolyte with the hydrogen storage alloy.

The following is a comparison of the structure of hydrogen filling equipment and power generation equipment.

### <Example 18>

The fluid hydrogen carrier used in Example 18 is the same as that used in Examples 1-2. In Example 18, the second hydrogen filling device 100B and the second power generation device 200B shown in Figures 14 and 16, which use a porous current collector, are used, and the rest of the process is the same as in the examples.

### [Preparation of the hydrogen filling device]

The second hydrogen filling device 100B shown in Figure 14 was prepared. Nickel-plated stainless steel was used as the positive electrode current collector 103, a nickel porous electrode with nickel sulfide formed on the surface was used as the oxygen evolution electrode 105, a 100 mesh nickel wire mesh was used as the porous positive electrode current collector 112 , a nickel-plated stainless steel was used as the negative electrode current collector 21, 60 mesh nickel wire mesh was used as the porous negative electrode current collector 111, an anion exchange membrane was used as the ion permeable membrane 106, and butyl elastomer was used as the seal material 107.

### [Preparation of the hydrogen filling device]

The second power generation device 200B shown in Figure 15 was prepared. Nickel-plated stainless steel was used as the positive electrode current collector 130, a water-repellent carbon paper coated with platinum-loaded carbon on the surface was used as the oxygen reduction electrode 201, 100 mesh nickel wire mesh was used as the porous positive electrode current collector 112, nickel-plated stainless steel was used as the negative electrode current collector 21, 60 mesh nickel wire mesh was used as the porous negative electrode current collector 111, an anion exchange membrane was used as the ion permeable membrane 106, and a butyl elastomer was used as the seal material 107.

### [Filling the fluid hydrogen carrier with hydrogen]

This section explains the method for filling the fluid hydrogen carrier used in Example 18 with hydrogen. 12 mL of Example 18 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 18 is explained below. A hydrogen-filled fluid hydrogen carrier 14 was removed from the negative electrode tank 410 of the hydrogen filling system described above and then placed in the negative electrode tank 410 of the power generation device 200A. The hydrogen-filled fluid hydrogen carrier 14 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 5.669 A·h, and the average discharge voltage was 0.80 V. The volume of the fluid hydrogen carrier 10 that was input into the power generation device in Example 18 was measured to be 10.3 mL. In other words, the discharge capacity density was equivalent to 550 A·h /L. The A·h efficiency in Example 18 was 99.6%.

### <Example 19>

The fluid hydrogen carrier used in Example 19 is the same as that used in Examples 1-2. In Example 19, a third hydrogen filling and power generation device, as shown in Figure 16, is used, which allows hydrogen filling and power generation to be carried out in a single device.

### [Preparation of the hydrogen filling and power generation device]

The method for preparing the hydrogen filling and power generation device related to Example 19 is explained. The third hydrogen filling and power generation device 300C shown in Figure 16 was prepared.

A nickel-plated stainless steel was used as the positive electrode current collector 103, a nickel porous body with a pyrochlore-type bismuth-iridium oxide coating on the surface was used as the dual electrode 301, a 100 mesh nickel wire mesh was used as the porous positive electrode current collector 112, a nickel-plated stainless steel was used as the negative electrode current collector 21, a 60 mesh nickel wire mesh was used as the porous negative electrode current collector 111, an anion exchange membrane was used as the ion permeable membrane 106, and a butyl elastomer was used as the seal material 107.

### [Preparation of the hydrogen filling and power generation system]

The preparation method for the hydrogen filling and power generation system related to Example 19 is explained. A hydrogen filling system as shown in Figure 22 was prepared. A polypropylene tank was used as the negative electrode tank 410, a tube pump was used as the negative electrode pressurization/depressurization device 420, a tube pump was used as the positive electrode pressurization/depressurization device 440, a φ1.5mm polypropylene tube was used as the device flow path 460. In Example 19, since it is not a laminated cell, the inter-device flow path is not used. In addition, in Example 19, the positive electrode tank 430 is not used because air is flowed.

### [Filling the fluid hydrogen carrier with hydrogen]

This section explains the method for filling the fluid hydrogen carrier used in Example 19 with hydrogen. 12 mL of Example 19 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 19 is explained below. The positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 6.604 Ah, and the average discharge voltage was 0.70 V. The volume of the fluid hydrogen carrier 10 that was fed into the power generation device of Example 19 was measured to be 12 mL. This is because it is possible to fill with hydrogen and generate power using a single device, so there is no need to extract and transfer the fluid hydrogen carrier. In other words, the discharge capacity density is equivalent to 550 Ah/L. The Ah efficiency in Example 19 was 99.8%.

### <Example 20>

The fluid hydrogen carrier used in Example 20 is the same as that used in Examples 1-2. In Example 20, the fourth hydrogen filling and power generation device shown in Figure 17, which enables hydrogen filling and power generation in a single device, is used.

### [Preparation of the hydrogen filling and power generation device]

This section explains the method for preparing the hydrogen filling and power generation device related to Example 20. The fourth hydrogen filling and power generation device 300D shown in Figure 17 was prepared. A nickel-plated stainless steel was used as the positive electrode current collector 103, a 100 mesh nickel wire mesh was used as the porous positive electrode current collector 112, a nickel-plated stainless steel was used as the negative electrode current collector 21, a 60 mesh nickel wire mesh was used as the porous negative electrode current collector 111, an anion exchange membrane was used as the ion permeable membrane 106, and a butyl elastomer was used as the seal material 107.

### [Preparation of hydrogen filling and power generation system]

The preparation method for the hydrogen filling and power generation system related to Example 20 is explained. A hydrogen filling system was prepared as shown in Figure 22. A polypropylene tank was used as the negative electrode tank 410, a polypropylene tank was used as the positive electrode tank 430, a tube pump was used as the negative electrode pressurization/depressurization device 420, a tube pump was used as the positive electrode pressurization/depressurization device 440, and a φ1.5 mm polypropylene tube was used as the device flow path 460. Since Example 20 is not a laminated cell, it does not use an inter-device flow path.

### [Filling the fluid hydrogen carrier with hydrogen]

This section explains the method for filling the fluid hydrogen carrier used in Example 20 with hydrogen. 12 mL of Example 20 the fluid hydrogen carrier was put into the negative electrode tank 410 of the hydrogen filling system, and 10 mL of a 6 mol/L potassium hydroxide aqueous solution was put into the positive electrode tank 430. The fluid hydrogen carrier 10 was flowed at a flow rate of 5 mL/min using the negative electrode pressurization/depressurization device 420, and the 6 mol/L potassium hydroxide aqueous solution was flowed at a flow rate of 5 mL/min using the positive electrode pressurization/depressurization device 440.

In this state, the positive electrode current collector 103 and the negative electrode current collector 101 of the hydrogen filling device were connected to the positive electrode and negative electrode of the Hokuto Denko charge/discharge device, respectively, and charged to a capacity of 6.624 A·h at a current value of 30 mA/cm² for the area of the ion permeable membrane 106. The capacity of 6.624 Ah corresponds to a capacity density of 552 Ah/L, as the amount of fluid hydrogen carrier injected was 12 mL.

### [Power generation using the fluid hydrogen carrier]

The power generation method for Example 20 is explained below. The positive electrode current collector 103 and the negative electrode current collector 101 of the hydrogen filling device were connected to the positive and the negative electrodes of the Hokuto Denko charge/discharge device, respectively, and discharge was carried out until a voltage of 0.4 V was reached at a current value of 30 mA/cm² for the area of the ion permeable membrane 106. The discharge capacity was 4.789 Ah, and the average discharge voltage was 1.2 V. This was because the redox potential of the positive electrode, nickel hydroxide, was high, so a higher voltage was obtained than in Example 1-2. When the volume of the fluid hydrogen carrier 10 that was fed into the power generation device of Example 20 was measured, it was 12 mL. This is because it is possible to fill with hydrogen and generate power using a single device, so there is no need to extract and transfer the fluid hydrogen carrier. In other words, the discharge capacity density is equivalent to 399 Ah/L. The AAh efficiency in Example 20 was 72.3%. The reason for the low AAh efficiency is thought to be that the AAh efficiency of the nickel hydroxide slurry was low, and it was not possible to sufficiently desorb hydrogen from the hydrogen storage alloy.

Examples 1-2 and 18-20 have different structures for the hydrogen filling and power generation device. The results are shown in Table 6.

**[Table 6]**

| | hydrogen filling device | power generation device | Charge capacity density when filling with hydrogen (Ah/L) | Discharge capacity density during power generation (Ah/L) | Ah efficiency (%) | Average discharge voltage (V) | Energy density during power generation (Wh/L) |
|---|---|---|---|---|---|---|---|
| Example 1-2 | hydrogen filling device 20 | power generation device 30 | 552 | 550 | 99.7 | 0.77 | 424 |
| Example 18 | second hydrogen filling device 60 | second power generation device 70 | 552 | 550 | 99.6 | 0.80 | 440 |
| Example 19 | third hydrogen filling and power generation device 80 | | 552 | 550 | 99.8 | 0.80 | 440 |
| Example 20 | third hydrogen filling and power generation device 90 | | 552 | 399 | 72.3 | 1.20 | 479 |

According to Table 6, it can be seen that Example 18, which uses the porous current collector, has a higher voltage than Examples 1-2, which do not use one. This is thought to be because the resistance of the device has been reduced due to the positive and negative electrodes being closer together when collecting the current. In addition, the structure of Example 19, which allows hydrogen filling and power generation to be carried out in a single cell, also achieves power generation characteristics that are almost the same as those of Example 18, which requires different devices for hydrogen filling and power generation. However, the discharge voltage is slightly lower. This is thought to be due to the high overpotential for oxygen reduction of the bifunctional catalyst. In addition, in Example 20, which uses a structure for an air battery that does not use oxygen, but uses a slurry containing nickel hydroxide for the positive electrode, a high voltage can be obtained, although the Ah efficiency is lower than in the other examples. This is advantageous in terms of the amount of energy, Wh, which is the product of voltage, V, and capacity, Ah. From the above results, it was confirmed that the hydrogen filling device and power generation device used in each of the examples were effective for filling hydrogen into the fluid hydrogen carrier and for power generation.

The following describes different examples of short-circuit prevention structures for hydrogen filling and power generation devices connected in series.

### <Comparison Example 8>

Comparison Example 8 is a bipolar structure with a hydrogen filling device and a power generation device connected in series.

### [Preparation of the fluid hydrogen carrier]

The fluid hydrogen carrier used in Comparative Example 8 is the same as that used in Examples 1-2.

### [Preparation of the hydrogen filling and power generation device]

The method of preparing the hydrogen filling and power generation device for Comparative Example 8 is explained. The fifth hydrogen filling and power generation device 300E shown in Figure 20 was prepared. A nickel-plated stainless steel was used as the positive electrode current collector 103, a nickel porous body with a pyrochlore-type bismuth iridium oxide coating on the surface was used as the dual electrode 301, a 100 mesh nickel wire mesh was used as the porous positive electrode current collector 112, a nickel-plated stainless steel a was used as s the negative electrode current collector 21, a 60 mesh nickel wire mesh was used as the porous negative electrode current collector 111, an anion exchange membrane was used as the ion permeable membrane 106, a butyl elastomer was used as the seal material 107, and a nickel-plated stainless steel was used as the bipolar plate 121.

### [Preparation of hydrogen filling and power generation system]

The preparation method for the hydrogen filling and power generation system related to Comparative Example 8 is explained. A hydrogen filling system as shown in Figure 22 was prepared. A polypropylene tank was used as the negative electrode tank 410, a tube pump was used as the negative electrode pressurization/depressurization device 420, a tube pump was used as the positive electrode pressurization/depressurization device 440, a φ1.5mm polypropylene tube was used as the device flow path 460, and a φ1.5mm polypropylene tube was used as the inter-device flow path 450. In addition, the positive electrode tank 430 was not used in comparison example 8 because air was being flowed. In addition, in comparison example 8, the length of the short current path (the continuous inter-device flow path 450 and device flow path 460 between the hydrogen filling and power generation devices adjacent to each other across the bipolar plate 121) shown as a broken line in Figure 22 was set to 25 cm.

### [Filling the fluid hydrogen carrier with hydrogen]

This section explains the method for filling the fluid hydrogen carrier with hydrogen in relation to Comparative Example 8. 12 mL of fluid hydrogen carrier 10 was put into the negative electrode tank 410 of the hydrogen filling and power generation system 400A. The fluid hydrogen carrier 10 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and charging was carried out up to a capacity of 3.312 A·h at a current value of 30 mA/cm² for the area of the ion permeable membrane 106. The capacity of 3.312 A·h corresponds to a capacity density of 276 A·h/L, as the amount of fluid hydrogen carrier injected was 12 mL. As this is a two-in-series device, the voltage is double, and the energy content is the same as in previous examples.

### [Power generation using the fluid hydrogen carrier]

The power generation method for Comparison Example 8 is explained below. The positive electrode current collector 103 and the negative electrode current collector 101 of the hydrogen filling device were connected to the positive and the negative electrodes of the Hokuto Denko charge/discharge device, respectively, and the discharge was carried out until a voltage of 0.4 V was reached at a current value of 30 mA/cm² for the area of the ion permeable membrane 106. The discharge capacity was 1.411 Ah, and the average discharge voltage was 0.66 V. The volume of the fluid hydrogen carrier 10 that was input into the power generation device in Comparison Example 8 was measured to be 12 mL. This is because it is possible to fill the hydrogen and generate power using a single device, so there is no need to extract and transfer the fluid hydrogen carrier. In other words, the discharge capacity density is equivalent to 118 Ah/L. The Ah efficiency in Comparison Example 8 was 42.6%. In other words, the short-circuit was not prevented, and the hydrogen could not be sufficiently filled using the configuration of Comparison Example 8.

### <Example 21>

Example 21 is a bipolar structure with a hydrogen filling device and a power generation device connected in series, and the short-circuit path has been extended to prevent short-circuiting.

### [Preparation of the fluid hydrogen carrier]

The fluid hydrogen carrier used in Example 21 is the same as that used in Examples 1-2.

### [Preparation of the hydrogen filling and power generation device]

The method for preparing the hydrogen filling and power generation device for Example 21 is the same as that for Comparative Example 8.

### [Preparation of hydrogen filling and power generation system]

The method for preparing the hydrogen filling and power generation system in Example 21 is the same as that for Comparative Example 8, except that the length of the short current path (the continuous inter-device flow path 450 and device flow path 460 between the hydrogen filling and power generation devices adjacent to each other across the bipolar plate 121) shown as a broken line in Figure 22 is changed to 50 cm.

### [Filling the fluid hydrogen carrier with hydrogen]

This section explains the method for filling the fluid hydrogen carrier used in Example 21 with hydrogen. 12 mL of fluid hydrogen carrier 10 was put into the negative electrode tank 410 of the hydrogen filling and power generation system 400A. The fluid hydrogen carrier 10 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and charging was carried out up to a capacity of 3.312 A·h at a current value of 30 mA/cm² for the area of the ion permeable membrane 106. The capacity of 3.312 A·h corresponds to a capacity density of 276 A·h/L, as the amount of fluid hydrogen carrier injected was 12 mL. As this is a two-in-series connection device, the voltage is double, and the amount of energy is the same as in previous examples.

### [Power generation using the fluid hydrogen carrier]

This section describes the power generation method for Example 21. The positive electrode current collector 103 and the negative electrode current collector 101 of the hydrogen filling device were connected to the positive electrode and the negative electrode of the Hokuto Denko charge/discharge device, respectively, and discharge was carried out until a voltage of 0.4 V was reached at a current value of 30 mA/cm² for the area of the ion permeable membrane 106. The discharge capacity was 3.246 A·h, and the average discharge voltage was 1.53 V. When the volume of the fluid hydrogen carrier 10 that was fed into the power generation device in Example 21 was measured, it was 12 mL. This is because it is possible to fill with hydrogen and generate power using a single device, so there is no need to extract and transfer the fluid hydrogen carrier. In other words, this is equivalent to a discharge capacity density of 270 A/h/L. The A/h efficiency in the example was 97.8%. Compared to Example 19, which is not laminated, Example 21 was able to obtain approximately double the voltage, and due to the high A/h efficiency, it is thought that the short current was sufficiently prevented by the composition of Example 21.

### <Example 22>

Example 22 is a bipolar structure in which a hydrogen filling device and a power generation device are connected in series, and a liquid dividing device 461 is provided to prevent the short-circuit.

### [Preparation of the fluid hydrogen carrier]

The fluid hydrogen carrier used in Example 22 is the same as that used in Examples 1-2.

### [Preparation of the hydrogen filling and power generation device]

The method for preparing the hydrogen filling and power generation device for Example 22 is the same as that for Comparative Example 8.

### [Preparation of hydrogen filling and power generation system]

The preparation method for the hydrogen filling and power generation system related to Example 22 is explained. A second hydrogen filling and power generation system 400B was prepared as shown in Figure 23.
A polypropylene tank was used as the negative electrode tank 410, a tube pump was used as the negative electrode pressurization/depressurization device 420, a tube pump was used as the positive electrode pressurization/depressurization device 440, a polypropylene tube with a diameter of 1.5 mm was used as the device flow path, a drip chamber was used as the liquid-dividing device 151. In addition, in Example 22, the positive electrode tank 430 is not used because air is being flowed. In Example 22, the length of the short current path (the continuous inter-device flow path 450 and device flow path 460 between the hydrogen filling and power generation devices adjacent to each other across the bipolar plate 121), shown as a broken line in Figure 22, was set to 5 cm.

### [Filling the fluid hydrogen carrier with hydrogen]

This section explains the method for filling the fluid hydrogen carrier with hydrogen as described in Example 22. The second hydrogen filling and 12 ml of fluid hydrogen carrier 10 was put into the negative electrode tank 410 of the power generation system 400B. The fluid hydrogen carrier 10 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and charged to a capacity of 3.312 A·h at a current value of 30 mA/cm² for the area of the ion permeable membrane 106. The capacity of 3.312 A·h corresponds to a capacity density of 276 A·h/L, as the amount of fluid hydrogen carrier injected was 12 mL. As this is a two-in-series device, the voltage is double, and the amount of energy (Wh) expressed as capacity density x voltage is the same as in previous examples.

### [Power generation using the fluid hydrogen carrier]

The power generation method for Example 22 is explained below. The positive electrode current collector 103 and the negative electrode current collector 101 of the hydrogen filling device were connected to the positive electrode and the negative electrode of the Hokuto Denko charge/discharge device, respectively, and discharge was carried out until a voltage of 0.4 V was reached at a current value of 30 mA/cm² for the area of the ion permeable membrane 106. The discharge capacity was 3.213 A·h, and the average discharge voltage was 1.54 V. When the volume of the fluid hydrogen carrier 10 that was fed into the power generation device of Example 22 was measured, it was 12 mL. This is because it is possible to fill with hydrogen and generate power using a single device, so there is no need to extract and transfer the fluid hydrogen carrier. In other words, the discharge capacity density is equivalent to 267 A/h/L. The A/h efficiency in Example 22 was 96.7%. Compared to Example 19, which is not laminated, Example 22 was able to obtain approximately double the voltage, and due to the high A/h efficiency, it is thought that the short-circuit current can be sufficiently prevented even with a short short-circuit path due to the configuration of Example 22.

### <Example 22>

Example 23 is a bipolar structure with a hydrogen filling device and a power generation device connected in series, and it has a valve that can be opened and closed to prevent short circuits.

### [Preparation of the fluid hydrogen carrier]

The fluid hydrogen carrier used in Example 23 is the same as that used in Examples 1-2.

### [Preparation of the hydrogen filling and power generation device]

The method for preparing the hydrogen filling and power generation device for Example 23 is the same as that for Comparative Example 8.

### [Preparation of hydrogen filling and power generation system]

The preparation method for the hydrogen filling and power generation system related to Example 23 is explained. A third hydrogen filling and power generation system 400C was prepared as shown in Figure 24. A polypropylene tank was used as the negative electrode tank 410, a tube pump was used as the negative electrode
pressurization/depressurization device 420, a tube pump was used as the positive electrode
pressurization/depressurization device 440, a 1.5 mm diameter polypropylene tube was used as the device flow path 460, a 1.5 mm diameter polypropylene tube was used as the inter-device flow path 450, and an electromagnetic valve was used the open/closeable valve 462. In addition, in Example 23, the positive electrode tank 430 is not used because air is being flowed. In Example 23, the length of the short current path (the continuous inter-device flow path 450 and device flow path 460 between the hydrogen filling and power generation devices adjacent to each other across the bipolar plate 121), shown as a broken line in Figure 22, was set to 5 cm.

### [Filling the fluid hydrogen carrier with hydrogen]

The following explains the method of filling the fluid hydrogen carrier in Example 23. 12 mL of fluid hydrogen carrier 10 was put into the negative electrode tank 410 of the third hydrogen filling and power generation system 400C. The fluid hydrogen carrier 10 was flowed at a flow rate of 5 mL/min using the negative electrode pressurization/depressurization device 420. The solenoid valve was used as a valve that could be opened and closed, and at the same time, the valve connected to one of the devices in the series was opened. At that time, the other valves were kept closed. After one second, the valve connected to that one device was closed, and then the valve connected to the next device was opened for one second, and this operation was repeated. In addition, air was flowed at a flow rate of 5 mL/min through the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and charged to a capacity of 3.312 A·h at a current value of 30 mA/cm² for the area of the ion permeable membrane 106. The capacity of 3.312 A·h corresponds to a capacity density of 276 A·h/L, as the amount of fluid hydrogen carrier injected was 12 mL. As this is a two-in-series device, the voltage is double, and the amount of energy (Wh) expressed as capacity density x voltage is the same as in previous examples.

### [Power generation using the fluid hydrogen carrier]

The power generation method for Example 23 is explained below. The positive electrode current collector 103 and the negative electrode current collector 101 of the hydrogen filling device were connected to the positive electrode and the negative electrode of the Hokuto Denko charge/discharge device, respectively, and the discharge was carried out until a voltage of 0.4 V was reached at a current value of 30 mA/cm² for the area of the ion permeable membrane 106. The discharge capacity was 3.252 A·h, and the average discharge voltage was 1.54 V. When the volume of the fluid hydrogen carrier 10 that was fed into the power generation device of Example 23 was measured, it was 12 mL. This is because it is possible to fill with hydrogen and generate power using a single device, so there is no need to extract and transfer the fluid hydrogen carrier. In other words, this corresponds to a discharge capacity density of 271 Ah/L. The Ah efficiency in Example 23 was 98.1%. Compared to Example 19, which is not laminated, Example 23 was able to obtain approximately double the voltage, and due to the high Ah efficiency, it is thought that the short-circuit current can be path due to the configuration of Example 23.

Comparative Example 8 and Examples 21 to 23 have different short-circuit prevention structures for the hydrogen filling device and power generation device connected in series. The effects of these are shown in Table 7.

**[Table 7]**

| | Short-circuit prevention structure | Effect of preventing shortness | Charge capacity density when filling with hydrogen (Ah/L) | Discharge capacity density during power generation (Ah/L) | Ah efficiency (%) | Average discharge voltage (V) | Energy density during power generation (Wh/L) |
|---|---|---|---|---|---|---|---|
| Comparison Example 8 | Distance 25 cm | No | 276 | 118 | 42.6 | 0.66 | 424 |
| Example 21 | Distance 50 cm | Yes | 276 | 270 | 97.8 | 1.53 | 440 |
| Example 22 | dripping | Yes | 276 | 268 | 96.7 | 1.54 | 440 |
| Example 23 | valve | Yes | 276 | 271 | 98.1 | 1.54 | 479 |

According to Table 7, in the case of Example 8, where the short-circuit path length is 25 cm, the voltage has not doubled, even though it is a series-connected cell. And the Ah efficiency is also low. In other words, the short circuit is not being suppressed. On the other hand, in the case of Example 21, where the short circuit distance is 50 cm, Example 22, which uses a liquid dividing device 461, and Example 23, which uses a valve 462 that can be opened and closed, the voltage is doubled and the Ah efficiency is high. In other words, we have confirmed that Examples 21 to 23 of the present invention are effective as a means of suppressing short circuits in the series-connected hydrogen filling device and power generation device for filling hydrogen into the fluid hydrogen carrier and for generating power using the fluid hydrogen carrier.

The following describes other example of the present invention.

### <Example 24>

The fluid hydrogen carrier of the present invention may be removed from the hydrogen filling device and transported after being filled with hydrogen. In order to remove the fluid hydrogen carrier with a higher hydrogen filling depth, it is better not to mix the fluid hydrogen carrier that has not been filled with hydrogen with the fluid hydrogen carrier that has been filled with hydrogen. In Example 24, the second negative electrode tank 470 and the second positive electrode tank 480 can be separated and stored as a negative electrode tank that stores hydrogen-filled fluid hydrogen carriers 14 and a negative electrode tank that stores fluid hydrogen carriers 10 before hydrogen filling.

### [Preparation of the fluid hydrogen carrier]

The fluid hydrogen carrier used in Example 24 is the same as that used in Examples 1-2.

### [Preparation of the hydrogen filling and power generation device]

The method for preparing the hydrogen filling and power generation device for Example 24 is the same as that for Comparative Example 8.

### [Preparation of the hydrogen filling and power generation system]

The preparation method for the hydrogen filling and power generation system related to Example 24 is explained. The fourth hydrogen filling and power generation system 400D shown in Figure 25 was prepared. A polypropylene tank was used as the negative electrode tank 410, a polypropylene tank was used as the second negative electrode tank 171, a tube pump was used as the negative electrode pressurization/depressurization device 420, a tube pump was used as the positive electrode pressurization/depressurization device 440, a φ1.5 mm polypropylene tube was used as the device flow path 460, and a φ1.5 mm polypropylene tube was used as the inter-device flow path 450. In addition, in Example 24, the positive electrode tank 430 and the second positive electrode tank 172 are not used because air is being flowed. In addition, in Example 24, the length of the short current path (the continuous inter-device flow path 450 and device flow path 460 between the hydrogen filling and power generation devices adjacent to each other across the bipolar plate 121) shown as a broken line in Figure 22 was set to 25 cm.

### [Filling the fluid hydrogen carrier with hydrogen]

This section explains the method for filling the fluid hydrogen carrier in Example 24. 12 mL of fluid hydrogen carrier 10 was put into the negative electrode tank 410 of the fourth hydrogen filling and power generation system 400D. The fluid hydrogen carrier 10 was flowed at a flow rate of 1 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge device, respectively, and charging was carried out up to a capacity of 1.656 Ah at a current value of 30 mA/cm² for the area of the ion permeable membrane 106. This is equivalent to 50% of the capacity when the hydrogen is completely filled.

The capacity of 1.656 Ah corresponds to a capacity density of 138 Ah/L, as the amount of fluid hydrogen carrier injected is 12 mL. As it is a two-in-series connection device, the voltage is doubled.

### [Power generation using the fluid hydrogen carrier]

The power generation method related to Example 24 is explained. The hydrogen-filled fluid hydrogen carrier in the second negative electrode tank 171 of the fourth hydrogen filling and power generation system 400D was removed and put into the negative electrode tank 410.

The positive electrode current collector 103 and the negative electrode current collector 101 of the device were connected to the positive and negative electrodes of the Hokuto Denko charge-discharge device, respectively, and the discharge was carried out until a voltage of 0.4 V was reached at a current value of 30 mA/cm² for the area of the ion permeable membrane 106. The discharge capacity was 1.431 A·h, and the average discharge voltage was 1.53 V. When the volume of the fluid hydrogen carrier 10 that was fed into the power generation device of Example 24 was measured, it was 5 mL. In other words, the discharge capacity density was equivalent to 270 A·h/L. The A·h efficiency in Example 24 was 97.8%.

In other words, although 50% of the hydrogen was filled into the hydrogen filling device, only the fluid hydrogen carrier that was completely filled with hydrogen was stored in the second negative electrode tank. Therefore, the fluid hydrogen carrier extracted from there was in a state of 100% hydrogen filling, and it was confirmed that Example 24 was useful.

The following describes other example of the present invention.

### <Example 25>

Example 25 is the same hydrogen filling and power generation system as Example 19, except that liquid paraffin is added to the negative electrode tank. Liquid paraffin is lighter than the specific gravity of the fluid hydrogen carrier, so it is added to the upper layer of the negative electrode tank to prevent the evaporation of water in the fluid hydrogen carrier.

### [Filling the fluid hydrogen carrier with hydrogen]

This section explains the method for filling the fluid hydrogen carrier used in Example 25. 12 mL of fluid hydrogen carrier 10 was put into the negative electrode tank 410 of the hydrogen filling and power generation system 400A. The fluid hydrogen carrier 10 was flowed at a flow rate of 5 mL/min using the negative electrode pressurization/depressurization device 420, and air was flowed at a flow rate of 5 mL/min using the positive electrode pressurization/depressurization device 440.

In this state, the positive electrode current collector 103 and the negative electrode current collector 101 of the hydrogen filling device were connected to the positive electrode and the negative electrode of the Hokuto Denko charge/discharge The capacity of 6.624 Ah corresponds to a capacity density of 552 Ah/L, as the amount of fluid hydrogen carrier injected was 12 mL.

### [Power generation using the fluid hydrogen carrier]

The power generation method for Example 25 is explained below. The positive electrode current collector 103 and the negative electrode current collector 101 of the hydrogen filling device were connected to the positive electrode and the negative electrode of the Hokuto Denko charge/discharge device, respectively, and the discharge was performed until a voltage of 0.4 V was reached at a current value of 30 mA/cm² for the area of the ion permeable membrane 106. The discharge capacity was 6.604 Ah, and the average discharge voltage was 0.70 V. The volume of the fluid hydrogen carrier 10 that was input into the power generation device of Example 25 was measured to be 12 mL. This is because it is possible to fill with hydrogen and generate power using a single device, so there is no need to extract and transfer the fluid hydrogen carrier. In other words, the discharge capacity density is equivalent to 550 Ah/L. The Ah efficiency in Example 25 was 99.8%.

### [Measuring the solid content ratio after hydrogen filling and power generation cycles]

The above-mentioned hydrogen filling and power generation operations were repeated 50 times. After the 50th power generation, 1.0g of fluid hydrogen carrier was extracted and vacuum dried at 80°C for 12 hours. The weight after vacuum drying was 0.75g. In other words, the solid content ratio in Example 25 was 75%.

### <Comparison Example 9>

Comparison Example 9 is the same hydrogen filling and power generation system as Example 24, except that no liquid paraffin is added to the negative electrode tank.

### [Measuring the solid content ratio after hydrogen filling and power generation cycles]

The above-mentioned hydrogen filling and power generation operations were repeated 50 times. After the 50th power generation, 1.0g of fluid hydrogen carrier was extracted and vacuum dried at 80°C for 12 hours. The weight after vacuum drying was 0.79g. In other words, the solid content ratio in Comparison Example 9 was 79%.

From the above results, it can be seen that by adding liquid paraffin, which has a lower specific gravity than the fluid hydrogen carrier and is a hydrophobic liquid, to the negative electrode tank, it is possible to suppress the increase in the solid content ratio of the fluid hydrogen carrier. In other words, it can be seen that the composition of each example suppresses the volatility of the water in the fluid hydrogen carrier.

The embodiment of the invention is as follows.
<1> A fluid hydrogen carrier containing a hydrogen storage alloy and an alkaline electrolyte.
<2> The fluid hydrogen carrier according to <1>, wherein the ratio of the hydrogen storage alloy to the total of the fluid hydrogen carrier is 15% or more by volume.
<3> The fluid hydrogen carrier according to <1> or <2>, wherein the median diameter of the hydrogen storage alloy is 50 µm or less.
<4> The fluid hydrogen carrier according to any one of <1> to <3>, wherein the viscosity at a shear rate of 100 sec⁻¹ is 100 mPa·sec or more.
<5> The fluid hydrogen carrier according to any one of <1> to <4>, containing a water-soluble organic polymer with a weight average molecular weight of 1500 or more.
<6> The fluid hydrogen carrier according to <5>, wherein the water-soluble organic polymer is a polyacrylate.
<7> The fluid hydrogen carrier according to any one of <1> to <6>, containing a thixotropic agent.
<8> The fluid hydrogen carrier according to any one of <1> to <7>, containing a carbon black with a median diameter of 1 µm or less.
<9> A method for producing the fluid hydrogen carrier according to any one of <1> to <8>, containing a process for heating a mixture of a hydrogen storage alloy and an alkaline solution at a temperature of 80°C or higher.
<10> The method for producing a fluid hydrogen carrier according to any one of <1> to <8>, containing a process for crushing the hydrogen storage alloy while the hydrogen storage alloy and an alkaline solution are mixed.
<11> A charge-discharge cell containing a negative current collector, a positive current collector, an oxygen electrode catalyst, and an ion permeable membrane,
   wherein a part of the negative current collector is electrically connected to the fluid hydrogen carrier according to any one of <1> to <8>,
   a part of the positive current collector is electrically connected to the oxygen electrode catalyst,
   a portion of the oxygen electrode catalyst is ionically connected to the ion permeable membrane,
   the ion permeable membrane is provided to isolate the negative electrode current collector and the positive electrode current collector, and
   a portion of the fluid hydrogen carrier is ionically connected to the ion permeable membrane.
<12> A secondary battery containing the charge-discharge cell according to <11>.
<13> A hydrogen filling device containing a negative electrode current collector, a negative electrode void capable of filling the fluid hydrogen carrier according to any one of claims <1> to <8>, a positive electrode current collector, a cathode void, an oxygen evolution electrode, and an ion permeable membrane,
   wherein the negative electrode void is in contact with both the negative electrode current collector and the ion permeable membrane,
   the positive electrode void is in contact with the oxygen evolution catalyst,
   a part of the positive electrode current collector is electrically connected to the oxygen evolution catalyst,
   a part of the oxygen evolution catalyst is in contact with an alkaline aqueous solution,
   a part of the oxygen evolution catalyst is ionically connected to the ion permeable membrane, and
   the ion permeable membrane is provided to isolate the negative current collector and the positive current collector.
<14> The hydrogen filling device according to in <13>, applying a voltage between the negative electrode current collector and the positive electrode current collector while the fluid hydrogen carrier is filled or flowed into a part or all of the negative electrode void, to fill hydrogen into the fluid hydrogen carrier.
<15> The hydrogen filling device according to in <13>, applying a voltage between the negative electrode current collector and the positive electrode current collector while the alkaline electrolyte is filled or flowed into a part or all of the positive electrode void, to fill hydrogen into the fluid hydrogen carrier.
<16> A power generation device containing a negative electrode current collector, a negative electrode void capable of filling the fluid hydrogen carrier according to any one of <1> to <8> that has been filled with hydrogen, a positive electrode current collector, a positive electrode void, an oxygen reduction catalyst, and an ion permeable membrane,
   wherein the negative electrode void is in contact with both the negative electrode current collector and the ion permeable membrane,
   the positive electrode void is in contact with the oxygen reduction catalyst,
   a part of the positive electrode current collector is electrically connected to the oxygen reduction catalyst,
   a part of the oxygen reduction catalyst is ionically connected to the ion permeable membrane,
   a portion of the oxygen reduction catalyst is in contact with air, and
   the ion permeable membrane is provided to isolate the negative electrode current collector and the positive electrode current collector.
<17> The power generation device according to <16>, wherein a load is connected between the negative electrode current collector and the positive electrode current collector while the fluid hydrogen carrier is filled or flowed into a part or all of the negative electrode void.
<18> The power generation device according to <16> or <17>, wherein a load is connected between the negative electrode current collector and the positive electrode current collector while oxygen or air is filled or flowed into a part or all of the positive electrode void.
<19> A hydrogen filling and power generation device containing a negative electrode current collector, a negative electrode void capable of filling the fluid hydrogen carrier according to any one of <1> to <18>, a positive electrode current collector, a positive electrode void, a bifunctional catalyst capable of both oxygen generation and oxygen reduction, and an ion permeable membrane,
   wherein the negative electrode void being in contact with both the negative electrode current collector and the ion permeable membrane,
   the positive electrode void is in contact with the bifunctional catalyst,
   a portion of the positive electrode current collector is electrically connected to the bifunctional catalyst,
   a portion of the bifunctional catalyst is in contact with air or an alkaline aqueous solution, and
   the ion permeable membrane is provided to isolate the negative electrode current collector and the positive electrode current collector.
<20> The hydrogen filling and power generation device according to <19>,
   wherein hydrogen is filled into the fluid hydrogen carrier by applying a voltage between the negative electrode current collector and the positive electrode current collector while the fluid hydrogen carrier is filled or flowed into the negative electrode void and a power is generated by connecting a load between the negative electrode current collector and the positive electrode current collector.
<21> The hydrogen filling and power generation device according to <19> or <20>,
   wherein hydrogen is filled into the fluid hydrogen carrier by applying a voltage between the negative electrode current collector and the positive electrode current collector while the alkaline electrolyte is filled or flowed into a part or all of the positive electrode void and a power is generated by connecting a load between the negative electrode current collector and the positive electrode current collector while oxygen or air is flowed into a part or all of the positive electrode void.
<22> A hydrogen filling and power generation device containing a negative electrode current collector, a negative electrode void capable of filling with a fluid hydrogen carrier, a positive electrode current collector, a positive electrode void, and an ion permeable membrane,
   wherein the negative electrode void is in contact with both the negative electrode current collector and the ion permeable membrane,
   the positive electrode void is in contact with both the positive electrode current collector and the ion permeable membrane, and
   the ion permeable membrane is provided to isolate the negative electrode current collector and the positive electrode current collector.
<23> The hydrogen filling and power generation device according to <22>, wherein hydrogen is filled into the fluid hydrogen carrier by applying a voltage between the negative electrode current collector and the positive electrode current collector and a power is generated by connecting a load between the negative electrode current collector and the positive electrode current collector while the fluid hydrogen carrier is filled or flowed into a part or all of the negative electrode void and a fluid nickel hydroxide slurry is filled or flowed into a part or all of the positive electrode void.
<24> The hydrogen filling device according to any one of <13> to <15>, wherein a part of the positive electrode current collector, the negative electrode current collector or both is made of a porous conductor having a through hole in the thickness direction, and a part of it is in contact with the ion permeable membrane.
<25> The hydrogen filling device according to any one of <13> to <15>, wherein multiple hydrogen filling devices are stacked via a bipolar plate that is used for both the negative electrode current collector and the positive electrode current collector.
<26> The power generation device according to any one of claims 16 to 18, wherein a part of the positive electrode current collector, the negative electrode current collector or both is made of a porous conductor having a through hole in the thickness direction, and a part of it is in contact with the ion permeable membrane.
<27> The power generation device according to any one of <16> to <18>, wherein multiple hydrogen filling devices are stacked via a bipolar plate that is used for both the negative electrode current collector and the positive electrode current collector.
<28> The hydrogen filling and power generation device according to <19> to <23>, wherein a part of the positive electrode current collector, the negative electrode current collector or both is made of a porous conductor having a through hole in the thickness direction, and a part of it is in contact with the ion permeable membrane.
<29> The hydrogen filling and power generation device according to <19> to <23>, wherein multiple hydrogen filling devices are stacked via a bipolar plate that is used for both the negative electrode current collector and the positive electrode current collector.
<30> A hydrogen filling system containing a storage tank for the fluid hydrogen carrier, the fluid nickel hydroxide slurry, or the alkaline electrolyte,
   the tank is connected to the hydrogen filling device according to any one of <13> to <15>, the positive electrode void or the negative electrode void, and
   the hydrogen filling system contains a pressurization/depressurization device capable of filling/discharging the fluid hydrogen carrier, the fluid nickel hydroxide slurry, air, oxygen, or the alkaline electrolyte into the positive electrode void or the negative electrode void.
<31> The hydrogen filling system according to <30>, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
   wherein the shortest length of the flow channel composed of the insulating material that is continuous from one bipolar plate to another is 20 cm or more.
<32> The hydrogen filling system according to <30>, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
   wherein in the flow channel composed of the insulating material, the fluid hydrogen carrier, the fluid nickel hydroxide slurry, or the alkaline electrolyte is discontinuous.
<33> The hydrogen filling system according to any one of <30> to <32>, wherein a valve that can be opened and closed is provided in the flow channel for filling/discharging the fluid hydrogen carrier, the fluid nickel hydroxide slurry, air, oxygen, or the alkaline electrolyte into/from the voids of each of the stacked multiple hydrogen filling devices.
<34> The hydrogen filling system according to any one of <30> to <33>, wherein a tank for storing the fluid hydrogen carrier after hydrogen filling is separated from a tank for storing the fluid hydrogen carrier after power generation.
<35> The hydrogen filling system according to any one of <30> to <34>, wherein a hydrophobic liquid with a specific gravity of 1.5 or less and a boiling point of 150°C or more is mixed in the tank.
<36> A power generation system containing a storage tank for the fluid hydrogen carrier, the fluid nickel hydroxide slurry, or the alkaline electrolyte,
   wherein the tank is connected to the positive or negative electrode void of the power generation device according to any one of <16> to <18>, and
   the power generation system contains a pressurization/depressurization device capable of filling/discharging the fluid hydrogen carrier, the fluid nickel hydroxide slurry, air, oxygen, or the alkaline electrolyte into the positive electrode void or the negative electrode void.
<37> The power generation system according to <36>, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
   wherein the shortest length of the flow channel composed of the insulating material that is continuous from one bipolar plate to another is 20 cm or more.
<38> The power generation system according to <36>, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
   wherein in the flow channel composed of the insulating material, the fluid hydrogen carrier, the fluid nickel hydroxide slurry, or the alkaline electrolyte is discontinuous.
<39> The power generation system according to any one of <36> to <38>, wherein a valve that can be opened and closed is provided in the flow channel for filling/discharging the fluid hydrogen carrier, the fluid nickel hydroxide slurry, air, oxygen, or the alkaline electrolyte into/from the voids of each of the stacked multiple power generation devices.
<40> The power generation system according to any one of <36> to <39>, wherein a tank for storing the fluid hydrogen carrier after hydrogen filling is separated from a tank for storing the fluid hydrogen carrier after power generation.
<41> The power generation system according to any one of <36> to <40>, wherein a hydrophobic liquid with a specific gravity of 1.5 or less and a boiling point of 150°C or more is mixed in the tank.
<42> A hydrogen filling and power generating system containing a storage tank for the fluid hydrogen carrier, the fluid nickel hydroxide slurry, or the alkaline electrolyte,
   the tank is connected to the positive electrode void or the negative electrode void of the hydrogen filling and power generation device according to any one of <19> to <23>, and
   the hydrogen filling and power generating system contains a pressurization/depressurization device capable of filling/discharging the fluid hydrogen carrier, the fluid nickel hydroxide slurry, air, oxygen, or the alkaline electrolyte into the positive electrode void or the negative electrode void.
<43> The hydrogen filling and power generating system according to <42>, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
   wherein the shortest length of the flow channel composed of the insulating material that is continuous from one bipolar plate to another is 20 cm or more.
<44> The hydrogen filling and power generating system according to <43>, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
   wherein in the flow channel composed of the insulating material, the fluid hydrogen carrier, the fluid nickel hydroxide slurry, or the alkaline electrolyte is discontinuous.
<45> The hydrogen filling and power generating system according to any one of <42> to <44>, wherein a valve that can be opened and closed is provided in the flow channel for filling/discharging the fluid hydrogen carrier, the fluid nickel hydroxide slurry, air, oxygen, or the alkaline electrolyte into/from the voids of each of the stacked hydrogen filling devices and power generating devices.
<46> The hydrogen filling and power generating system according to any one of <42> to <45>, wherein a tank for storing the fluid hydrogen carrier after hydrogen filling is separated from a tank for storing the fluid hydrogen carrier after power generation.
<47> The hydrogen filling and power generating system according to any one of <42> to <46>, wherein a hydrophobic liquid with a specific gravity of 1.5 or less and a boiling point of 150°C or more is mixed in the tank.
<48> An energy transport method for extracting the hydrogen-filled fluid hydrogen carrier or the fluid hydrogen carrier and the fluid nickel hydroxide slurry from the power generation system according to any one of <36> to <41> and transporting the hydrogen-filled fluid hydrogen carrier or the fluid hydrogen carrier and fluid nickel hydroxide slurry.
<49> An energy transport method for extracting the hydrogen-filled fluid hydrogen carrier or the fluid hydrogen carrier and the fluid nickel hydroxide slurry from the hydrogen filling and power generation system according to any one of <42> to <47> and transporting the hydrogen-filled fluid hydrogen carrier or the fluid hydrogen carrier and fluid nickel hydroxide slurry.

### Explanation of symbols

10, 26; Fluid hydrogen carrier
11, 261; Hydrogen storage alloy
12, 262; Alkaline electrolyte
13; Hydrogen-filled hydrogen storage alloy
14; Hydrogen-filled fluid hydrogen carrier
17, 27, 36, 108; Joint
20; Charge-discharge cell
21, 101; Negative electrode current collector
22, 103; Positive electrode current collector
23; Oxygen electrode catalyst
24; Ion permeable membrane
25, 34, 107; Seal material
30A, 30B; Secondary battery
31, 37; Tank
32, 38; Pump
35; Partition wall
53; Nickel hydroxide containing substance
100A; Hydrogen filling device
100B; Second hydrogen filling device
100C; Third hydrogen filling device
102; Negative electrode void
104; Positive electrode void
105; Oxygen-generating electrode
106; Ion permeable membrane
111; porous negative electrode current collector
112; Porous positive electrode current collector
121; Bipolar plate
200A; Power generation device
200B; Second power generation device
200C; Third power generation device
201; Oxygen reduction electrode
202; Oxygen-containing substance
300A; Hydrogen filling and power generation device
300B; Second hydrogen filling and power generation system
300C; Third hydrogen filling and power generation system
300D; Fourth hydrogen filling and power generation system
300E; Fifth hydrogen filling and power generation system
300F; Sixth hydrogen filling and power generation system
301; Bifunctional electrode
302; Slurry containing nickel hydroxide
303; Nickel hydroxide containing substance
304; Slurry containing nickel hydroxide
400A; Hydrogen filling and power generation system
400B; Second hydrogen filling and power generation system
400C; Third hydrogen filling and power generation system
400D; Fourth hydrogen filling and power generation system
410; Negative electrode tank
420; Negative electrode pressurization/depressurization device
430; Positive electrode tank
440; Positive electrode pressurization/depressurization device
450; Inter-device flow path
460; Device flow path
461; Liquid dividing device
462; Openable valve
470; Second negative electrode tank
480; Second positive electrode tank

## Claims

1. A fluid hydrogen carrier containing a hydrogen storage alloy and an alkaline electrolyte.

2. The fluid hydrogen carrier according to claim 1, wherein the ratio of the hydrogen storage alloy to the total of the fluid hydrogen carrier is 15% or more by volume.

3. The fluid hydrogen carrier according to claim 1 or 2, wherein the median diameter of the hydrogen storage alloy is 50 µm or less.

4. The fluid hydrogen carrier according to any one of claims 1 to 3, wherein the viscosity at a shear rate of 100 sec⁻¹ is 100 mPa·sec or more.

5. The fluid hydrogen carrier according to any one of claims 1 to 4, containing a water-soluble organic polymer with a weight average molecular weight of 1500 or more.

6. The fluid hydrogen carrier according to claim 5, wherein the water-soluble organic polymer is a polyacrylate.

7. The fluid hydrogen carrier according to any one of claims 1 to 6, containing a thixotropic agent.

8. The fluid hydrogen carrier according to any one of claims 1 to 7, containing a carbon black with a median diameter of 1 µm or less.

9. A method for producing the fluid hydrogen carrier according to any one of claims 1 to 8, containing a process for heating a mixture of a hydrogen storage alloy and an alkaline solution at a temperature of 80°C or higher.

10. The method for producing a fluid hydrogen carrier according to any one of claims 1 to 8, containing a process for crushing the hydrogen storage alloy while the hydrogen storage alloy and an alkaline solution are mixed.

11. A charge-discharge cell containing a negative current collector, a positive current collector, an oxygen electrode catalyst, and an ion permeable membrane,
wherein a part of the negative current collector is electrically connected to the fluid hydrogen carrier according to any one of claims 1 to 8,
a part of the positive current collector is electrically connected to the oxygen electrode catalyst,
a portion of the oxygen electrode catalyst is ionically connected to the ion permeable membrane,
the ion permeable membrane is provided to isolate the negative electrode current collector and the positive electrode current collector, and
a portion of the fluid hydrogen carrier is ionically connected to the ion permeable membrane.

12. A secondary battery containing the charge-discharge cell according to claim 11.

13. A hydrogen filling device containing a negative electrode current collector, a negative electrode void capable of filling the fluid hydrogen carrier according to any one of claims 1 to 8, a positive electrode current collector, a cathode void, an oxygen evolution electrode, and an ion permeable membrane,
wherein the negative electrode void is in contact with both the negative electrode current collector and the ion permeable membrane,
the positive electrode void is in contact with the oxygen evolution catalyst,
a part of the positive electrode current collector is electrically connected to the oxygen evolution catalyst,
a part of the oxygen evolution catalyst is in contact with an alkaline aqueous solution,
a part of the oxygen evolution catalyst is ionically connected to the ion permeable membrane, and
the ion permeable membrane is provided to isolate the negative current collector and the positive current collector.

14. The hydrogen filling device according to in claim 13, applying a voltage between the negative electrode current collector and the positive electrode current collector while the fluid hydrogen carrier is filled or flowed into a part or all of the negative electrode void, to fill hydrogen into the fluid hydrogen carrier.

15. The hydrogen filling device according to in claim 13, applying a voltage between the negative electrode current collector and the positive electrode current collector while the alkaline electrolyte is filled or flowed into a part or all of the positive electrode void, to fill hydrogen into the fluid hydrogen carrier.

16. A power generation device containing a negative electrode current collector, a negative electrode void capable of filling the fluid hydrogen carrier according to any one of claims 1 to 8 that has been filled with hydrogen, a positive electrode current collector, a positive electrode void, an oxygen reduction catalyst, and an ion permeable membrane,
wherein the negative electrode void is in contact with both the negative electrode current collector and the ion permeable membrane,
the positive electrode void is in contact with the oxygen reduction catalyst,
a part of the positive electrode current collector is electrically connected to the oxygen reduction catalyst,
a part of the oxygen reduction catalyst is ionically connected to the ion permeable membrane,
a portion of the oxygen reduction catalyst is in contact with air, and
the ion permeable membrane is provided to isolate the negative electrode current collector and the positive electrode current collector.

17. The power generation device according to claim 16, wherein a load is connected between the negative electrode current collector and the positive electrode current collector while the fluid hydrogen carrier is filled or flowed into a part or all of the negative electrode void.

18. The power generation device according to claim 16 or 17, wherein a load is connected between the negative electrode current collector and the positive electrode current collector while oxygen or air is filled or flowed into a part or all of the positive electrode void.

19. A hydrogen filling and power generation device containing a negative electrode current collector, a negative electrode void capable of filling the fluid hydrogen carrier according to any one of claims 1 to 8, a positive electrode current collector, a positive electrode void, a bifunctional catalyst capable of both oxygen generation and oxygen reduction, and an ion permeable membrane,
wherein the negative electrode void being in contact with both the negative electrode current collector and the ion permeable membrane,
the positive electrode void is in contact with the bifunctional catalyst,
a portion of the positive electrode current collector is electrically connected to the bifunctional catalyst,
a portion of the bifunctional catalyst is in contact with air or an alkaline aqueous solution, and
the ion permeable membrane is provided to isolate the negative electrode current collector and the positive electrode current collector.

20. The hydrogen filling and power generation device according to claim 19,
wherein hydrogen is filled into the fluid hydrogen carrier by applying a voltage between the negative electrode current collector and the positive electrode current collector while the fluid hydrogen carrier is filled or flowed into the negative electrode void and a power is generated by connecting a load between the negative electrode current collector and the positive electrode current collector.

21. The hydrogen filling and power generation device according to claim 19 or 20,
wherein hydrogen is filled into the fluid hydrogen carrier by applying a voltage between the negative electrode current collector and the positive electrode current collector while the alkaline electrolyte is filled or flowed into a part or all of the positive electrode void and a power is generated by connecting a load between the negative electrode current collector and the positive electrode current collector while oxygen or air is flowed into a part or all of the positive electrode void.

22. A hydrogen filling and power generation device containing a negative electrode current collector, a negative electrode void capable of filling with a fluid hydrogen carrier, a positive electrode current collector, a positive electrode void, and an ion permeable membrane,
wherein the negative electrode void is in contact with both the negative electrode current collector and the ion permeable membrane,
the positive electrode void is in contact with both the positive electrode current collector and the ion permeable membrane, and
the ion permeable membrane is provided to isolate the negative electrode current collector and the positive electrode current collector.

23. The hydrogen filling and power generation device according to claim 22,
wherein hydrogen is filled into the fluid hydrogen carrier by applying a voltage between the negative electrode current collector and the positive electrode current collector and a power is generated by connecting a load between the negative electrode current collector and the positive electrode current collector while the fluid hydrogen carrier is filled or flowed into a part or all of the negative electrode void and a fluid nickel hydroxide slurry is filled or flowed into a part or all of the positive electrode void.

24. The hydrogen filling device according to any one of claims 13 to 15, wherein a part of the positive electrode current collector, the negative electrode current collector or both is made of a porous conductor having a through hole in the thickness direction, and a part of it is in contact with the ion permeable membrane.

25. The hydrogen filling device according to any one of claims 13 to 15, wherein multiple hydrogen filling devices are stacked via a bipolar plate that is used for both the negative electrode current collector and the positive electrode current collector.

26. The power generation device according to any one of claims 16 to 18, wherein a part of the positive electrode current collector, the negative electrode current collector or both is made of a porous conductor having a through hole in the thickness direction, and a part of it is in contact with the ion permeable membrane.

27. The power generation device according to any one of claims 16 to 18, wherein multiple hydrogen filling devices are stacked via a bipolar plate that is used for both the negative electrode current collector and the positive electrode current collector.

28. The hydrogen filling and power generation device according to claims 19 to 23, wherein a part of the positive electrode current collector, the negative electrode current collector or both is made of a porous conductor having a through hole in the thickness direction, and a part of it is in contact with the ion permeable membrane.

29. The hydrogen filling and power generation device according to claims 19 to 23, wherein multiple hydrogen filling devices are stacked via a bipolar plate that is used for both the negative electrode current collector and the positive electrode current collector.

30. A hydrogen filling system containing a storage tank for the fluid hydrogen carrier, the fluid nickel hydroxide slurry, or the alkaline electrolyte,
the tank is connected to the hydrogen filling device according to any one of claims 13 to 15, the positive electrode void or the negative electrode void, and
the hydrogen filling system contains a pressurization/depressurization device capable of filling/discharging the fluid hydrogen carrier, the fluid nickel hydroxide slurry, air, oxygen, or the alkaline electrolyte into the positive electrode void or the negative electrode void.

31. The hydrogen filling system according to claim 30, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
wherein the shortest length of the flow channel composed of the insulating material that is continuous from one bipolar plate to another is 20 cm or more.

32. The hydrogen filling system according to claim 30, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
wherein in the flow channel composed of the insulating material, the fluid hydrogen carrier, the fluid nickel hydroxide slurry, or the alkaline electrolyte is discontinuous.

33. The hydrogen filling system according to any one of claims 30 to 32, wherein a valve that can be opened and closed is provided in the flow channel for filling/discharging the fluid hydrogen carrier, the fluid nickel hydroxide slurry, air, oxygen, or the alkaline electrolyte into/from the voids of each of the stacked multiple hydrogen filling devices.

34. The hydrogen filling system according to any one of claims 30 to 33, wherein a tank for storing the fluid hydrogen carrier after hydrogen filling is separated from a tank for storing the fluid hydrogen carrier after power generation.

35. The hydrogen filling system according to any one of claims 30 to 34, wherein a hydrophobic liquid with a specific gravity of 1.5 or less and a boiling point of 150°C or more is mixed in the tank.

36. A power generation system containing a storage tank for the fluid hydrogen carrier, the fluid nickel hydroxide slurry, or the alkaline electrolyte,
wherein the tank is connected to the positive or negative electrode void of the power generation device according to any one of claims 16 to 18, and
the power generation system contains a pressurization/depressurization device capable of filling/discharging the fluid hydrogen carrier, the fluid nickel hydroxide slurry, air, oxygen, or the alkaline electrolyte into the positive electrode void or the negative electrode void.

37. The power generation system according to claim 36, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
wherein the shortest length of the flow channel composed of the insulating material that is continuous from one bipolar plate to another is 20 cm or more.

38. The power generation system according to claim 36, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
wherein in the flow channel composed of the insulating material, the fluid hydrogen carrier, the fluid nickel hydroxide slurry, or the alkaline electrolyte is discontinuous.

39. The power generation system according to any one of claims 36 to 38, wherein a valve that can be opened and closed is provided in the flow channel for filling/discharging the fluid hydrogen carrier, the fluid nickel hydroxide slurry, air, oxygen, or the alkaline electrolyte into/from the voids of each of the stacked multiple power generation devices.

40. The power generation system according to any one of claims 36 to 39, wherein a tank for storing the fluid hydrogen carrier after hydrogen filling is separated from a tank for storing the fluid hydrogen carrier after power generation.

41. The power generation system according to any one of claims 36 to 40, wherein a hydrophobic liquid with a specific gravity of 1.5 or less and a boiling point of 150°C or more is mixed in the tank.

42. A hydrogen filling and power generating system containing a storage tank for the fluid hydrogen carrier, the fluid nickel hydroxide slurry, or the alkaline electrolyte,
the tank is connected to the positive electrode void or the negative electrode void of the hydrogen filling and power generation device according to any one of claims 19 to 23, and
the hydrogen filling and power generating system contains a pressurization/depressurization device capable of filling/discharging the fluid hydrogen carrier, the fluid nickel hydroxide slurry, air, oxygen, or the alkaline electrolyte into the positive electrode void or the negative electrode void.

43. The hydrogen filling and power generating system according to claim 42, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
wherein the shortest length of the flow channel composed of the insulating material that is continuous from one bipolar plate to another is 20 cm or more.

44. The hydrogen filling and power generating system according to claim 43, comprising an area having a flow channel composed of an insulating material for filling/discharging the fluid hydrogen carrier, the fluid nickel hydroxide slurry, air, oxygen, or the alkaline electrolyte into the voids of each of the stacked multiple hydrogen filling devices,
wherein in the flow channel composed of the insulating material, the fluid hydrogen carrier, the fluid nickel hydroxide slurry, or the alkaline electrolyte is discontinuous.

45. The hydrogen filling and power generating system according to any one of claims 42 to 44, wherein a valve that can be opened and closed is provided in the flow channel for filling/discharging the fluid hydrogen carrier, the fluid nickel hydroxide slurry, air, oxygen, or the alkaline electrolyte into/from the voids of each of the stacked hydrogen filling devices and power generating devices.

46. The hydrogen filling and power generating system according to any one of claims 42 to 45, wherein a tank for storing the fluid hydrogen carrier after hydrogen filling is separated from a tank for storing the fluid hydrogen carrier after power generation.

47. The hydrogen filling and power generating system according to any one of claims 42 to 46, wherein a hydrophobic liquid with a specific gravity of 1.5 or less and a boiling point of 150°C or more is mixed in the tank.

48. An energy transport method for extracting the hydrogen-filled fluid hydrogen carrier or the fluid hydrogen carrier and the fluid nickel hydroxide slurry from the power generation system according to any one of claims 36 to 41 and transporting the hydrogen-filled fluid hydrogen carrier or the fluid hydrogen carrier and fluid nickel hydroxide slurry.

49. An energy transport method for extracting the hydrogen-filled fluid hydrogen carrier or the fluid hydrogen carrier and the fluid nickel hydroxide slurry from the hydrogen filling and power generation system according to any one of claims 42 to 47 and transporting the hydrogen-filled fluid hydrogen carrier or the fluid hydrogen carrier and fluid nickel hydroxide slurry.
